# EUROPEAN PATENT APPLICATION

(11) **EP 4 238 718 A1**
(43) Date of publication of application: **06.09.2023**
(21) Application number: 21886402.3
(22) Date of filing: 29.10.2021
(51) Int. Cl.: B25J 13/00

(54) **SOLDERING DEVICE, SOLDERING SYSTEM, AND PROCESSING DEVICE**

(30) Priority: 29.10.2020 WO PCT/JP2020/040610
(71) Applicant: NIKON CORPORATION, Minato-ku Tokyo 108-6290 (JP)
(72) Inventor: HOSOMI, Koji, Tokyo 108-6290 (JP); SATO, Shinji, Tokyo 108-6290 (JP); MIYAKAWA, Tomoki, Tokyo 108-6290 (JP); HASEGAWA, Satoshi, Tokyo 108-6290 (JP); MIMURA, Kohei, Tokyo 108-6290 (JP); HIRATA, Junya, Tokyo 108-6290 (JP); SHIMIZU, Hayate, Tokyo 108-6290 (JP)
(74) Representative: Hoffmann Eitle
(86) International application number: PCT/JP2021/040110
(87) International publication number: WO 2022/092285

(57) **Abstract**

A soldering apparatus that applies a processing light for melting a solder disposed on a circuit board, includes: a light irradiation apparatus that includes a Galvano mirror and that applies the processing light through the Galvano mirror; a detection apparatus that detects a light from the circuit board and that generates at least one of image data and shape data; a robot arm that is provided with the light irradiation apparatus and the detection apparatus and that includes a driver that moves the light irradiation apparatus and the detection apparatus; and a control apparatus that controls a direction of the Galvano mirror such that the processing light from the light irradiation apparatus that is displaced with the detection apparatus is applied to a same position, on the basis of at least one of the data that are changed in accordance with a displacement of the detection apparatus.

## Description

### Technical Field

The present invention relates to a soldering apparatus and a soldering system that perform soldering by applying a processing light, and a processing apparatus that processes a target object by applying the processing light.

### Background Art

A proposed apparatus of this type projects a laser light toward a part to be soldered, from a laser head attached to a robot arm (see Patent Literature 1). Patent Literature 2 is exemplified as another related technique/technology. A technical subject of this type of apparatus includes appropriate soldering to a substrate of a three-dimensional shape (i.e., a 3D substrate).

### Citation List

### Patent Literature

Patent Literature 1: US2001/0054637A1
Patent Literature 2: US2015/0158176A1

### Summary

According to a first aspect, there is provided a soldering apparatus that applies a processing light for melting a solder disposed on a circuit board, the soldering apparatus including: a light irradiation apparatus that includes a Galvano mirror and that applies the processing light through the Galvano mirror; a detection apparatus that detects a light from the circuit board and that generates at least one of image data and shape data; a robot arm that is provided with the light irradiation apparatus and the detection apparatus and that includes a driver that moves the light irradiation apparatus and the detection apparatus; and a control apparatus that controls a direction of the Galvano mirror such that the processing light from the light irradiation apparatus that is displaced with the detection apparatus is applied to a same position, on the basis of the at least one of the data that are changed in accordance with a displacement of the detection apparatus.

According to a second aspect, there is provided a processing apparatus that applies a processing light to a target object, the processing apparatus including: a light irradiation apparatus that includes a scanning unit and that irradiates the processing light through the scanning unit; a detection apparatus that detects a light from the target object; a moving apparatus that is provided with the light irradiation apparatus and the detection apparatus, and that includes a driver that moves the light irradiation apparatus and the detection apparatus; and a control apparatus that controls the scanning unit on the basis of a detection result of a detection apparatus.

According to a third aspect, there is provided a soldering system that solders an element on a circuit board, the soldering system including: a first moving apparatus that is provided with a solder discharge apparatus that discharges a solder, and that includes a driver that moves the solder discharge apparatus; a second moving apparatus that is provided with a holding apparatus that is configured to hold the element, and that includes a driver that moves the holding apparatus; a third moving apparatus that is provided with a light irradiation apparatus that applies a processing light for melting the solder and a detection apparatus that detects a light from the circuit board, and that includes a driver that moves the light irradiation apparatus and the detection apparatus; and a control apparatus (i) that controls the solder discharge apparatus such that the solder is disposed in a predetermined part of the circuit board, (ii) that controls the holding apparatus such that the element is disposed on the circuit board through the disposed solder, and (iii) that controls the driver of the third moving apparatus such that the light irradiation apparatus is brought close to the circuit board, on the basis of a detection result of the detection apparatus, and controls the light irradiation apparatus to melt the disposed solder.

According to a fourth aspect, there is provided a soldering system that solders an element on a circuit board, the soldering system including: a moving apparatus that is provided with a solder discharge apparatus that discharges solder, a holding apparatus that is configured to hold an element, a light irradiation apparatus that applies a processing light for melting the solder, and a detection apparatus that detects a light from the circuit board, and that includes a driver that moves the solder discharge apparatus, the holding apparatus, the light irradiation apparatus, and the detection apparatus; and a control apparatus (i) that controls the driver such that the solder discharge apparatus, the holding apparatus, the light irradiation apparatus, and the detection apparatus are brought close to the circuit board, (ii) that controls the solder discharge apparatus such that the solder is disposed in a predetermined part of the circuit board, (iii) that controls the holding apparatus such that the element is disposed on the circuit board through the disposed solder, and (iv) that controls the light irradiation apparatus to melt the disposed solder.

According to a fifth aspect, there is provided a processing apparatus that applies a processing light to a target object, the processing apparatus including: a light irradiation apparatus that applies the processing light; a detection apparatus that detects a light from the target object; a moving apparatus that is provided with the light irradiation apparatus and the detection apparatus, and that includes a driver that moves the light irradiation apparatus and the detection apparatus; and a control apparatus that controls the driver on the basis of a detection result of the detection apparatus.

### Brief Description of Drawings

[FIG. 1]FIG. 1 is a diagram schematically illustrating an overall configuration of a soldering system according to a first example embodiment.
[FIG. 2]FIG. 2A and FIG. 2B are system configuration diagrams illustrating a configuration of a robot that constitutes a part of the soldering system according to the first example embodiment.
[FIG. 3]FIG. 3A and FIG. 3B are system configuration diagrams illustrating a configuration of a robot that constitutes another part of the soldering system according to the first example embodiment.
[FIG. 4]FIG. 4A and FIG. 4B are system configuration diagrams illustrating a configuration of a robot that constitutes another part of the soldering system according to the first example embodiment.
[FIG. 5]FIG. 5 is a diagram schematically illustrating a configuration of a detection apparatus according to the first example embodiment.
[FIG. 6]FIG. 6 is a diagram schematically illustrating a configuration of another detection apparatus according to the first example embodiment.
[FIG. 7]FIG. 7A to FIG. 7C are diagrams illustrating an example of a structure light projected by a projector of another detection apparatus according to the first example embodiment;
[FIG. 8]FIG. 8 is a diagram illustrating a part of an optical path of a light irradiation apparatus according to the first example embodiment.
[FIG. 9]FIG. 9 is a diagram schematically illustrating a configuration of a matching processor of a control apparatus according to the first example embodiment.
[FIG. 10] FIG. 10A and FIG. 10B are diagrams for explaining a concept of a matching process according to the first example embodiment.
[FIG. 11] FIG. 11 is a diagram illustrating an example of a timing chart of the matching process according to the first example embodiment.
[FIG. 12] FIG. 12 is a diagram schematically illustrating a configuration of a tracking unit of the control apparatus according to the first example embodiment.
[FIG. 13] FIG. 13 is a diagram illustrating an example of a timing chart of a tracking process according to the first example embodiment.
[FIG. 14] FIG. 14 is a flowchart illustrating an operation of the soldering system according to the first example embodiment.
[FIG. 15] FIG. 15A and FIG. 15B are diagrams illustrating an example of a method of applying a processing light.
[FIG. 16] FIG. 16 is a diagram schematically illustrating an air blower and smoke absorber.
[FIG. 17] FIG. 17A and FIG. 17B are system configuration diagrams illustrating a configuration of a soldering system according to a second example embodiment.
[FIG. 18] FIG. 18 is a flowchart illustrating an operation of the soldering system according to the second example embodiment.
[FIG. 19] FIG. 19 is a diagram illustrating a part of an optical path of a light irradiation apparatus according to a modified example.
[FIG. 20] FIG. 20 is a diagram schematically illustrating a configuration of a tracking unit according to the modified example.
[FIG. 21] FIG. 21 is a diagram schematically illustrating an overall configuration of a laser welding system according to a third example embodiment.
[FIG. 22] FIG. 22 is a system configuration diagram illustrating a configuration of a robot that constitutes a part of the laser welding system according to the third example embodiment.
[FIG. 23] FIG. 23 is a system configuration diagram illustrating a configuration of a robot that constitutes another part of the laser welding system according to the third example embodiment.
[FIG. 24] FIG. 24 is a flowchart illustrating an operation of the laser welding system according to the third example embodiment.
[FIG. 25] FIG. 25 is a flowchart illustrating an operation in an application example of the robot according to the first example embodiment.

### Description of Example Embodiments

Hereinafter, example embodiments will be described with reference to the drawings.

### <First Example Embodiment>

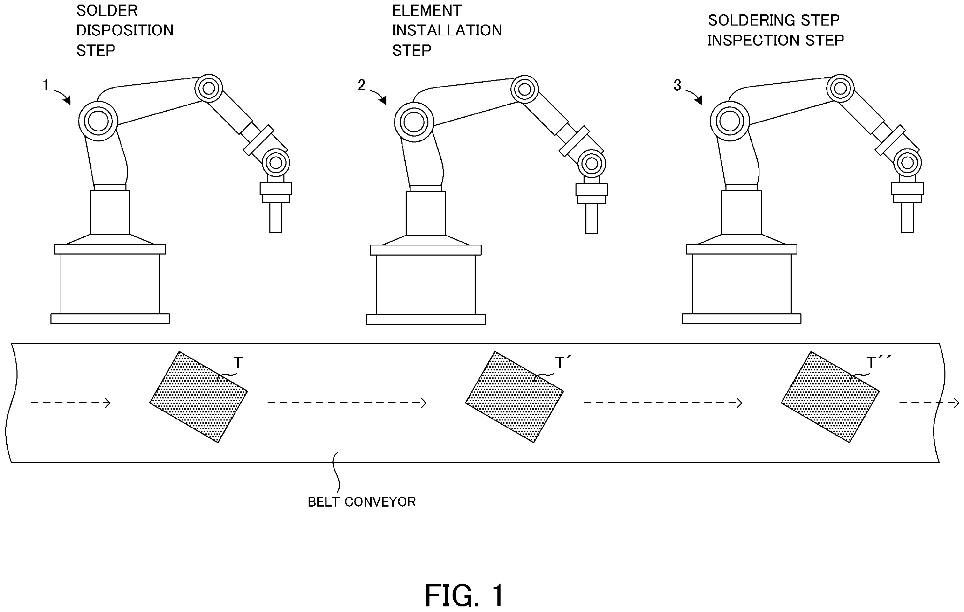

A first example embodiment will be described with reference to FIG. 1 to FIG. 14. This example embodiment includes a soldering system including a robot that performs soldering.

### (Overview)

An outline of the soldering system according to the first example embodiment will be described with reference to FIG. 1 to FIG. 4. In FIG. 1, the soldering system is a soldering system that the solders an element on a circuit board T. The soldering system includes a robot 1, a robot 2 and a robot 3.

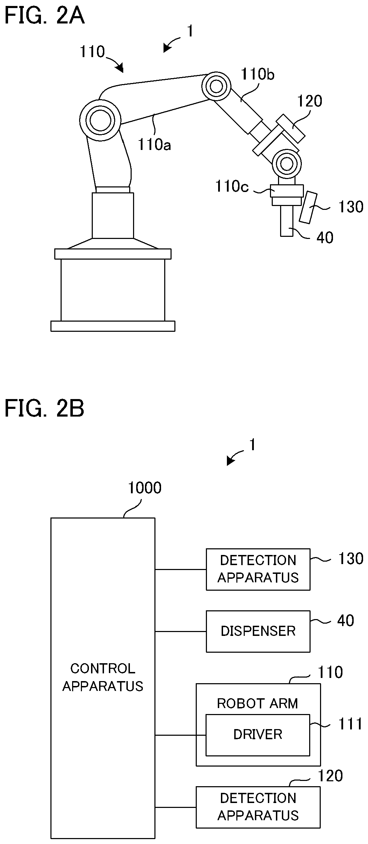

The robot 1, which may be referred to as a processing apparatus or a solder coating apparatus, includes a robot arm 110, which may be referred to as a first moving unit. The robot arm 110 is provided with a dispenser 40 that discharges a solder (see FIG. 2A and FIG. 2B), which may be referred to as a solder ejection apparatus. The robot arm 110 includes a driver 111 (see FIG. 2B) that moves the dispenser 40.

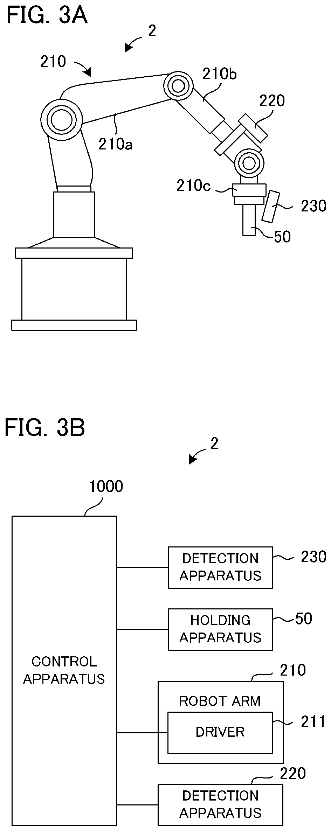

The robot 2, which may be referred to as a processing apparatus or an element installation apparatus, includes a robot arm 210, which may be referred to as a second moving unit. The robot arm 120 is provided with a holding apparatus 50 that is configured to hold an element (see FIG. 3A and FIG. 3B), which may be referred to as a gripping or retention apparatus. The robot arm 210 includes a driver 211 (see FIG. 3B) that moves the holding apparatus 50.

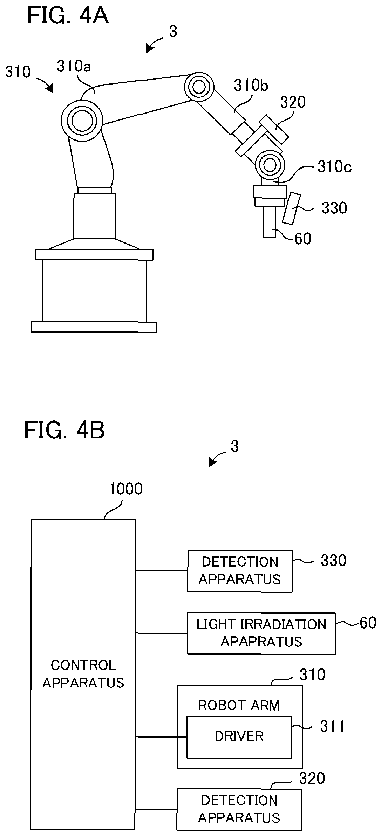

The robot 3, which may be referred to as a processing apparatus or a soldering apparatus, includes a robot arm 310, which may be referred to as a third moving unit. The robot arm 310 is provided with: a light irradiation apparatus 60 (see FIG. 4A and FIG. 4B) that applies a processing light to melt the solder; and detection apparatuses 320 and 330 (see FIG. 4A and FIG. 4B) that detect a light from the circuit board T. The robot arm 310 includes a driver 311 (see FIG. 4B) that moves the light irradiation apparatus 60 and the detection apparatuses 320 and 330.

The "circuit board" may be a circuit board of a three-dimensional shape (i.e., a 3D circuit board) including a substrate and a circuit film on which a circuit is formed. That is, the circuit board may be a circuit board manufactured by an IMPC (registered trademark) (In-Mold Printed Circuit) manufacturing method. Furthermore, the circuit board is not limited to the circuit board manufactured by the IMPC manufacturing method, but may be a circuit board of a three-dimensional shape that includes a substrate and a circuit film, and that is manufactured by another manufacturing method, for example. Furthermore, the circuit board is not limited to the circuit board including a substrate and a circuit film, but may be a circuit board of another three-dimensional shape. Furthermore, the circuit board is not limited to the circuit board of a three-dimensional shape (3D circuit board), but may be a circuit board of a planar shape including a substrate and a circuit film on which a circuit is formed. Furthermore, the circuit board may not be the circuit board of a three-dimensional shape (3D circuit board), but may be a circuit board on which a circuit is formed on a substrate itself. Furthermore, the circuit board may be a circuit board for surface mounting, or may be a circuit board for insertion mounting.

The circuit board T may include a marker (e.g., a cross mark and a two-dimensional code, such as an AR (Augmented Reality) marker), a solder pad (land), and the like that are available for a control of a position and an attitude of a detection apparatus described later and at least one end effector of the robots 1, 2 and 3 (i.e. the dispenser 40, the holding apparatus 50, or the light irradiation apparatus 60), for example. Here, the marker, the solder pad and the like are detectable by the detection apparatus described later (e.g., is recognizable in an image), for a control of the position and the attitude of the detection apparatus described later and at least one end effector of the robots 1, 2, and 3.

The "element" is an element to be soldered to the circuit board T by the soldering system, and includes, for example, an electronic element or an electrical element as an example. Furthermore, the element may be an element for surface mounting, or may be an element for insertion mounting (i.e., a lead element). Such an "element" may be referred to as a "component." An example of the element may be a LED (Light Emitting Diode (e.g., a well-known element such as a chip LED), a resistance (e.g., a well-known element such as a chip resistor), a capacitor (e.g., a well-known element such as a chip capacitor), a transistor (e.g., a well-known element such as a chip transistor), a connector, and the like.

Although the term "robot arm" is used, not only the robot arm (i.e., a vertical articulated robot), but also various existing aspects are applicable, such as, for example, a scalar robot (i.e., a horizontal articulated robot), a parallel link robot, and an orthogonal robot. Furthermore, as long as it is possible to move the light irradiation apparatus 60 or the like, an existing moving mechanism may be applied, instead of the robot arm 310 or the like. The robot arms 110, 210, and 310 may be industrial robots or collaborative robots.

The soldering system includes a control apparatus 1000 (see FIG. 2B, FIG. 3B, and FIG. 4B) (i) that controls the dispenser 40 that is the end effector of the robot 1 such that the solder is disposed in a predetermined part of the circuit board T, (ii) that controls the holding apparatus 50 that is the end effector of the robot 2 such that the element is disposed on the circuit board T through the disposed solder, and (iii) that controls the driver 311 of the robot arm 310 such that the light irradiation apparatus 60 that is the end effector of the robot 3 is brought closer to the circuit board T on the basis of a detection result of at least one of the detection apparatuses 320 and 330, and controls the light irradiation apparatus 60 so as to melt the disposed solder.

In FIG. 1, the control apparatus 1000 firstly controls the dispenser 40 of the robot 1 such that the solder is disposed (in other words, such that the solder is applied) in the predetermined part of the circuit board T conveyed by a belt conveyor (solder disposition step). The control apparatus 1000 then controls the holding apparatus 50 of the robot 2 such that the element is disposed through the disposed solder on a circuit board T' with the solder disposed (element installation step). The control apparatus 1000 then controls the driver 311 of the robot arm 310 such that the light irradiation apparatus 60 is brought close to a circuit board T" with the element installed, on the basis of the detection result of at least one of the detection apparatuses 320 and 330, and controls the light irradiation apparatus 60 so as to melt the disposed solder (soldering step). Then, the control apparatus 1000 may inspect the soldered solder and element from a detection result of the detection apparatus 330, for example (inspection step).

As described above, the three robots 1, 2 and 3 cooperate and share work, which improves efficiency of the soldering of the element to the circuit board T. It is thus possible to improve a throughput of the soldering of the element.

In FIG. 1, the circuit board with the solder disposed is a "circuit board T' ", and the circuit board with the element installed is a "circuit board T" ", by which the two circuit boards are differentiated. In the following, however, all is referred to as a "circuit board T" in order to avoid complication of description.

The solder may be, for example, a cream solder (i.e., a solder paste), a wire solder, a bar solder, or the like. That is, the dispenser 40 may dispose a cream solder, a wire solder, a bar solder or the like, on the circuit board T, for example.

As for the light irradiation apparatus 60, the expression "so as to melt the disposed solder" includes melting the solder by applying the processing light to the predetermined part of the circuit board T. For example, the predetermined part includes the solder disposed on the solder pad of the circuit board T. In this case, the processing light from the light irradiation apparatus 60 is directly applied to the solder to melt the solder. Furthermore, the predetermined part includes a part of the solder pad provided on the circuit board T (e.g., a part of the solder pad where the solder is not disposed), or a part of the element disposed on the circuit board T (e.g., an electrode of the element). In this case, by applying the processing light to a part other than the solder disposed on the circuit board T, the solder is melted indirectly by heat conduction from the part to the solder. The circuit board T may be a planar substrate, or may be a 3D circuit board of a three-dimensional shape as described above. When the circuit board T is a 3D circuit board The predetermined part may be set on an inclined surface on the circuit board T. In this case, the dispenser 40 of the robot 1 may dispose the solder on at least a part of the predetermined part of the inclined surface (e.g., the solder pad). Then, the light irradiation apparatus 60 of the robot 3 may apply the processing light to a predetermined part (e.g., a part of the solder pad where the solder is not disposed) so as to melt the solder disposed in a predetermined part of the inclined surface that is the predetermined part.

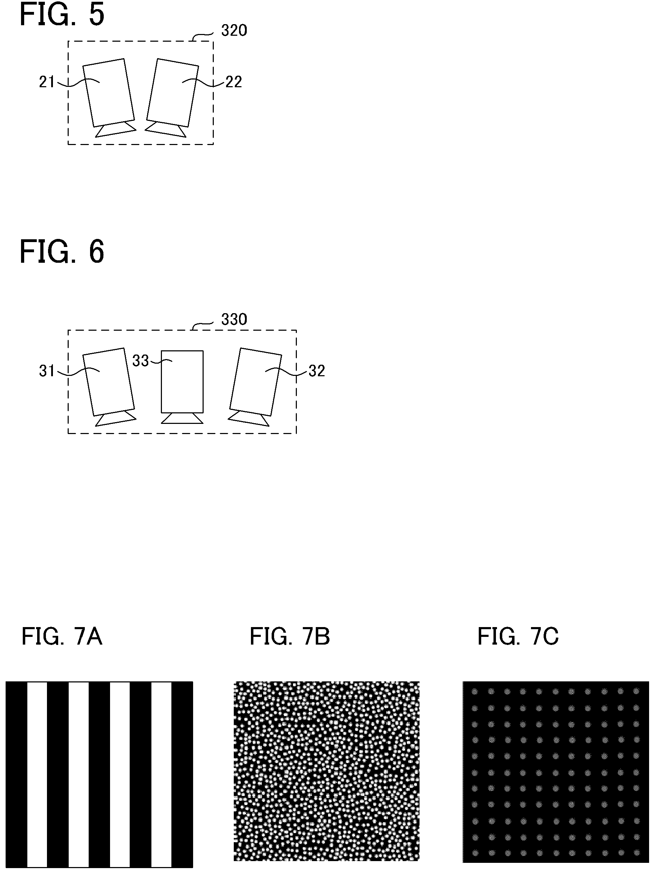

Each of the robots 1, 2, and 3 will be described with reference to FIG. 5 to FIG. 8 in addition to FIG. 1 to FIG. 4B. Here, mainly, the robot 3 will be described, and a description common to that of the robot 3 is omitted as appropriate for the robots 1 and 2.

### (Robot 3)

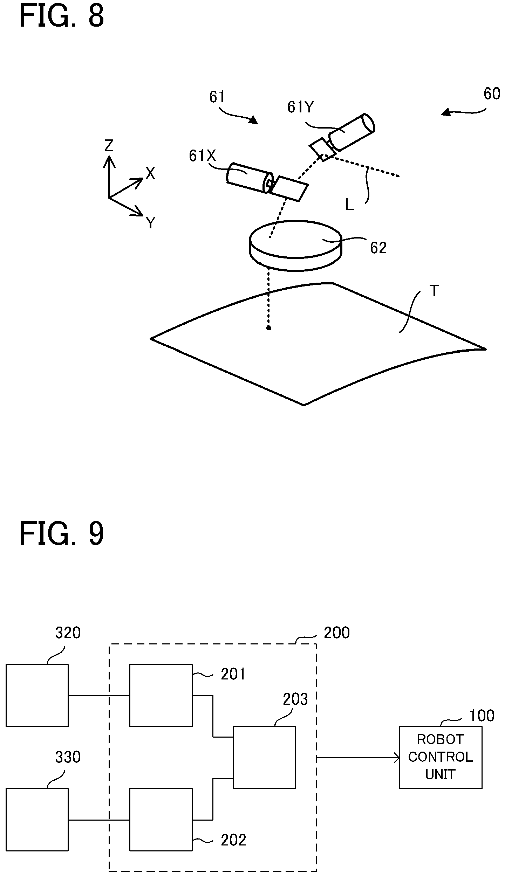

The robot 3 is a robot that applies the processing light for melting the solder disposed on the circuit board T, as described above. The robot 3 includes (i) the light irradiation apparatus 60 that includes a Galvano mirror 61 (see FIG. 8) and applies the processing light through the Galvano mirror 61, (ii) the detection apparatuses 320 and 330 that detect the light from the circuit board T and generate at least one of image data and shape data, and (iii) the robot arm 310 on which the light irradiation apparatus 60 and the detection apparatuses 320 and 330 are provided, and that includes the driver 311 that moves the light irradiation apparatus 60 and the detection apparatuses 320 and 330.

The robot arm 310 includes arm parts 310a and 310b and a wrist part 310c, as illustrated in FIG. 4A. The driver 311 may include, for example, a motor that allows a circular motion of the entire robot arm 310, a motor that allows a back and forth motion of the entire robot arm 310, a motor that allows an up and down motion of each of the arm parts 310a and 310b, a motor that allows a circular motion of the arm part 310b and the wrist part 310c, a motor that allows a rotational motion of the wrist part 310c, and a motor that allows a bending motion of the wrist part 310c (all of which are not illustrated). The robot arm 310 may have a prismatic joint in addition to a rotational joint.

The driver 311 allows the circular motion or the back and forth motion of the entire robot arm 310, and allows the up and down motion of at least one of the arm parts 310a and 310b, thereby to move the wrist part 310c to a position in the vicinity of the circuitry board T, for example. The driver 311 further allows the circular motion of the arm part 310b and the wrist part 310c, and allows the rotational motion or the bending motion of the wrist part 310c, thereby to move the light irradiation apparatus 60 or to change the attitude of the light irradiation apparatus 60 such that the processing light for melting the solder disposed on the circuit board T can be applied to at least a part of the predetermined part (e.g., the solder disposed on the circuit board T, the solder pad provided on the circuit board T, the element disposed on the circuit board T, etc.), for example.

That is, the driver 311 operates the robot arm 310 as described above, by which the detection apparatuses 320 and 330 and the light irradiation apparatus 60 are moved toward the circuit board T, for example.

It is assumed that the robot arm 310 and the detection apparatus 320 (to be exact, cameras 21 and 22 of the detection apparatus 320) are calibrated by an existing method. For example, an object whose shape is precisely known (e.g., a checkerboard, etc.) is disposed at an accurate position in a three-dimensional coordinate system (so-called world coordinate system) of the robot arm 310, the object is imaged by the detection apparatus 320, and well-known arithmetic processing is performed, thereby to obtain a correlation (i.e., perform calibration) between the coordinate system of the robot arm and a coordinate system (a so-called camera coordinate system) of the detection apparatus 320. Similarly, it is also assumed that the robot arm 310 and the detection apparatus 330 (to be exact, cameras 31 and 32 of the detection apparatus 330) are calibrated by an existing method.

In FIG. 4A, the detection apparatus 320 is disposed on the arm part 310b of the robot arm 310, and the detection apparatus 330 is disposed on the wrist part 3 10c of the robot arm 310; however, the arrangement of the detection apparatuses 320 and 330 is not limited thereto. As an example, both the detection apparatus 320 and the detection apparatus 330 may be disposed on the wrist part 310c, may be disposed on the arm part 310b, or may be disposed at a position that is different from the wrist part 310c and the arm part 310b of the robot arm 310. The robot 3 may include only one of the detection apparatuses 320 and 330, or may include another detection apparatus in addition to the detection apparatuses 320 and 330 (i.e., the robot 3 may include three or more detection apparatuses). The robot 3 may also include at least one detection apparatus other than the detection apparatuses 320 and 330. That is, as long as the light irradiation apparatus 60 can be brought close to the circuit board T or the predetermined part of the circuit board T (e.g., the solder pad provided on the circuit board T, or the element or the solder disposed on the circuit board T, etc.) by the driving of the driver 311 of the robot arm 310 such that the solder disposed on the circuit board T can be melted by the processing light, the detection apparatuses 320 and 330 may have any configuration (e.g., the number and specifications of the cameras in the detection apparatus, the presence or absence of a projector, etc.), and an arrangement position and the number of the detection apparatuses 320 and 330 may be arbitrary.

### Detection Apparatus 320

The detection apparatus 320 will be described with reference to FIG. 5. In FIG. 5, the detection apparatus 320 includes the cameras 21 and 22, which may be referred to as imaging apparatuses. Each of the cameras 21 and 22 includes an optical member such as a lens, and an imaging element such as a CMOS (Complementary Metal-Oxide-Semiconductor) or a CCD (Charge Coupled Device). As an example, in the detection apparatus 320, the cameras 21 and 22 may be configured as stereo cameras spaced apart from each other by a predetermined baseline length.

Each of the cameras 21 and 22 is configured to detect an incident light that enters the camera itself by using the imaging element. The incident light may be, for example, a light reflected by a target object (e.g., at least a part of the circuit board T), a light scattered by the target object, and a light transmitted through the target object, or the like. In other words, each of the cameras 21 and 22 detects the light from the target object that is in its angle of view, and captures an image of the target object. That is, each of the cameras 21 and 22 is configured to detect the incident light that enters the camera itself and to generate the image data (i.e., data indicating a two-dimensional image) as a detection result. In other words, each of the cameras 21 and 22 is configured to output the image data indicating the captured image. In other words, each of the cameras 21 and 22 is configured to detect the target object. Here, the "image data" are data in which each pixel of the imaging element of each of the cameras 21 and 22 is associated (in other words, linked) with a pixel value such as a brightness value of each pixel, for example.

The detection apparatus 320 is configured to image the target object (e.g., at least a part of the circuit board T) by using the cameras 21 and 22 at the same time and to generate and output the shape data (i.e., shape data indicating a three-dimensional shape of the target object) as the detection result, on the basis of two image data outputted respectively from the cameras 21 and 22. The detection apparatus 320 is configured to output the generated shape data, as the shape data used for a matching process or a tracking process described later, for example. Here, as an example, the shape data are three-dimensional point cloud data (hereinafter also simply referred to as point cloud data). In this case, the detection apparatus 320 generates the point cloud data by calculating a distance to the target object from the cameras 21 and 22 by a well-known method, on the basis of a difference between the position of the target object on the image captured by the camera 21 and the position of the target object on the image captured by the camera 22 (i.e., a parallax), a focal length of the cameras 21 and 22, and a distance between the camera 21 and the camera 22 (i.e., a base line length). For example, the point cloud data are data in which a point corresponding to each pixel of the cameras 21 and 22 is associated with a three-dimensional information (X coordinate, Y coordinate, and Z coordinate). The shape data are not limited to the point cloud data, but may be the existing data indicating the three-dimensional information, such as depth image data in which a distance to the target object is associated with the brightness value of each pixel.

The detection apparatus 320 may image the target object by using the camera 21 and the camera 22, but may not generate the shape data on the basis of the two image data outputted respectively from the cameras 21 and 22. In this case, for example, the detection apparatus 320 may be configured to output the two image data outputted respectively from the cameras 21 and 22, as the detection result. The two image data outputted respectively from the cameras 21 and 22 may be inputted to the control apparatus 1000. The control apparatus 1000 may generate the shape data on the basis of the inputted two image data in a well-known method, as described above, even in this case. The control apparatus 1000 may perform a matching process and a tracking process described later, on the basis of the generated shape data.

The detection apparatus 320 is configured to output the image data generated by at least one of the cameras 21 and 22, as the image data used for a matching process or a tracking process described later, for example.

The detection apparatus 320 is configured to detect at least a part of the circuit board T or the like from a wide range, in order to approach the circuit board T, when the light irradiation apparatus 60 is relatively far from the circuit board T as the target object, for example. In other words, it is configured to image at least a part of the circuit board T and its periphery, and to generate at least one of the image data and the shape data of a wide range. Therefore, a camera with a wider field of view than that of each of the cameras 31 and 32 of the detection apparatus 330 described later is used for the cameras 21 and 22. For example, a camera with a larger angle of view (in other words, with a shorter focal length) than that of each of the cameras 31 and 32 described later is used for the cameras 21 and 22. That is, for example, the cameras 21 and 22 uses a lens with a larger angle of view (in other words, with a shorter focal length) than that of a lens of each of the cameras 31 and 32 described later.

The detection apparatus 320 may detect at least a part of the circuit board T from a wide range, not only when the light irradiation apparatus 60 is relatively far from the circuit board T as the target object, for example, but also when the light irradiation apparatus 60 is relatively close to the circuit board T as the target object, for example.

The detection apparatus 320 generates at least one of the image data and the shape data of at least a part of the circuit board T as the target object, for example. Here, at least a part of the circuit board T (i.e., the target object) is the marker (e.g., a cross mark and a two-dimensional code, such as an AR marker) formed on the circuit board T and at least a part of the circuit board T itself, and the solder pad (land) formed on the circuit board T, for example. Furthermore, the detection apparatus 320 may generate at least one of the image data and the shape data of the element provided on the circuit board T and the marker (e.g., a cross mark and a two-dimensional code, such as an AR marker) disposed on the circuit board T, for example. Furthermore, the detection apparatus 320 may generate at least one of the image data and the shape data of the marker (e.g., a cross mark and a two-dimensional code, such as an AR marker) disposed in the vicinity of the circuit board T, for example.

The detection apparatus 320 may include a single camera, instead of the cameras 21 and 22. In this case, the single camera generates the image data of the target object. Furthermore, the detection apparatus 320 may include an additional camera in addition to the cameras 21 and 22. In this case, for example, the shape data may be generated by the cameras 21 and 22 (stereo cameras), and the image data may be generated by another camera. The detection apparatus 320 may also include a projector in addition to the cameras 21 and 22, as in the detection apparatus 330 described later. In this case, the detection apparatus 320 may be configured to generate and output at least one of the image data and the shape data of the target object.

In this case, as in the detection apparatus 330 described later, the detection apparatus 320 may image the target object on which a structure light is projected from a projector, by using the cameras 21 and 22 (stereo cameras), but may not generate the shape data on the basis of the two image data outputted respectively from the cameras 21 and 22. In this case, for example, the detection apparatus 320 may be configured to output the two image data (two image data of the target object on which the structure light is projected) outputted respectively from the cameras 21 and 22 (stereo cameras), as the detection result. The two image data outputted respectively from the cameras 21 and 22 may be inputted to the control apparatus 1000. The control apparatus 1000 may generate the shape data on the basis of the inputted two image data in a well-known method even in this case. The control apparatus 1000 may perform a matching process and a tracking process described later, on the basis of the generated shape data.

Furthermore, the detection apparatus 320 may include a single camera and a projector, instead of the cameras 21 and 22. In this case, the detection apparatus 320 may be configured to generate and output at least one of the image data and the shape data of the target object.

In the aspect in which the detection apparatus 320 includes the single camera and the projector, as in the detection apparatus 330 described later, the detection apparatus 320 may image the target object on which the structure light is projected from the projector, by using the single camera, but may not generate the shape data on the basis of the image data outputted from the single camera. In this case, for example, the detection apparatus 320 may be configured to output the image data outputted from the single camera, as the detection result. The image data outputted from the single camera may be inputted to the control apparatus 1000. The control apparatus 1000 may generate the shape data on the basis of the inputted image data from the single camera in a well-known method even in this case. The control apparatus 1000 may perform a matching process and a tracking process described later, on the basis of the generated shape data.

As for a specific method of generating the shape data in the aspect where the detection apparatus 320 includes the projector, please see a description of the detection apparatus 330 described later.

### Detection Apparatus 330

The detection apparatus 330 will be described with reference to FIG. 6. In FIG. 6, the detection apparatus 330 includes the cameras 31 and 32, which may be referred to as imaging apparatuses, and a projector 33, which may be referred to as a projection apparatus. For example, each of the cameras 31 and 32 includes an optical member such as a lens, and an imaging element such as a CMOC and a CCD. As an example, the cameras 31 and 32 may be configured as stereo cameras spaced apart from each other by a predetermined baseline length. Each of the cameras 31 and 32 is configured to detect an incident light that enters the camera itself. The incident light may be, for example, a light reflected by the target object (e.g., at least a part of the circuit board T), a light scattered by the target object, and a light transmitted through the target object, or the like. In other words, each of the cameras 31 and 32 detects the light from the target object that is in its angle of view, and captures an image of the target object. In other words, each of the cameras 31 and 32 detects the light from the target object that is in its angle of view, and captures an image of the target object. That is, each of the cameras 31 and 32 is configured to detect the incident light that enters the camera itself and to generate the image data (i.e., data indicating a two-dimensional image) as a detection result. In other words, each of the cameras 31 and 32 is configured to generate the image data indicating the captured image. The detection apparatus 330 is configured to output the image data generated by at least one of the cameras 31 and 32, as the image data used for a matching process or a tracking process described later, for example.

The projector 33 is configured to project the structure light with a predetermined intensity distribution (in other words, a predetermined pattern) as illustrated in FIG. 7A to FIG. 7C, for example, in operation of the detection apparatus 330. Various existing aspects may be applied to the projector 33, such as, for example, a projector of a DLP (Digital Light Processing) type.

Here, the detection apparatus 330 is configured to project the structure light from the projector 33 to the target object, and to generate the image data of the target object on which the structure light is projected, by using the cameras 31 and 32. Since the structure light of the predetermined pattern is projected by the projector 33, the detection apparatus 330 is allowed to generate high-precision shape data with a small influence of disturbance, even when the surface of the target object is dark or the surface of the target object has few feature points.

The detection apparatus 330 is configured to image the target object on which the structure light is projected from the projector 33 by using the cameras 31 and 32 at the same time and to generate and output the shape data (i.e., shape data indicating a three-dimensional shape of the target object), on the basis of two image data outputted respectively. Here, as an example, the detection apparatus 330 generates three-dimensional point cloud data (hereinafter also simply referred to as point cloud data) by calculating a distance to the target object from the cameras 31 and 32 by a well-known method, on the basis of a difference between the position of a pattern by the structure light on the image captured by the camera 31 and the position of a pattern by the structure light on the image captured by the camera 32 (i.e., a parallax), a focal length of the cameras 31 and 32, and a distance between the camera 31 and the camera 32 (i.e., a base line length). The detection apparatus 330 is configured to be output the generated shape data, as the shape data used for a matching process or a tracking process described later, for example.

The detection apparatus 330 may image the target object on which the structure light is projected from the projector 33, by using the cameras 31 and 32 (stereo cameras), but may not generate the shape data on the basis of two image data outputted respectively from the cameras 31 and 32. In this case, for example, the detection apparatus 330 may be configured to output the two image data (two image data of the target object on which the structure light is projected) outputted respectively from the cameras 31 and 32, as the detection result. The two image data outputted respectively from the cameras 31 and 32 may be inputted to the control apparatus 1000. The control apparatus 1000 may generate the shape data on the basis of the inputted two image data, in the same manner as described above. The control apparatus 1000 may perform a matching process or a tracking process described later, on the basis of the generated shape data.

The shape data are not limited to the point cloud data, but may be the existing data indicating the three-dimensional information, such as depth image data in which a distance to the target object is associated with the brightness value of each pixel. Various existing aspects may be applied to a method of generating the shape data, such as, for example, a phase shift method, a random dot method, and a TOF (Time-of-Flight) method.

In addition, the detection apparatus 330 is configured to generate the image data by at least one of the cameras 31 and 32 while the structure light is not projected from the projector 33.

The detection apparatus 330 is configured to detect at least a part of the circuit board T with high accuracy, in order to further approach a part of the circuit board T (e.g., the solder disposed on the circuit board T, the solder pad provided on the circuit board T, the element disposed on the circuit board T, etc.), when the light irradiation apparatus 60 is relatively close to the circuit board T as the target object. In other words, it is configured to image at least a part of the circuit board T and its periphery, and to generate at least one of the image data and the shape data with high accuracy. For this reason, the cameras 31 and 32 have a higher resolution than that of the cameras 21 and 22 provided in the detection apparatus 320. In this case, for example, the cameras 31 and 32 have a narrower angle of view than that of the cameras 21 and 22 (in other words, a longer focal length). For example, the lens of each of the cameras 31 and 32 has a narrower angle of view (in other words, a longer focal length) than the that of the lens of each of the cameras 21 and 22. The lens of each of the cameras 31 and 32 may have a higher imaging magnification than that of the lens of each of the cameras 21 and 22.

Due to the higher resolution of the target object imaged by the cameras 31 and 32, the accuracy of the shape data and the resolution the image data generated by the detection apparatus 230 including the cameras 31 and 32 are higher than the accuracy of the shape data and the resolution of the image data generated by the detection apparatus 320 including the cameras 21 and 22. Therefore, the detection apparatus 330 is allowed to detect at least a part of the circuit board T with higher accuracy than the detection apparatus 320 does. Therefore, the use on the control apparatus 1000 of the image data and the shape data generated by the detection apparatus 330 increases the estimation accuracy of the position and the attitude in a matching process in a matching processor 200 described later and the estimation accuracy of the position and the attitude in a tracking process in a tracking unit 300 described later.

The detection apparatus 330 is also allowed to detect at least a part of the circuit board T or the like with high accuracy, not only when the light irradiation apparatus 60 is relatively close to the circuit board T as the target object, but also when the light irradiation apparatus 60 is relatively far from the circuit board T as the target object, for example. That is, even when the light irradiation apparatus 60 is relatively far from the circuit board T as the target object, the detection apparatus 330 may detect at least a part of the circuit board T or the like.

In addition, the field of view of the cameras 31 and 32 of the detection apparatus 330 is consequently narrower than the field of view of the cameras 21 and 22 of the detection apparatus 320. The detection apparatus 320 may be referred to as a first imager, and the detection apparatus 330 may be referred to as a second imager.

The detection apparatus 330 generates at least one of the image data and the shape data of at least a part of the circuit board T as the target object, for example. Here, at least a part of the circuit board T (i.e., the target object) is the solder pad (land) and the marker (e.g., a cross mark and a two-dimensional code, such as an AR marker) formed on the circuit board T and at least a part of the circuit board T itself, for example. Furthermore, the detection apparatus 330 may generate at least one of the image data and the shape data of the marker (e.g., a cross mark and a two-dimensional code, such as an AR marker) disposed on the circuit board T and the element or the solder provided on the circuit board T, for example. Furthermore, the detection apparatus 330 may generate at least one of the image data and the shape data of the marker (e.g., a cross mark and a two-dimensional code, such as an AR marker) disposed in the vicinity of the circuit board T, for example.

The detection apparatus 330 may include a single camera, instead of the cameras 31 and 32. In this case, the single camera generates the image data of the target object. The detection apparatus 330 may also include an additional camera in addition to the cameras 31 and 32. In this case, for example, the shape data may be generated by the cameras 31 and 32 (stereo cameras) and the projector 33, and the image data may be generated by another camera. The detection apparatus 330 may also include a single camera and the projector 33, instead of cameras 31 and 32. In this case, the detection apparatus 330 may be configured to generate and output at least one of the image data and the shape data of the target object.

In the aspect in which the detection apparatus 330 includes the single camera and the projector, the detection apparatus 330 may image the target object on which the structure light is projected from the projector, by using the single camera, but may not generate the shape data on the basis of the image data outputted from the single camera. In this case, for example, the detection apparatus 330 may be configured to output the image data outputted from the single camera, as the detection result. The image data outputted from the single camera may be inputted to the control apparatus 1000. The control apparatus 1000 may generate the shape data on the basis of the inputted image data from the single camera in a well-known method. The control apparatus 1000 may perform a matching process and a tracking process described later, on the basis of the generated shape data.

The detection apparatus 330 may not include the projector 33. In this case, as in the detection apparatus 320, the detection apparatus 330 may be configured to generate and output at least one of the image data and the shape data.

The detection apparatus 330 may image the target object by using the camera 31 and the camera 32 (stereo camera), but may not generate the shape data on the basis of the two image data outputted respectively from the cameras 31 and 32. In this case, for example, the detection apparatus 330 may be configured to output the two image data outputted respectively from the cameras 31 and 32, as the detection result. The two image data outputted respectively from the cameras 31 and 32 may be inputted to the control apparatus 1000. The control apparatus 1000 may generate the shape data on the basis of the inputted two image data in a well-known manner even in this case, as described above. The control apparatus 1000 may perform a matching process or a tracking process described later, on the basis of the generated shape data.

The field of view of the cameras 21 and 22 of the detection apparatus 320 may be the same as the field of view of the cameras 31 and 32 of the detection apparatus 330. Alternatively, the field of view of the cameras 31 and 32 of the detection apparatus 330 may be larger than the field of view of the cameras 21 and 22 of the detection apparatus 320. The resolution of the cameras 21 and 22 of the detection apparatus 320 may be the same as the resolution of the cameras 31 and 32 of the detection apparatus 330. Alternatively, the resolution of the cameras 31 and 32 of the detection apparatus 330 may be lower than the resolution of the cameras 21 and 22 of the detection apparatus 320.

### Light Irradiation Apparatus 60

The light irradiation apparatus 60 will be described with reference to FIG. 8. In FIG. 8, the light irradiation apparatus 60 includes a Galvano mirror 61 that is also referred to as a scanning unit and an fθ lens 62. Therefore, the light irradiation apparatus 60 is configured to move an irradiation position of the processing light L to the target object (e.g., at least a part of the circuit board T) along a desired direction (in other words, is configured to scan the irradiation position of the processing light L to the target object). The Galvano mirror 61 is configured to change a direction of the mirror itself, and changes an exit direction of the processing light L entered from a light source (not illustrated) by changing the direction of the mirror itself. The processing light L emitted from the Galvano mirror 61 enters the fθ lens 62. The fθ lens 62 condenses the processing light L entered from the Galvano mirror 61. That is, the light irradiation apparatus 60 is configured to change the irradiation position of the processing light L applied on the circuit board T as the target object through the fθ lens 62, in accordance with the direction of the mirror itself of the Galvano mirror 61 (in other words, a change in the exit direction of the processing light L from the Galvano mirror 61).

For example, the Galvano mirror 61 includes a first scanning mirror 61Y and a second scanning mirror 61X, each including a mirror that is swingable or rotatable around a predetermined axis, and swinging or rotating axes of the first scanning mirror 61Y and the second scanning mirror 61X are arranged so as to intersect (e.g., perpendicular to) each other. In this case, the processing light L that enters the first scanning mirror 61Y is reflected by the first scanning mirror 61Y and enters the second scanning mirror 61X, and is reflected by the second scanning mirror 61X and enters the fθ lens 62. The fθ lens 62 condenses the processing light L entered from the second scanning mirror 61X. Since the exit direction of the processing light L from the second scanning mirror 61X varies (in other words, an incident position of the processing light L in the fθ lens 62 varies) depending on the direction around the axis of the first scanning mirror 61Y and the direction around the axis of the second scanning mirror 61X, the irradiation position of the processing light to the circuit board T is changed by the directions of the first scanning mirror 61Y and the second scanning mirror 61X.

Furthermore, the light irradiation apparatus 60 is configured to melt the solder by applying the processing light L to the solder disposed on the circuit board T. Furthermore, not only directly applying the processing light L to the solder, but also by applying the processing light to the solder pad that is not provided on the circuit board T (e.g., a part of the solder pad on which the solder is not disposed), it is possible to indirectly melt the solder. Alternatively, it is also possible to indirectly melt the solder by applying the processing light to a part (e.g., an electrode) of the element (component) disposed on the circuit board T, for example.

The Galvano mirror 61 is not limited to the two scanning mirrors (the first scanning mirror 61Y and the second scanning mirror 61X), but may be a single scanning mirror, or may include three or more scanning mirrors. The light irradiation apparatus 60 is not limited to the Galvano mirror 61, but other existing apparatuses for changing the exit direction of the light may be applied, such as a polygonal mirror, a DMD (Digital Micromirror Device), and a spatial light modulator. The light irradiation apparatus 60 is not limited to including the fθ lens 62, but may not include the fθ lens 62, or may include one or more other lenses instead of the fθ lens 62.

The light source (not illustrated) of the processing light L to enter the Galvano mirror 61 of the light irradiation apparatus 60 may be disposed outside the soldering system, may be included in the soldering system, may be included in the robot 3, or may be included in the light irradiation apparatus 60. The light source (not illustrated) is configured to change the intensity of the processing light L applied to the target object. A method of changing the intensity of the processing light L applied to the target object is not limited to a method of changing the intensity of the light emitted from the light source, but a method of using an existing light intensity changing member such as an ND filter may be applied. The light from the light source (not illustrated) enters the Galvano mirror 61 of the light irradiation apparatus 60 in an existing method. The light irradiation apparatus 60 may include a focus lens. The focus lens includes one or more lenses, and by changing the position along an optical axis direction of at least a part of the lenses, it is possible to change a condensed position of the processing light L in the optical axis direction of the light irradiation apparatus 60 (i.e., a focal position of the light irradiation apparatus 60). In other words, it is possible to change a spot size of the processing light L applied to the target object. For example, the focus lens may be disposed on an optical path of the processing light L before entering the Galvano mirror 61. The light irradiation apparatus 60 may not only include the focus lens with the configuration of changing the spot size of the processing light L on the target object, but also may apply the focus lens with the pre-existing configuration.

The control apparatus 1000 may control the direction of the Galvano mirror 61 such that the processing light L from the light irradiation apparatus 60 that is displaced with a displacement of at least one of the detection apparatuses 320 and 330 is applied to the same position, on the basis of at least one of the image data and the shape data that are changed in accordance with the displacement of at least one of the detection apparatuses 320 and 330, for the robot 3 configured as described above.

The control apparatus 1000 may control the driver 311 to stop the driving of the driver 311. The control apparatus 1000 may control the direction of the Galvano mirror 61 such that the processing light L from the light irradiation apparatus 60 that is displaced with at least one of the detection apparatuses 320 and 330 is applied to the same position, on the basis of at least one of the image data and the shape data that are changed in accordance with the displacement of at least one of the detection apparatuses 320 and 330 after the driving of the driver 311 is stopped.

The control apparatus 1000 may control the direction of the Galvano mirror 61 such that the processing light L from the light irradiation apparatus 60 that is moved by the robot arm 310 is applied to the same position, on the basis of at least one of the image data and the shape data that are changed in accordance with the displacement of at least one of the detection apparatuses 320 and 330 that are moved by the robot arm 310, while controlling the driver 311 such that the light irradiation apparatus 60 and the detection apparatuses 320 and 330 are moved.

The control apparatus 1000 may control the direction of the Galvano mirror 61 such that the irradiation position of the processing light L from the light irradiation apparatus 60 that is displaced with the displacement of at least one of the detection apparatuses 320 and 330 is maintained at a first position and is then maintained at a second position that is different from the first position, on the basis of at least one of the image data and the shape data that are changed in accordance with the displacement of at least one of the detection apparatuses 320 and 330.

The control apparatus 1000 may control the driver 311 to stop the driving of the driver 311. The control apparatus 1000 may control the direction of the Galvano mirror 61 such that the irradiation position of the processing light L from the light irradiation apparatus 60 that is displaced with the displacement of at least one of the detection apparatuses 320 and 330 is maintained at the first position and is then maintained at the second position that is different from the first position, on the basis of at least one of the image data and the shape data that are changed in accordance with the displacement of at least one of the detection apparatuses 320 and 330 after the driving of the driver 311 is stopped.

The control apparatus 1000 may control the direction of the Galvano mirror 61 such that the irradiation position of the processing light L from the light irradiation apparatus 60 that is moved by the robot arm 310 is maintained at the first position and is then maintained at the second position that is different from the first position, on the basis of at least one of the image data and the shape data that are changed in accordance with the displacement of at least one of the detection apparatuses 320 and 330 that are moved by the robot arm 310, while controlling the driver 311 to move the light irradiation apparatus 60 and the detection apparatuses 320 and 330.

The control apparatus 1000 may control the driver 311 of the robot arm 310 such that the light irradiation apparatus 60 and the detection apparatuses 320 and 330 are brought close to the circuit board T on the basis of at least one of the image data and the shape data. When the light irradiation apparatus 60 and the detection apparatuses 320 and 330 are close to the circuit board T by a predetermined distance, the control apparatus 1000 may control the direction of the Galvano mirror 61 such that the processing light L from the light irradiation apparatus 60 that is displaced with at least one of the detection apparatuses 320 and 330 is applied to the same position, on the basis of the at least one of the data that are changed in accordance with the displacement of at least one of the detection apparatuses 320 and 330.

The light irradiation apparatus 60 may not include the scanning unit such as the Galvano mirror 61.

Here, the control apparatus 1000 may be an apparatus that is from the robot 3, which may be referred to as a soldering apparatus, or may constitute a part of the robot 3 (in other words, the robot 3 may include the control apparatus 1000). In the latter case, the control apparatus 1000 may be provided independently by the robot 3, or may be shared by the robot 3 and at least one of the robots 1 and 2 (i.e., the control apparatus 1000 that constitutes a part of the robot 3 may control at least one of the robots 1 and 2 in addition to the robot 3). When the robot 3 independently includes the control apparatus 1000, each of the robots 1 and 2 may independently include a control apparatus 1000 that is different from the control apparatus 1000 provided by the robot 3.

### (Robot 1)

The robot 1 is, as described above, a robot that disposes the solder in the predetermined part of the circuit board T (e.g., a part of the solder pad and the circuit, etc.). In FIG. 2A and FIG. 2B, the robot 1 includes (i) the dispenser 40 that discharges the solder, (ii) detection apparatuses 120 and 220 that detect the light from the circuit board T and generate at least one of the image data and the shape data, and (iii) the robot arm 110 on which the dispenser 40 and the detection apparatuses 120 and 130 are provided, and that includes the driver 111 that moves the dispenser 40 and the detection apparatuses 120 and 130.

The robot arm 110, as in the robot arm 310, includes arm parts 110a and 110b and a wrist part 110c. The detection apparatuses 120 and 130 may be configured in the same manner as in the detection apparatuses 320 and 330, respectively. The dispenser 40 may change a discharge amount of a cream solder, and the control apparatus 1000 may control an amount of the solder discharged from the dispenser 40.

In FIG. 2A, the detection apparatus 120 is disposed on the arm part 110b of the robot arm 110, and the detection apparatus 130 is disposed on the wrist part 110c of the robot arm 110; however, the arrangement of the detection apparatuses 120 and 130 is not limited thereto. The robot 1 may include only one of the detection apparatuses 120 and 130, or may include another detection apparatus in addition to the detection apparatuses 120 and 130 (i.e., the robot 1 may include three or more detection apparatuses). That is, as long as the dispenser 40 can be brought close to the circuit board T or the predetermined part of the circuit board T (e.g., a part of the solder pad and the circuit, etc.) by the driving of the driver 111 of the robot arm 110 such that the solder can be disposed in the predetermined part of the circuit board T (e.g., a part of the solder pad and the circuit, etc.), the detection apparatuses 120 and 130 may have any configuration (e.g., the number and specifications of the cameras in the detection apparatus, the presence or absence of a projector, etc.), and the arrangement position and the number of the detection apparatuses 120 and 130 may be arbitrary.

The detection apparatuses 120 and 130 may have the same configuration as that of respective one of the detection apparatuses 320 and 330. The detection apparatuses 120 and 130, however, may not have the same configuration as that of respective one of the detection apparatuses 320 and 330. The configuration and specifications of the detection apparatus 120 are changeable as appropriate within a range that is not contrary to the gist or ideas that can be read from the description of the detection apparatus 320. Similarly, the configuration and specifications of the detection apparatus 130 are changeable as appropriate within a range that is not contrary to the gist or ideas that can be read from the description of the detection apparatus 330 or the like.

For the robot 1 configured as described above, the control apparatus 1000 may control the driver 111 such that the solder discharged from the dispenser 40 that is displaced with a displacement of at least one of the detection apparatuses 120 and 130 is disposed in the predetermined part of the circuit board T, on the basis of at least one of the image data and the shape data that are changed in accordance with the displacement of at least one of the detection apparatuses 120 and 130.

The control apparatus 1000 may control the driver 111 to stop the driving of the driver 111. The control apparatus 1000 may control the driver 111 such that the solder discharged from the dispenser 40 that is displaced with at least one of the detection apparatuses 120 and 130 is disposed in the predetermined part of the circuit board T, on the basis of at least one of the image data and the shape data that are changed in accordance with the displacement of at least one of the detection apparatuses 120 and 130 after the driving of the driver 111 is stopped.

The control apparatus 1000 may control the driver 111 such that the solder discharged from the dispenser 40 that is displaced with the displacement of at least one of the detection apparatuses 120 and 130 is disposed at the first position of the circuit board T and is then disposed at the second position that is different from the first position, on the basis of at least one of the image data and the shape data that are changed in accordance with the displacement of at least one of the detection apparatuses 120 and 130.

The control apparatus 1000 may control the driver 111 to stop the driving of the driver 111. The control apparatus 1000 may control the driver 111 such that the solder discharged from the dispenser 40 that is displaced with the displacement of at least one of the detection apparatuses 120 and 130 is disposed at the first position of the circuit board T and is then disposed at the second position that is different from the first position, on the basis of at least one of the image data and the shape data that are changed in accordance with the displacement of at least one of the detection apparatuses 120 and 130 after the driving of the driver 111 is stopped.

The control apparatus 1000 may control the driving unit 111 of the robot arm 110 such that the dispenser 40 and the detection apparatuses 120 and 130 are brought close to the circuit board T, on the basis of at least one of the image data and the shape data. When the dispenser 40 and the detection apparatuses 120 and 130 are close to the circuit board T by a predetermined distance, the control apparatus 1000 may control the driving unit 111 such that the solder discharged from the dispenser 40 that is displaced with at least one of the detection apparatuses 120 and 130 is disposed in the predetermined part of the circuit board T, on the basis of the at least one of the data that are changed in accordance with the displacement of at least one of the detection apparatuses 120 and 130.

Here, the control apparatus 1000 may be an apparatus that is different from the robot 1, which may be referred to as a solder coating apparatus, or may constitute a part of the robot 1 (in other words, the robot 1 may include the control apparatus 1000).

### (Robot 2)

The robot 2 is, as described above, a robot that disposes the element through the solder disposed on the circuit board T. In FIG. 3A and FIG. 3B, the robot 2 includes (i) the holding apparatus 50 that holds the element, (ii) detection apparatuses 220 and 230 that detect the light from the circuit board T and generate at least one of the image data and the shape data, and (iii) the robot arm 210 on which the holding apparatus 50 and the detection apparatuses 220 and 230 are provided, and that includes the driver 211 that moves the holding apparatus 50 and the detection apparatuses 220 and 230.

The robot arm 210, as in the robot arm 310, includes arm parts 210a and 210b and a wrist part 210c. The detection apparatuses 220 and 230 may be configured in the same manner as the detection apparatuses 220 and 230, respectively. Furthermore, as long as it is possible to hold the element, an existing apparatus is applicable to the holding apparatus 50, such as, for example, a tweezers hand or a vacuum apparatus.

A force of holding (a force of gripping) the element in the holding apparatus 50 is changeable, and the control apparatus 1000 is configured to control the force of holding the element in the holding apparatus 50. For example, when the holding apparatus 50 is a tweezers hand, the holding apparatus 50 is capable of controlling a force of holding or pinching the element with tips of the tweezers. The robot 2 may include a housing part (not illustrated) that houses or contains the element and a supply apparatus (not illustrated) that supplies a desired element to the holding apparatus 50 from the housing part. As the housing part, for example, a reel, a tray, a stick, and the like are exemplified. Incidentally, a detailed description of the housing part and the supply apparatus will be omitted because various existing aspects are applicable. The control apparatus 1000 may control the supply apparatus to supply a desired element to be disposed in a part of the circuit board T (the predetermined part) to the holding apparatus 50 from the housing part, and may control the holding apparatus 50 such that the element is held by the holding apparatus 50. In this case, in the robot 2, it is possible to improve efficiency of a work of disposing the element on the circuit board T, because it is possible to omit a work of bringing the holding apparatus 50 close to a not-illustrated element supply apparatus (a so-called parts feeder) on which the element to be disposed in a part of the circuit board T (the predetermined part) is separately provided and of holding a desired element in the holding apparatus 50.

In FIG. 3A, the detection apparatus 220 is disposed on the arm part 210b of the robot arm 210, and the detection apparatus 230 is disposed on the wrist part 210c of the robot arm 210; however, the arrangement of the detection apparatuses 220 and 230 is not limited thereto. The robot 2 may include only one of the detection apparatuses 220 and 230, or may include another detection apparatus in addition to the detection apparatuses 220 and 230 (i.e., the robot 2 may include three or more detection apparatuses). That is, as long as the holding apparatus 50 can be brought close to the predetermined part of the circuit board (e.g., the solder disposed on the circuit and the solder pad, etc.) by the driving of the driver 211 of the robot arm 210 such that the element can be disposed in the predetermined part of the circuit board T (e.g., the solder disposed on the circuit and the solder pad, etc.), the detection apparatuses 220 and 230 may have any configuration (e.g., the number and specifications of the cameras in the detection apparatus, the presence or absence of a projector, etc.), and the arrangement position and the number of the detection apparatuses 220 and 230 may be arbitrary.

The detection apparatuses 220 and 230 may have the same configuration as that of respective one of the detection apparatuses 320 and 330. The detection apparatuses 220 and 230, however, may not have the same configuration as that of respective one of the detection apparatuses 320 and 330. The configuration and specifications of the detection apparatus 220 are changeable as appropriate within a range that is not contrary to the gist or ideas that can be read from the description of the detection apparatus 320. Similarly, the configuration and specifications of the detection apparatus 230 are changeable as appropriate within a range that is not contrary to the gist or ideas that can be read from the description of the detection apparatus 330 or the like.

For the robot 2 configured as described above, the control apparatus 1000 may control the driver 211 such that the element gripped (held) by the holding apparatus 50 that is displaced with a displacement of at least one of the detection apparatuses 220 and 230 is disposed in the predetermined part of the circuit board T, on the basis of at least one of the image data and the shape data that are changed in accordance with the displacement of at least one of the detection apparatuses 220 and 230,.

The control apparatus 1000 may control the driver 211 to stop the driving of the driver 211. The control apparatus 1000 may control the driver 211 such that the element gripped by the holding apparatus 50 that is displaced with at least one of the detection apparatuses 220 and 230 is disposed in the predetermined part of the circuit board T, on the basis of at least one of the image data and the shape data that are changed in accordance with the displacement of at least one of the detection apparatuses 220 and 230 after the driving of the driver 211 is stopped.

The control apparatus 1000 may control the driver 211 such that one element gripped by the holding apparatus 50 that is displaced with the displacement of at least one of the detection apparatuses 220 and 230 is disposed at the first position of the circuit board T and then another element gripped by the holding apparatus 50 is disposed at the second position that is different from the first position, on the basis of at least one of the image data and the shape data that are changed in accordance with the displacement of at least one of the detection apparatuses 220 and 230.

The control apparatus 1000 may control the driver 211 to stop the driving of the driver 211. The control apparatus 1000 may control the driver 211 such that one element gripped by the holding apparatus 50 that is displaced with the displacement of at least one of the detection apparatuses 220 and 230 is disposed at the first position of the circuit board T and then another element gripped by the holding apparatus 50 is disposed at the second position that is different from the first position, on the basis of at least one of the image data and the shape data that are changed in accordance with the displacement of at least one of the detection apparatuses 220 and 230 after the driving of the driver 211 is stopped.

The control apparatus 1000 may control the driving unit 211 of the robot arm 210 such that the holding apparatus 50 and the detection apparatuses 220 and 230 are brought close to the circuit board T, on the basis of at least one of the image data and the shape data. When the holding apparatus 50 and the detection apparatuses 220 and 230 are close to the circuit board T by a predetermined distance, the control apparatus 1000 may control the driving unit 211 such that the element gripped by the holding apparatus 50 that is displaced with at least one of the detection apparatuses 220 and 230 is disposed in the predetermined part of the circuit board T, on the basis of at least one of the data that are changed in accordance with the displacement of at least one of the detection apparatuses 220 and 230.

Here, the control apparatus 1000 may be an apparatus that is different from the robot 2, which may be referred to as an element installation apparatus, or may constitute a part of the robot 2 (in other words, the robot 2 may include the control apparatus 1000).

In FIG. 1, the control apparatus 1000 controls the driver 311 (e.g., to allow a circular motion and a back and forth motion of the entire robot arm 310, an up and down motion of each of the arm parts 310a and 310b, a circular motion of the arm part 310b and the wrist part 310c, a rotational motion and a bending motion of the wrist part 310c) such that a positional relationship between the circuit board T conveyed by the belt conveyor and the light irradiation apparatus 60 of the robot 3 is a desired positional relationship, and/or such that the attitude of the light irradiation apparatus 60 is a desired attitude, for example. In other words, the control apparatus 1000 controls the driver 311, thereby to control at least one of the position and the attitude of the light irradiation apparatus 60 such that the processing light L from the light irradiation apparatus 60 is applied to the predetermined part of the circuit board T conveyed by the belt conveyor. At this time, the belt conveyor is temporarily stopped or paused. That is, the belt conveyor is temporarily stopped after conveying the circuit board T into a drivable range of the robot arm 310 of the robot 3, for example. Then, after the processing light L from the light irradiation apparatus 60 is applied to the predetermined part of the circuit board T that is stopped, the belt conveyor restarts to be driven to convey the circuit board T.

Similarly, the control apparatus 1000 controls the driver 111 such that a positional relationship between the circuit board T conveyed by the belt conveyor and the dispenser 40 of the robot 1 is a desired positional relationship, and/or such that the attitude of the dispenser 40 is a desired attitude. In other words, the control apparatus 1000 controls the driver 111, thereby to control at least one of the position and the attitude of the dispenser 40 such that the solder discharged from the dispenser 40 is disposed in the predetermined part of the circuit board T conveyed by the belt conveyor. At this time, the belt conveyor is temporarily stopped or paused. That is, the belt conveyor is temporarily stopped after conveying the circuit board T into a drivable range of the robot arm 110 of the robot 1, for example. Then, after the solder discharged from the dispenser 40 is disposed in the predetermined part of the circuit board T that is stopped, the belt conveyor restarts to be driven to convey the circuit board T.

Similarly, the control apparatus 1000 controls the driver 211 such that a positional relationship between the circuit board T conveyed by the belt conveyor and the holding apparatus 50 of the robot 2 is a desired positional relationship, and/or such that the attitude of the holding apparatus 50 is a desired attitude. In other words, the control apparatus 1000 controls the driver 211, thereby to control at least one of the position and the attitude of the holding apparatus 50 such that the element held by the holding apparatus 50 is disposed in the predetermined part of the circuit board T conveyed by the belt conveyor. At this time, the belt conveyor is temporarily stopped or paused. That is, the belt conveyor is temporarily stopped after conveying the circuit board T to a drivable range of the robot arm 210 of the robot 2, for example. Then, after the element held by the holding apparatus 50 is disposed in the predetermined part of the circuit board T that is stopped, the belt conveyor restarts to be driven to convey the circuit board T.

The belt conveyor may be always driven without being temporarily stopped or paused in front of each robot arm. That is, the control apparatus 1000 may control the driver 311 such that the processing light L from the light irradiation apparatus 60 is applied, may control the driver 111 such that the solder discharged from the dispenser 40 is disposed, or may control the driver 211 such that the element held by the holding apparatus 50 is disposed, in the predetermined part of the circuit board T that is being conveyed (i.e., moved) by the belt conveyor.

A conveyance apparatus of the circuit board T is not limited to the belt conveyor, and as long as it is possible to transfer the circuit board T, various existing aspects are applicable. Furthermore, the circuit board T may not be conveyed by the belt conveyor or the like. For example, the robots 1, 2 and 3 may be arranged to surround a stage on which the circuit board T is placed. In this case, the control apparatus 1000 may controls the driver 311 such that the processing light L from the light irradiation apparatus 60 is applied, may control the driver 111 such that the solder discharged from the dispenser 40 is disposed, or may control the driver 211 such that the element held by the holding apparatus 50 is disposed, in the predetermined part of the circuit board T placed on the stage. At this time, carrying in the circuit board T to the stage and carrying out the circuit board T from the stage may be performed by another robot that is different from the robots 1, 2 and 3.

At least one of the robot arms 110, 210 and 310 may be mounted on an AGV (Automatic Guided Vehicle), for example. In this case, the control apparatus 1000 may control at least one of a driver of the AGV, an end effector of at least one of the robot arms 110, 210, and 310, and the driver of at least one of the robot arms 110, 210, and 310, on the basis of the position and the direction of the target object obtained by a matching process or a tracking process described later.

A process performed on the control apparatus 1000 so as to enable a control of the driver 311 and the like (in other words, the robot arm 310 and the like) will be described with reference to FIG. 9 to FIG. 13. Here, a process using an output of the detection apparatuses 320 and 330 provided in the robot 3 will be described as an example. The control apparatus 1000 may perform the same process by using an output of the detection apparatuses 120 and 130 provided in the robot 1 and an output of the detection apparatuses 220 and 230 provided in the robot 2.

### (Calculation of Position and Attitude of the target object by Matching Process)

With reference to FIG. 9 to FIG. 11, a matching process of the circuit board T as the target object that is performed by the control apparatus 1000 will be described. It is necessary to bring the light irradiation target object 60 close to the target object by using the robot arm 310 of the robot 3 such that the position and the attitude of the light irradiation apparatus 60 of the robot 3 with respect to a part of the target object conveyed by the belt conveyor (e.g., a spot of the circuit board T to be irradiated with the processing light L) are a desired position and a desired attitude. In order to bring the light irradiation apparatus 60 close to the target object by using the robot arm 310, the control apparatus 1000 is configured to perform a matching process of calculating (estimating) the position and the attitude of the target object.

In FIG. 9, the control apparatus 1000 includes a robot control unit 100 and a matching processor 200, as processing circuits physically realized therein or processing blocks logically realized therein. The robot control unit 100 may not be a part of the control apparatus 1000, and may be configured separately from the control apparatus 1000. For example, the robot control unit 100 may be a processing circuit physically realized or a processing block that is different from the control apparatus 1000.

The matching processor 200 determines which of the output of the detection apparatus 320 (e.g., at least one of the image data and the shape data) and the output of the detection apparatus 330 (e.g., at least one of the image data and the shape data) is used to control the driver 311, in a process in which the light irradiation apparatus 60 that is relatively far from the circuit board T is brought close to the circuit board T.

The matching processor 200 includes a first matching unit 201, a second matching unit 202, and a comparison unit 203.

The first matching unit 201 performs a matching between the output of the detection apparatus 320 (e.g., at least one of the image data and the shape data) and CAD (Calculater-Aided Design) data. As a result of the matching, the first matching unit 201 outputs a position/attitude estimation result of the target object that is a result of estimation (calculation) of the position and the attitude, and outputs a matching ratio. The position/attitude estimation result of the target object may be expressed by so-called 6DoF (six degree of freedom). In this case, the position/attitude estimation result is data representing am X-coordinate, a Y-coordinate, a Z-coordinate, a component around an X axis (θX component), a component around a Y axis (θY component), and a component around a Z axis (θZ component), in the coordinate system (so-called world coordinate system) of the robot arm 310 with the X axis, the Y axis, and the Z axis, for example. These data may be represented by a matrix, or each value may be represented as a table, or may be data in another well-known form. The X-coordinate, the Y-coordinate, and the Z-coordinate are estimation results indicating the position of the target object. The component around the X axis, the component around the Y axis, and the component around the Z axis are estimation results indicating the attitude of the target object. The component around the X axis, the component around the Y axis, and the component around the Z axis are referred to as a yaw, a roll, and a pitch. In the first matching unit 201, calculating (estimating) the position and the attitude of a feature area (described later) is included in a concept of calculating (estimating) the position and the attitude of the target object.

The first matching unit 201 calculates (estimates) the position and the attitude of the target object by comparing the feature area of the target object in the image data as the output of the detection apparatus 320 (e.g., a part of the contour of the target object in the image data) with the feature area of the target object in the CAD data of the target object (e.g., CAD data corresponding to a part of the contour of the target object in the image data), as the matching process, for example. At this time, the first matching unit 201 firstly extracts the feature area of the target object in the image data outputted from the detection apparatus 320 and the feature area of the target object in the CAD data of the target object. The first matching unit 201 then calculates the position and the attitude of the target object in the coordinate system (world coordinate system) of the robot arm 310, by correlating the feature area of the target obj ect in the image data with the feature area of the target obj ect in the CAD data, for example, by changing or rotating a size of the feature area of the target object in the CAD data. More specifically, the first matching unit 201 firstly obtains a correlation between the coordinate system (the camera coordinate system) of the detection apparatus 320 and a coordinate system (so-called local coordinate system) of the CAD such that the feature area of the target object in the CAD data matches the feature area of the target object in the image data. Since the position and the attitude of the feature area of the target object in the coordinate system of the CAD (i.e., of the feature area of the target object in the CAD data) are known, the position and the attitude of the feature area of the target object in the coordinate system of the detection apparatus 320 can be known by matching the coordinate system of the CAD and the coordinate system of the detection apparatus 320. Then, the first matching unit 201 calculates the position and the attitude of the target object in the coordinate system of the robot arm 310, on the basis of a correlation obtained in advance by calibration between the coordinate system of the robot arm 310 and the coordinate system of the detection apparatus 320, and the correlation between the coordinate system of the detection apparatus 320 and the coordinate system of the CAD.

The matching process of the image data by the first matching unit 201 may use various existing methods, such as a SIFT (Scale-Invariant Feature Transform) and a SURF (Speed-Upped Robust Feature). The first matching unit 201 may calculate the position and the attitude of a plurality of feature areas in the coordinate system of the robot arm 310 by matching the plurality of feature areas of the target object in the image data and the plurality of feature areas of the target object in the CAD data. In this case, the first matching unit 201 may output the calculated position and attitude of the plurality of feature areas of the target object, or may calculate (estimate) and output the position and the attitude at the center of gravity of the target object on the basis of the position and the attitude of the plurality of feature areas.

The feature area of the target object whose position and attitude are calculated, is not limited to a part of the contour of the target object, but may be any area that can be differentiated from the surroundings on the image, such as a marker provided on the target object or a pattern on a surface of the target object. For example, the feature area of the circuit board T as the target object may be the solder, the solder pad, or the marker (e.g., a cross mark and a two-dimensional code, such as an AR marker) formed on the circuit board T as at least a part of the circuit board T, or may be the marker (e.g., a cross mark and a two-dimensional code, such as an AR marker) disposed on the circuit board T, or may be the element disposed on the circuit board T, or may be the marker disposed in the vicinity of the circuit board T (e.g., a cross mark and a two-dimensional code, such as an AR marker), for example. The data used by the first matching unit 201 to perform the matching process on the feature area in the image data outputted from the detection apparatus 320 are not limited to the CAD data, and other data may be used. For example, the first matching unit 201 may match the feature area of the image data generated by imaging in advance a reference target object (e.g., a reference circuit board) and the feature area in the image data of the circuit board T outputted from the detection apparatus 320. In this case, the reference target object may be a non-defective target object (e.g., non-defective circuit board), for example.

In addition, the matching ratio is a value indicating a degree of the matching between the feature area of the target object in the image data and the feature area of the target object in the CAD data (here, the matching ratio increases as the degree of matching between the two increases).

Furthermore, the first matching unit 201 is also configured to calculate (estimate) the position and the attitude of the target object by comparing point cloud data of the feature area of the target object (e.g., a part of corners of the target object in the point cloud data) in the shape data (e.g., point cloud data) as the output of the detection apparatus 320 with point cloud data of the feature area of the target object in the CAD data of the target object (e.g., point cloud data in the CAD data corresponding to a part of the corners of the target object in the shape data), as the matching process, for example.

At this time, the first matching unit 201 firstly extracts the point cloud data of the feature area of the target object in the shape data (e.g., point cloud data) outputted from the detection apparatus 320, and the point cloud data of the feature area of the target object in the CAD data of the target object The first matching unit 201 then calculates the position and the attitude of the target object in the coordinate system of the robot arm 310, by correlating the point cloud data of the feature area of the target object in the shape data with the point cloud data of the feature area of the target object in the CAD data, for example, by changing coordinates of each point or an interval between points in the point cloud data of the feature area of the target object in the CAD data, or by rotating a point cloud. More specifically, first, the first matching unit 201 obtains the correlation between the coordinate system of the detection apparatus 320 and the coordinate system of the CAD such that the point cloud data of the feature area of the target object in the CAD data match the point cloud data of the feature area of the target object in the shape data. Since the position and the attitude of a point cloud of the feature area of the target object in the coordinate system of the CAD are known, the position and the attitude of a point cloud of the feature area of the target object in the coordinate system of the detection apparatus 320 can be known by matching the coordinate system of the CAD and the coordinate system of the detection apparatus 320. Then, the first matching unit 201 calculates the position and the attitude of the target object in the coordinate system of the robot arm 310, on the basis of the correlation obtained in advance by calibration between the coordinate system of the robot arm 310 and the coordinate system of the detection apparatus 320, and the correlation between the coordinate system of the detection apparatus 320 and the coordinate system of the CAD.

The matching process of the shape data by the first matching unit 201 may use various existing methods, such as a RANSAC (Random Sample Consensus), a SIFT (Scale-Invariant Feature Transform), and an ICP (Iterative Closest Point). The first matching unit 201 may output the calculated position and attitude of the feature area of the target object, as the position and the attitude of the target object. The first matching unit 201 may calculate the position and the attitude of a plurality of feature areas in the coordinate system of the robot arm 310, by matching point cloud data of the plurality of feature areas of the target object in the shape data and point cloud data of the plurality of feature areas of the target object in the CAD data. In this case, the first matching unit 201 may output the calculated position and attitude of the plurality of feature areas of the target object as the position and the attitude of the target object, or may calculate (estimate) and output the position and the attitude of the center of gravity of the target object, as the position and the attitude of the target object, on the basis of the position and the attitude of the plurality of feature areas.

The first matching unit 201 is not limited to the matching process using the point cloud data, and may perform the matching process by using a depth image as the shape data outputted from the detection apparatus 320. The feature area of the target object whose position and attitude are calculated, is not limited to a part of the corners of the target object, but may be any area that can be differentiated in shape from the surroundings, such as the edge/irregularities of the target object. For example, the feature area of the circuit board T as the target object may be the solder, the solder pad, or the marker (e.g., a cross mark and a two-dimensional code, such as an AR marker) formed on the circuit board T as at least a part of the circuit board T, or may be the marker (e.g., a cross mark and a two-dimensional code, such as an AR marker) disposed on the circuit board T, or may be the element disposed on the circuit board T. The data used by the first matching unit 201 to perform the matching process on the feature area in the image data outputted from the detection apparatus 320 are not limited to the CAD data, and other data may be used. For example, the first matching unit 201 may match the point cloud data of the feature area of the shape data (e.g., point cloud data) generated by imaging in advance a reference target object (e.g., a reference circuit board) and the point cloud data of the feature area in the shape data of the circuit board T outputted from the detection apparatus 320. In this case, the reference target object may be a non-defective target object (e.g., non-defective circuit board), for example. The CAD data and the image data and shape data obtained by imaging the reference target object are a reference in the matching process, and thus may be referred to as reference data.

The detection apparatus 320 may not be configured to generate the shape data. In this case, the detection apparatus 320 may output the image data (e.g., two image data generated by imaging the target object by using the camera 21 and the camera 22 as an example), and the first matching unit 201 may generate the shape data on the basis of the image data outputted from the detection apparatus 320 in a well-known manner as described above. The first matching unit 201 may perform the matching process in the same manner as described above on the basis of the generated shape data, and may calculate the position and the attitude of the target object.

In addition, the matching ratio is a value indicating a degree of the matching between the point cloud data of the feature area of the target object in the shape data and the point cloud data of the feature area of the target object in the CAD data (here, the matching ratio increases as the degree of matching between the two increases).

Similarly, the second matching unit 202 performs a matching between the output of the detection apparatus 330 (e.g., at least one of the image data and the shape data) and the CAD data. As a result of the matching, the second matching unit 202 outputs the position/attitude estimation result of the target object and the matching ratio. A description of the matching process of the second matching unit 202 (i.e., the estimation of the position and the attitude of the target object and the calculation of the matching ratio) will be omitted because it is the same as that of the first matching unit 201.

The detection apparatus 330 may not be configured to generate the shape data. In this case, the detection apparatus 330 may output the image data (e.g., two image data generated by imaging the target object on which the structure light is projected from the projector 33, by using the camera 31 and the camera 32), and the second matching unit 202 may generate the shape data on the basis of the image data outputted from the detection apparatus 330 in a well-known manner as described above. The second matching unit 202 may perform the matching process on the basis of the generated shape data in the same manner as described above, and may calculate the position and the attitude of the target obj ect.

That is, each of the first matching units 201 and 202 calculates (estimates) the position and the attitude of the target object and outputs a calculation result as the position/attitude estimation result. Here, for example, in order to bring the light irradiation apparatus 60 of the robot 3 close to the spot of the circuit board T to be irradiated with the processing light L, the target object whose position and attitude are calculated by each of the first matching part 201 and the second matching part 202 may be the spot to be irradiated with the processing light L, and may be, for example, at least a part of the circuit board T (e.g., the solder pad formed on the circuit board T), or may be the element or the solder disposed on the circuit board T. Furthermore, the target object may be a spot whose relative position with respect to the spot to be irradiated with the processing light L is known, and may be, for example, at least a part of the circuit board T (e.g., a cross mark and a two-dimensional code, such as an AR marker, that are the marker formed on the circuit board T), the marker (e.g., a cross mark and a two-dimensional code, such as an AR marker) disposed on the circuit board T, or the marker (e.g., a cross mark and a two-dimensional code, such as an AR marker) disposed in the vicinity of the circuit board T. Furthermore, the target object may be a spot other than the spot of the circuit board T. That is, the target object whose position and attitude are calculated by each of the first matching unit 201 and the second matching unit 202 may be the feature area described above.

It is assumed that the CAD data or the data (the image data or the shape data) of the reference target object used for the matching are stored in advance, for example, in a memory (not illustrated) of the control apparatus 1000. The first matching unit 201 and the second matching unit 202 may calculate (estimate) both the position and the attitude of the target object, or may calculate (estimate) only one of the position and the attitude of the target object. That is, the first matching unit 201 and the second matching unit 202 may calculate (estimate) at least one of the position and the attitude of the target object.

The comparison unit 203 compares the matching ratio outputted from the first matching unit 201 (hereinafter referred to as a "first matching ratio" as appropriate) with the matching ratio outputted from the second matching unit 202 (hereinafter referred to as a "second matching ratio" as appropriate).

When the first matching ratio is greater than the second matching ratio, in other words, when the second matching ratio is less than the first matching ratio (the first matching ratio > the second matching ratio), the comparison unit 203 outputs the position/attitude estimation result outputted from the first matching unit 201. On the other hand, when the second matching ratio is greater than or equal to the first matching ratio, in other words, when the first matching ratio is less than or equal to the second matching ratio (the first matching ratio ≦ the second matching ratio), the comparison unit 203 outputs the position/attitude estimation result outputted from the second matching unit 202.

The robot control unit 100 as a part of the control apparatus 1000 controls, for example, the driving unit 311 of the robot 3, on the basis of the position/attitude estimation result outputted from the matching processor 200.

The comparison unit 203 may compare the matching ratios for all the results of the matching process (i.e., a calculation result of the position and the attitude of the target object) outputted from each of the first matching unit 201 and the second matching unit 202 at intervals of predetermined times. Furthermore, the comparison unit 203 may not compare the matching ratios for all the results of the matching process outputted from each of the first matching unit 201 and the second matching unit 202 at intervals of predetermined times. In this case, the comparison unit 203 compares the matching ratios at a predetermined time point, and outputs, after that predetermined time point, the results of the matching process outputted from the first matching unit 201 or the second matching unit 202 at intervals of predetermined times on the basis of a result of the comparison of the matching ratios performed at the predetermined time point.

The control apparatus 1000 may output at least one of a result of the matching process using the image data and a result of the matching process using the shape data, through the comparison unit 203, from at least one of the first matching unit 201 and the second matching unit 202.

Meanwhile, as described above, each of the detection apparatuses 320 and 330 of the robot 3 is allowed to output at least one of the image data and the shape data. For this reason, each of the first matching unit 201 and the second matching unit 202 may perform at least one of the matching process using the image data (i.e., data indicating a two-dimensional image) (hereinafter referred to as a "2D matching" as appropriate) and the matching process using the shape data (e.g., three-dimensional point cloud data) (hereinafter referred to as a "3D matching" as appropriate). The 2D matching allows the position and the attitude of the target obj ect to be calculated faster than 3D matching. On the other hand, the 3D matching allows the position and the attitude of the target object to be calculated (estimated) with higher accuracy than the 2D matching. Accordingly, each of the first matching unit 201 and the second matching unit 202 may perform the 2D matching or the 3D matching depending on the purpose.

When the 3D matching is performed, if all of the shape data (e.g., all the generated point cloud data) are used, the 3D matching requires a relatively long time. Therefore, each of the first matching unit 201 and the second matching unit 202 may perform the following process to shorten a time required for the 3D matching.

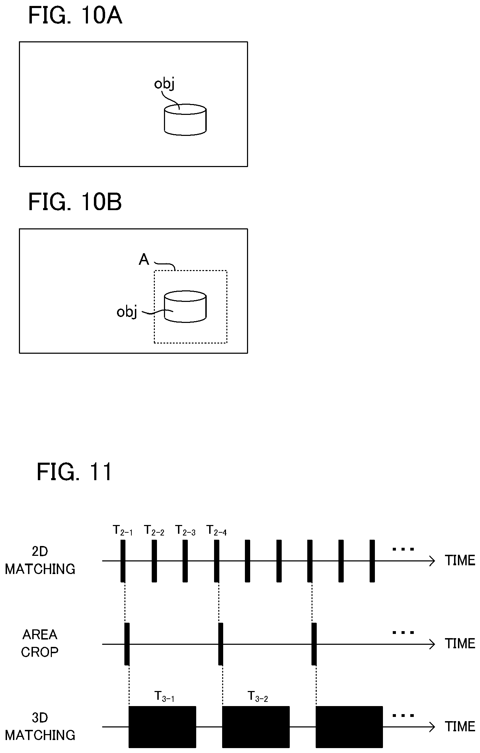

Each of the first matching unit 201 and the second matching unit 202 firstly specifies the position of a target object obj in a two-dimensional image illustrated in FIG. 10A, for example, from a result of the 2D matching. Then, each of the first matching unit 201 and the second matching unit 202 determines a range A (see FIG. 10B) on which the 3D matching is to be performed (in other words, narrows down a range on which the 3D matching is to be performed), on the basis of the specified position of the target object obj. The target object obj whose position is specified by the 2D matching of each of the first matching part 201 and the second matching part 202 may be the feature area of the target object described above. Each of the first matching unit 201 and the second matching unit 202 performs the 3D matching by using the shape data corresponding to the determined range A (e.g., point cloud data included in the range A). Therefore, since each of the first matching unit 201 and the second matching unit 202 performs the 3D matching with the minimum required point cloud data, it is possible to shorten a time required especially for a process of extracting the point cloud data of the feature area than before. Consequently, it is possible to speed up the 3D matching. In addition, it is possible to calculate (estimate) the position and the attitude of the target object (feature area) with high accuracy by the 3D matching.

This process will be described with reference to a timing chart in FIG. 11 as an example. In FIG. 11, a width of a black zone in a time-axis direction represents a length of a time required for each process.

In FIG. 11, a range on which the 3D matching is to be performed is determined by using a result of a (T₂₋₁)-th 2D matching (see "Area crop" in FIG. 11), and then, a (T₃₋₁)-th 3D matching is performed. In parallel with the (T₃₋₁)-th 3D matching, a (T₂₋₂)-th 2D matching and a (T₂₋₃)-th 2D matching are performed. When the (T₃₋₁)-th 3D matching is ended, the range on which the 3D matching is to be performed is determined by using a result of a (T₂₋₄)-th 2D matching, and then, a (T₃₋₂)-th 3D matching is performed. In this case, the comparison unit 203 (see FIG. 9) successively compares the respective results of the 3D matching performed by the first matching unit 201 and the second matching unit 202, and outputs the position/attitude estimation result with a high matching ratio, to the robot control unit 100 at intervals of predetermined times. The robot control unit 100 controls the driver 311 of the robot 3, for example, on the basis of the position/attitude estimation result outputted from the matching processor 200 at intervals of predetermined times.

Each of the first matching unit 201 and the second matching unit 202 may not perform the (T₂₋₂)-th 2D matching and the (T₂₋₃)-th 2D matching that are not used for the 3D matching. The comparison unit 203 may compare the results of the 2D matching and may output the position/attitude estimation result with a high matching ratio, to the robot control unit 100. Each of the first matching unit 201 and the second matching unit 202 may perform the 2D matching and the 3D matching, not only on the basis of the timing chart in FIG. 11, but also at a predetermined timing (e.g., at a timing of starting a tracking process described later), and may determine the range on which the 3D matching is to be performed, by using the result of the 2D matching, as described above, thereby to perform the 3D matching.

The matching process is merely an example, and is not limited thereto. The control apparatus 1000 may calculate (estimate) the position and the attitude of the target object (feature area) only by the 3D matching (i.e., the matching that uses the shape data), or may calculate (estimate) the position and the attitude of the target object (feature area) only by the 2D matching (i.e., the matching that uses the image data). When the 2D matching alone is used to calculate (estimate) the position and the attitude of the target object, the detection apparatuses 320 and 330 may include only a single camera. Furthermore, when one of the detection apparatuses 320 and 330 is provided in the robot 3, the matching processor 200 may include only one of the first matching unit 201 and the second matching unit 202.

The robot control unit 100 may not be a part of the control apparatus 1000, and may be configured separately from the control apparatus 1000. For example, the robot control unit 100 may be a processing circuit physically realized or a processing block that is different from the control apparatus 1000. In this case, the control apparatus 1000 may generate a control signal for controlling the robot 3 (the driver 311 of the robot 3), on the basis of the position and the attitude (the position/attitude estimation result) of the target object outputted from the matching processor 200 (the comparison unit 203). The control apparatus 1000 may output the generated control signal to the robot control unit 100. The robot control unit 100 may generate a drive signal for driving the driver 311 of the robot 3, on the basis of the control signal outputted from the control apparatus 1000. The robot control unit 100 may drive the driver 311 of the robot 3, on the basis of the generated drive signal. The control apparatus 1000 may include an output unit (not illustrated) that outputs the generated control signal to the robot control unit 100. The control signal for controlling the robot 3 (the driver 311 of the robot 3) may be generated by the matching processor 200 (the comparison unit 203) of the control apparatus 1000. The matching processor 200 (the comparison unit 203) may generate the control signal for controlling the robot 3 (the driver 311 of the robot 3), on the basis of the calculated (estimated) position and attitude of the target object. The matching processor 200 (the comparison unit 203) may output the generated control signal to the robot control unit 100.

### (Calculation of Position and Attitude of Target object by Tracking Process)

Due to the conveyance of the circuit board T by the belt conveyor, and/or, for example, due to the movement of the light irradiation apparatus 60 by the robot arm 310 of the robot 3, a relative position between the target object and the light irradiation apparatus 60 is changed with time.

It is necessary to bring the light irradiation target object 60 close to a part of the circuit board T as the target object by using the robot arm 310 of the robot 3 such that the position and the attitude of the light irradiation apparatus 60 of the robot 3 with respect to a part of the circuit board T (e.g., the spot to be irradiated with the processing light L) as the target object conveyed by the belt conveyor are a desired position and a desired attitude. In order to bring the light irradiation apparatus 60 close to the target object by using the robot arm 310, the control apparatus 1000 is configured to perform a tracking process of calculating (estimating) a change in the position and the attitude of the target object. The target object for which a change in the position and attitude is calculated (estimated), may be the spot to be irradiated with the processing light L, as described above, and may be, for example, at least a part of the circuit board T (e.g., the solder pad formed on the circuit board T), or may be the element or the solder disposed on the circuit board T. Furthermore, the target object may be a spot whose relative position with respect to the spot to be irradiated with the processing light L is known, and may be, for example, at least a part of the circuit board T (e.g., a cross mark and a two-dimensional code, such as an AR marker, that are the marker formed on the circuit board T), the marker (e.g., a cross mark and a two-dimensional code, such as an AR marker) disposed on the circuit board T, or the marker (e.g., a cross mark and a two-dimensional code, such as an AR marker) disposed in the vicinity of the circuit board T. Furthermore, the target object may be a spot other than the spot of the circuit board T.

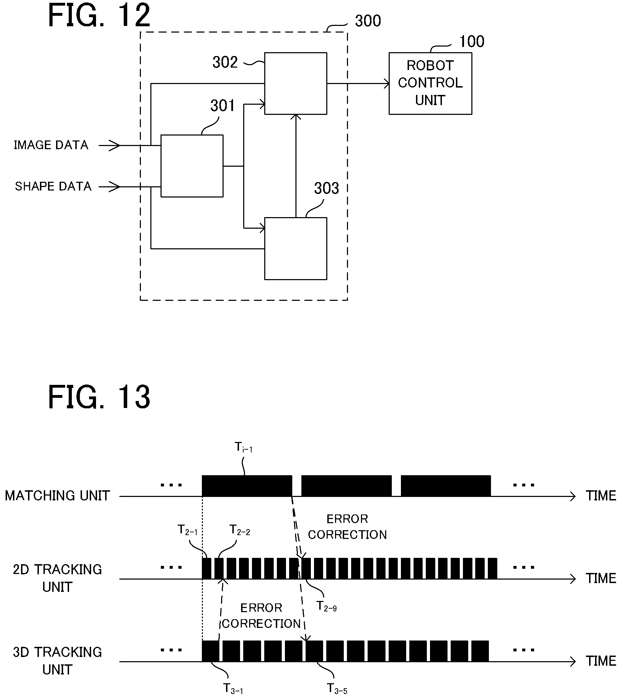

The tracking process performed on the control apparatus 1000 will be described with reference to FIG. 12 and FIG. 13.

In FIG. 12, the control apparatus 1000 includes a tracking unit 300 as a processing circuit physically realized or a processing block logically realized therein. The tracking unit 300 includes a matching unit 301, a 2D tracking unit 302, and a 3D tracking unit 303.

The image data and the shape data are inputted to the tracking unit 300 at intervals of predetermined times. Here, when the position/attitude estimation result outputted from the first matching unit 201 of the matching processor 200 described above is outputted to the robot control unit 100 (i.e., when the first matching ratio > the second matching ratio), the image data and the shape data outputted from the detection apparatus 320 of the robot 3 at intervals of predetermined times are inputted to the tracking unit 300, for example. On the other hand, when the position/attitude estimation result outputted from the second matching unit 202 of the matching processor 200 is outputted to the robot control unit 100 (i.e., when the first matching ratio ≦ the second matching ratio), the image data and the shape data outputted from the detection apparatus 330 of the robot 3 at intervals of predetermined times are inputted to the tracking unit 300, for example.

For example, the matching unit 301 calculates (estimates) the position and the attitude of the target object by performing the matching process, from each of the image data and the shape data inputted at intervals of predetermined times, for example. A description of the matching process of the matching unit 301 will be omitted because it is the same as that of the first matching unit 201 and the second matching unit 202 described above. As described above, the matching unit 301 may narrow down the range on which the 3D matching is to be performed, on the basis of the result of the 2D matching that uses the inputted image data, and may calculate (estimate) the position and the attitude of the target object by performing the 3D matching by using the shape data corresponding to the range (see FIG. 10).

The image data are inputted to the 2D tracking unit 302 at intervals of predetermined times. The 2D tracking unit 302 calculates (estimates) the displacement of the target object at intervals of predetermined times, on the basis of two image data that are first image data and second image data, inputted at intervals of predetermined time, for example. Meanwhile, the first image data that are inputted at least to the 2D tracking unit 302, are also inputted to the matching unit 301. In other words, the image data inputted to the tracking unit 300 are inputted to the 2D tracking unit 302 and the matching unit 301 at substantially the same time point. The matching unit 301 calculates (estimates) the position and the attitude of the target object by performing the matching process, as described above, by using the inputted first image data.

The 2D tracking unit 302 calculates (estimates) the position and the attitude of the target object at a predetermined time point (i.e., a time point at which the second image data are generated), by applying a calculated (estimated) displacement of the target object to a position and an attitude at an initial stage (hereinafter also referred to as an initial position and attitude) of the target object calculated (estimated) by the matching unit 301. The 2D tracking unit 302 then successively calculates (estimates) the displacement of the target object at intervals of predetermined times on the basis of respective image data inputted at intervals of predetermined times, and performs the process of applying the calculated (estimated) displacement of the target object to the calculated (estimated) position and attitude of the target object at each time, thereby to calculate (estimate) the position and the attitude of the target object at each time point (in other words, performs the tracking process). The position and the attitude of the target object calculated (estimated) by the tracking process at each time point are also values expressed by 6DoF, as in the position and attitude calculated by the matching process described above. More specifically, the 2D tracking unit 302 firstly extracts the feature area of the target object in the first image data (e.g., a part of the contour of the target object in the first image data) and the feature area of the target object in the second image data (e.g., a part of the contour of the target object in the second image data) at each inputted timing. The 2D tracking unit 302 then correlates the feature area of the target object in the image data with the feature area of the target object in the second image data, and obtains the displacement in the camera coordinate system of the feature area of the target object in the second image data with respect to the feature area of the target object in the first image data. The 2D tracking unit 302 further calculates the displacement in the coordinate system of the robot arm 310 between the target object at a time point at which the second image data are generated and the target object at a time point at which the first image data are generated, on the basis of a correlation obtained in advance between the coordinate system of the robot arm 310 and the camera coordinate system, and. the obtained displacement in the camera coordinate system of the feature area of the target object in the second image data with respect to the feature area of the target object in the first image data

Then, the 2D tracking unit 302 calculates the position and the attitude of the target object at the predetermined time point (i.e., the time point at which the second image data are generated) by applying the above-described displacement to the position and the attitude of the feature area of the target object calculated by the matching unit 301 (the initial position and attitude). Since a time required to calculate the position and the attitude of the target object by the 2D tracking unit 302 is shorter than a time required to calculate the position and the attitude of the target object by the 3D tracking unit 303 described later, it is possible to track the position and the attitude of the target object at a high speed. Various existing methods may be used to extract the feature area of the target object in the first image data and the second image data, to correlate the feature area of the target object in the first image data with the feature area of the target object in the second image data, and to calculate the displacement of the feature area of the target object in the coordinate system of the robot arm 310.

Various existing methods may be used to extract the feature area of the target object in the first image data and the second image data, to correlate the feature area of the target object in the first image data with the feature area of the target object in the second image data, and to calculate the displacement of the feature area of the target object in the second image data with respect to the feature area of the target object in the first image data in the global coordinate system. The 2D tracking unit 302 may extract a plurality of feature areas of the target object in the first image data and a plurality of feature areas of the target object in the second area data, to correlate each of the feature areas in the first image data with respective one of the feature areas in the second image data, and to calculate (estimate) the displacement of each of the feature areas of the target object in the second image with respect to respective one of the feature areas of the target object in the first image data. The 2D tracking unit 302 may use the position/attitude estimation result of the target object outputted from the comparison unit 203 (i.e., the position/attitude estimation result with a high matching ratio among the results of the 3D matching outputted from the first matching unit 201 and the second matching unit 202 that are referred to in FIG. 9 and FIG. 10) as the initial position and attitude. The feature area of the circuit board T as the target object may be the solder, the solder pad, and the marker(e.g., a cross mark and a two-dimensional code, such as an AR marker) formed on the circuit board T as at least a part of the circuit board T, or may be the marker (e.g., a cross mark and a two-dimensional code, such as an AR marker) disposed on the circuit board T, or may be the element disposed on the circuit board T, or may be the marker (e.g., a cross mark and a two-dimensional code, such as an AR marker) disposed in the vicinity of the circuit board T, for example.

The shape data are inputted to the 3D tracking unit 303 at intervals of predetermined times. The 3D tracking unit 303 calculates (estimates) the displacement of the target object at intervals of predetermined times, on the basis of two shape data that are first shape data and second shape data, inputted at intervals of predetermined times, for example. On the other hand, the first shape data that are inputted at least to the 3D tracking unit 303 are also inputted to the matching unit 301. In other words, the shape data inputted to the tracking unit 300 are inputted to the 3D tracking unit 303 and the matching unit 301 at substantially the same time point. The matching unit 301 calculates (estimates) the position and the attitude of the target object by performing the matching process, as described above, by using the inputted first shape data.

A three-dimensional displacement of the target object for a short time is obtained. The 3D tracking unit 303 estimates a current position and a current attitude of the target object by applying the obtained displacement to the initial position and attitude detected by the matching unit 301.

The 3D tracking unit 303 calculates the position and the attitude of the target object at a predetermined time point (i. e., a time point at which the second shape data are generated) by applying the calculated displacement of the target object to the position and the attitude of the target object calculated by the matching unit 301 at the initial stage (the initial position and attitude). The 3D tracking unit 303 then successively calculates the displacement of the target object at intervals of predetermined times on the basis of respective shape data inputted at intervals of predetermined times, and performs the process of applying the calculated displacement of the target object to the calculated position and attitude of the target object at each time, thereby to calculate the position and the attitude of the target object at each time point (in other words, performs the tracking process). More specifically, for example, when the shape data are point cloud data, the 3D tracking unit 303 firstly extracts the point cloud data of the feature area of the target object in the first shape data (e.g., a part of the corners of the target object in the first shape data) and the feature area of the target object in the second shape data (e.g., a part of the corners of the target object in the second shape data) at each inputted timing. The 3D tracking unit 303 then correlates the point cloud data of the feature area of the target object in the first shape data with the point cloud data of the feature area of the target object in the second shape data, and obtains the displacement in the camera coordinate system of the point cloud data of the feature area of the target object in the second shape data with respect to the point cloud data of the feature area of the target obj ect in the first shape data. The 3D tracking unit 303 further calculates the displacement in the coordinate system of the robot arm 310 between the target object at a time point at which the second shape data are generated and the target object at a time point at which the first shape data are generated, on the basis of the correlation obtained in advance between the coordinate system of the robot arm 310 and the camera coordinate system, and the obtained displacement in the camera coordinate system of the point cloud data of the feature area of the target object in the second shape data with respect to the point cloud data of the feature area of the target object in the first shape data.

Then, the 3D tracking unit 303 calculates the position and the attitude of the target object at the predetermined time point (i.e., the time point at which the second shape data are generated) by applying the above-described displacement to the position and the attitude of the point cloud data of the feature area of the target object calculated by the matching unit 301 (the initial position and attitude). When the shape data are point cloud data, the tracking process by the 3D tracking unit 303 may use various existing methods, such as a RANSAC (Random Sample Consensus), a SIFT (Scale-Invariant Feature Transform), and an ICP (Iterative Closest Point).

For example, when the shape data are depth image data, the 3D tracking unit 303 firstly extracts the feature area of the target object in the first shape data (e.g., a part of the corners of the target object in the first shape data) and the feature area of the target object in the second shape data (e.g., a part of the corners of the target object in the second shape data) at each inputted timing. The 3D tracking unit 303 then correlates the feature area of the target object in the first shape data with the feature area of the target object in the second shape data, and calculates the displacement in the camera coordinate system of the feature area of the target object in the second shape data with respect to the feature area of the target object in the first shape data. The 3D tracking unit 303 further calculates the displacement in the coordinate system of the robot arm 310 between the target object at a time point at which the second shape data are generated and the target object at a time point at which the first shape data are generated, on the basis of the correlation obtained in advance between the coordinate system of the robot arm 310 and the camera coordinate system, and the obtained displacement in the camera coordinate system of the feature area of the target object in the second shape data with respect to the feature area of the target object in the first shape data. Then, the 3D tracking unit 303 calculates the position and the attitude of the target object at the predetermined time point (i.e., the time point at which the second shape data are generated) by applying the above-described displacement to the position and the attitude of the feature area in target object calculated by the matching unit 301 (the initial position and attitude). When the shape data are depth image data, the tracking process by the 3D tracking unit 303 may use various existing methods, such as a DSO (Direct Sparse Odometry). Since the accuracy of the position and the attitude of the target object calculated by the 3D tracking unit 303 is higher than the accuracy of the position and the attitude of the target object calculated by the 2D tracking unit 302, it is possible to track the position and the attitude of the target object with high accuracy.

Each of the position and the attitude of the target object estimated by the 2D tracking unit 302, the position and the attitude of the target object estimated by the 3D tracking unit, and the position and the attitude of the target object detected by the matching unit 301 may be outputted in a form (i.e., in a form of 6DoF) corresponding to the position/attitude estimation results outputted from the first matching unit 201 and the second matching unit 202.

The detection apparatus 320 may not be configured to generate the shape data. When the position/attitude estimation result outputted from the first matching unit 201 of the matching processor 200 is outputted to the robot control unit 100 (i.e., when the first matching ratio > the second matching ratio), the detection apparatus 320 may output the image data (e.g., the two image data generated by imaging the target object by using the camera 21 and the camera 22) at intervals of predetermined times, and the tracking unit 300 (the 3D tracking unit 303) may generate the shape data at intervals of predetermined times on the basis of the image data outputted from the detection apparatus 320 at intervals of predetermined times in a well-known manner as described above. The tracking unit 300 (the 3D tracking unit 303) may perform the tracking process on the basis of the shape data (e.g., the first shape data and the second shape data) generated at intervals of predetermined times, thereby to calculate the displacement of the target object. The tracking unit 300 (the 3D tracking unit 303) may calculate the position and the attitude of the target object at a predetermined time point (a time point at which the image data used for generating the second shape data are generated) by applying the calculated displacement of the target object to the position and the attitude of the target object calculated by the matching unit 301. When the position/attitude estimation result outputted from the second matching unit 202 of the matching processor 200 is outputted to the robot control unit 100 (i.e., when the first matching ratio ≦ the second matching ratio), the detection apparatus 330 may output the image data (e.g., the two image data generated by imaging the target object on which the structure light is projected, by using the camera 31 and the camera 32) at intervals of predetermined times, and the tracking unit 300 (the 3D tracking unit 303 described later) may generate the shape data at intervals of predetermined times on the basis of the image data outputted from the detection apparatus 330 at intervals of predetermined times in a well-known manner as described above. The tracking unit 300 (the 3D tracking unit 303) may perform the tracking process on the basis of the shape data (e.g., the first shape data and the second shape data) generated at intervals of predetermined times, thereby to calculate the displacement of the target object. The tracking unit 300 (the 3D tracking unit 303) may calculate the position and the attitude of the target object at the predetermined time point (the time point at which the image data used for generating the second shape data are generated) by applying the calculated displacement of the target object to the position and the attitude of the target object calculated by the matching unit 301.

Here, the tracking process will be described with reference to a timing chart in FIG. 13 as an example. In FIG. 13, a width of a black zone in a time-axis direction represents a length of a time required for each process.

In FIG. 13, it is assumed that the position and the attitude at the initial stage (the initial position and attitude) of the target object are already detected by the matching unit 301, and that the current position and the current attitude of the target object are estimated by applying the displacement of the target object at the intervals of predetermined times to the position and the attitude at the initial stage. Furthermore, it is assumed that the estimation accuracy of the position and the attitude by the 3D tracking unit 303 and the estimation accuracy of the position and the attitude by the matching unit 301 are higher than the estimation accuracy of the position and the attitude by the 2D tracking unit 301.

For example, the position and the attitude of the target object at a time point t1 (i.e., the position and the attitude estimated by the matching unit 301) are set to x₁. For example, the displacement of the target object from the time point t1 to a time point t2 is set to Δx₁₂, and the displacement of the target object from the time point t2 to a time point t3 is set to Δx₂₃, wherein the displacements are obtained by the 2D tracking unit 302. In this case, the position and the attitude of the target object at the time point time t3 estimated by the 2D tracking unit 302 are expressed as "x₁+Δx₁₂+Δx₂₃".

Since there are estimation errors in each of the displacements "Δx₁₂" and "Δx₂₃", an error related to the position and the attitude of the target object estimated by the 2D tracking unit 302 increases at each time that the displacement detected by the 2D tracking unit 302 is cumulatively added to the position and the attitude "x₁". On the other hand, a time required for the process of the 2D tracking unit 302 is shorter than a time required for the process of the matching unit 301 and the 3D tracking unit 303.

Therefore, it is possible to achieve both speed up and improvement in the estimation accuracy of the tracking process, by correcting the position and the attitude of the target object estimated by the 2D tracking unit 302, by using at least one of the position and attitude of the target object estimated by the matching unit 301 and the position and attitude of the target object estimated by the 3D tracking unit 303.

Specifically, a difference between the position and the attitude of the target object estimated by a (T₃₋₁)-th process of the 3D tracking unit 303 that uses the shape data at the same timing as that of the image data used for a (T₂₋₁)-th process of the 2D tracking unit 302, and the position and the attitude of the target object estimated by the (T₂₋₁)-th process, is regarded as the error of the position and the attitude of the target object estimated by the 2D tracking unit 302. Then, the error may be corrected in a process in progress (e.g., a (T₂₋₂)-th process) of the 2D tracking unit 302 when the (T₃₋₁)-th process is ended, or in a subsequent process to the relevant process.

Similarly, when the matching unit 301 calculates (estimates) the position and the attitude of the target object, in a (Tᵢ₋₁)-th process, from the image data used for the (T₂₋₁)-th process of the 2D tracking unit 302, a difference between the position and the attitude calculated (estimated) by the (Tᵢ₋₁)-th process and the position and the attitude of the target object estimated by the (T₂₋₁)-th process, is regarded as the error of the position and the attitude of the target object estimated by the 2D tracking unit 302. Then, the error may be corrected in a process in progress of the 2D tracking unit 302 when the (Tᵢ₋₁)-th process is ended, or in a subsequent process (e.g., in a (T₂₋₉)-th process) to the relevant process.

In addition, when the matching unit 301 calculates (estimates) the position and the attitude of the target object, in the (Tᵢ₋₁)-th process, from the shape data used for the (T₃₋₁)-th process of the 3D tracking unit 303, a difference between the position and the attitude detected by the (Tᵢ₋₁)-th process and the position and the attitude of the target object estimated by the (T₃₋₁)-th process, is regarded as the error of the position and the attitude of the target object estimated by the 3D tracking unit 303. Then, the error may be corrected in a process in progress of the 3D tracking unit 303 when the (Tᵢ₋₁)-th process is ended, or in a subsequent process to the relevant process.

The position and the attitude of the target object estimated by the 2D tracking unit 302 are outputted to the robot control unit 100. The robot control unit 100 as a part of the control apparatus 1000 controls the driver 311 of the robot 3 on the basis of the estimated position and attitude of the target object, for example.

The robot control unit 100 may not be a part of the control apparatus 1000, and may be configured separately from the control apparatus 1000. For example, the robot control unit 100 may be a processing circuit physically realized or a processing block that is different from the control apparatus 1000. For example, when the position and the attitude of the target object calculated (estimated) by the 2D tracking unit 302 are outputted from the 2D tracking unit 302 in the above process, the control apparatus 1000 may generate a control signal for controlling the robot 3 (the driver 311 of the robot 3), on the basis of the position and the attitude of the target object outputted from the 2D tracking unit 302. The control apparatus 1000 may output the generated control signal to the robot control unit 100. The robot control unit 100 may generate a drive signal for driving the driver 311 of the robot 3, on the basis of the control signal outputted from the control apparatus 1000. The robot control unit 100 may drive the driver 311 of the robot 3 on the basis of the generated drive signal. The control apparatus 1000 may include an output unit (not illustrated) that outputs the generated control signal to the robot control unit 100. The control apparatus 1000 may generate the control signal for controlling the robot 3 (the driver 311 of the robot 3) at intervals of predetermined times, on the basis of the position and the attitude of the target object outputted from the 2D tracking unit 302 at intervals of predetermined times as described above. The control apparatus 1000 may output the generated control signal to the robot control unit 100 at intervals of predetermined times. The robot control unit 100 may generate the drive signal for driving the driver 311 of the robot 3 at intervals of predetermined times, on the basis of the control signal outputted from the control apparatus 1000. The robot control unit 100 may drive the driver 311 of the robot 3 on the basis of the generated drive signal. The control signal for controlling the robot 3 may be generated by the tracking unit 300 (the 2D tracking unit 302) of the control apparatus 1000. The tracking unit 300 may generate the control signal for controlling the robot 3 (the driver 311 of the robot 3), on the basis of the calculated (estimated) position and attitude of the target object. The tracking unit 300 may output the generated control signal to the robot control unit 100.

One of the image data and the shape data may be inputted to the tracking unit 300, whereas the other of the image data and the shape data may not be inputted. The tracking unit 300 may include one of the 2D tracking unit 302 and the 3D tracking unit 303, but may not include the other of the 2D tracking unit 302 and the 3D tracking unit 303. In this case, one of the position and attitude of the target object estimated by the 2D tracking unit 302 and the position and attitude of the target object estimated by the 3D tracking unit 303 may be outputted to the robot control unit 100. Furthermore, the position and the attitude of the target object estimated by the 2D tracking unit 302 may not be corrected by using the position and the attitude of the target object estimated by the 3D tracking unit 303. The position and the attitude of the target object estimated by the 3D tracking unit 303 may be corrected by using the position and the attitude of the target object estimated by the 2D tracking unit 302. In addition, the tracking unit 300 may select data used for the tracking process without depending on the result of the comparison of the matching ratios by the matching processor 200. In this case, the matching unit 301 of the tracking unit 300 compares the matching ratio when the position and the attitude of the target object are calculated (estimated) by using the image data and the shape data outputted from the detection apparatus 320, with the matching ratio when the position and the attitude of the target object are calculated (estimated) by using the image data and the shape data outputted from the detection apparatus 330, and may select (in other words, may switch) the data used for the tracking process on the basis of the comparison result.

Alternatively, the tracking unit 300 may always perform the tracking process by using the image data and the shape data outputted from the detection apparatus 330. Alternatively, the tracking unit 300 may always perform the tracking process by using the image data and the shape data outputted from the detection apparatus 320. That is, the tracking process may be performed by using the image data and the shape data outputted from only one of the detection apparatuses 320 and 330. In this case, the robot 3 may include only one of the detection apparatuses 320 and 330. For example, when the robots 3 includes only one of the detection apparatuses 320 and 330, the tracking process may be performed by using only the image data outputted from the one detection apparatus, or may be performed by using only the shape data outputted from the one detection apparatus.

The robot control unit 100 may not be a part of the control apparatus 1000, and may be configured separately from the control apparatus 1000. For example, the robot control unit 100 may be a processing circuit physically realized or a processing block that is different from the control apparatus 1000. For example, when the position and the attitude of the target object calculated (estimated) by the 3D tracking unit 303 are outputted from the 3D tracking unit 303 in the above process, the control apparatus 1000 may generate a control signal for controlling the robot 3 (the driver 311 of the robot 3), on the basis of the position and the attitude of the target object outputted from the 3D tracking unit 303. The control apparatus 1000 may output the generated control signal to the robot control unit 100. The robot control unit 100 may generate a drive signal for driving the driver 311 of the robot 3, on the basis of the control signal outputted from the control apparatus 1000. The robot control unit 100 may drive the driver 311 of the robot 3 on the basis of the generated drive signal. The control apparatus 1000 may include an output unit (not illustrated) that outputs the generated control signal to the robot control unit 100. The control apparatus 1000 may generate the control signal for controlling the robot 3 (the driver 311 of the robot 3) at intervals of predetermined times, on the basis of the position and the attitude of the target object outputted from the 3D tracking unit 303 at intervals of predetermined times as described above. The control apparatus 1000 may output the generated control signal to the robot control unit 100 at intervals of predetermined times. The robot control unit 100 may generate the drive signal for driving the driver 311 of the robot 3 at intervals of predetermined times, on the basis of the control signal outputted from the control apparatus 1000. The robot control unit 100 may drive the driver 311 of the robot 3 on the basis of the generated drive signal. The control signal for controlling the robot 3 may be generated by the tracking unit 300 (the 3D tracking unit 303) of the control apparatus 1000. The tracking unit 300 may generate the control signal for controlling the robot 3 (the driver 311 of the robot 3) on the basis of the calculated (estimated) position and attitude of the target object. The tracking unit 300 may output the generated control signal to the robot control unit 100.

The tracking process is merely an example, and is not limited thereto. That is, the control apparatus 1000 may perform a well-known tracking process instead of the tracking process described above. Furthermore, the control apparatus 1000 may not perform the tracking process. In this case, the control apparatus 1000 may not include the tracking unit 300, and may include the matching processor 200. The control apparatus 1000 may perform the matching process by using at least one of the image data and the shape data at intervals of predetermined times, and may control the driver 311 of the robot 3 on the basis of the calculated (estimated) position and attitude of the target object.

### (Operation of each robot)

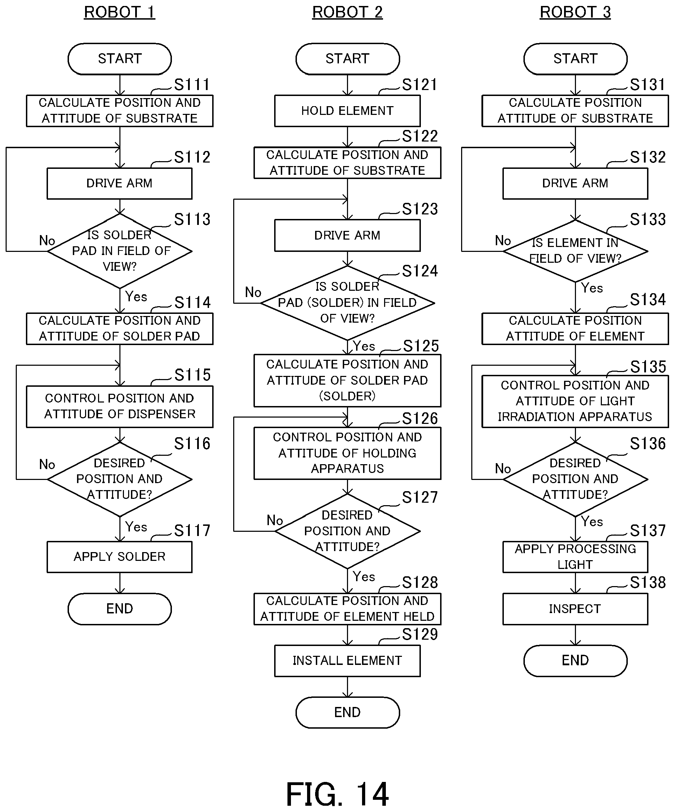

The operation of each of the robots 1, 2 and 3 will be described with reference to a flowchart in FIG. 14. Here, mainly, the robot 3 will be described, and a description common to that of the robot 3 is omitted as appropriate for the robots 1 and 2.

Here, the belt conveyor is temporarily stopped or paused after conveying the circuit board T into the drivable range of the robot arm 110 of the robot 1, for example. Then, after the solder discharged from the dispenser 40 is disposed in the predetermined part of the circuit board T that is stopped, the belt conveyor restarts to be driven to convey the circuit board T. Furthermore, the belt conveyor is temporarily stopped or paused after conveying the circuit board T into the drivable range of the robot arm 210 of the robot 2, for example. Then, after the element held by the holding apparatus 50 is disposed in the predetermined part of the circuit board T that is stopped, the belt conveyor restarts to be driven to convey the circuit board T. Furthermore, the belt conveyor is temporarily stopped or paused after conveying the circuit board T into the drivable range of the robot arm 310 of the robot 3, for example. Then, after the processing light L from the light irradiation apparatus 60 is applied to the predetermined part of the circuit board T that is stopped, the belt conveyor restarts to be driven to convey the circuit board T.

### Robot 3

First, the control apparatus 1000 may perform calibration of the light irradiation apparatus 60 before the following steps S131 to S138.

It is assumed that the robot arm 310 is provided with the detection apparatus 330 and the light irradiation apparatus 60 in such a positional relationship that a part (e.g., a tip) of the light irradiation apparatus 60 is in the field of view of each of the cameras 31 and 32 of the detection apparatus 330.

The control apparatus 1000 performs the matching process by using the CAD data of the light irradiation apparatus 60 and the shape data including a part of the light irradiation apparatus 60 outputted from the detection apparatus 330, and calculates in advance the position and the attitude of the light irradiation apparatus 60 (e.g., the position and the attitude of the tip of the light irradiation apparatus 60 included in the fields of view of the cameras 31 and 32 of the detection apparatus 330), as the calibration of the light irradiation apparatus 60. That is, the control apparatus 1000 calculates in advance the position and the attitude of the light irradiation apparatus 60 in the coordinate system of the robot arm 310, on the basis of the shape data of at least a part of the light irradiation apparatus 60.

The control apparatus 1000 may obtain a correlation between the coordinate system of the light irradiation apparatus 60 and the coordinate system of the detection apparatus 330, on the basis of the shape data of at least a part of the light irradiation apparatus 60, as the calibration of the light irradiation apparatus 60. Then, the control apparatus 1000 may calculate the position and the attitude of the light irradiation apparatus 60 in the coordinate system of the robot arm 310, on the basis of a correlation obtained in advance between the coordinate system of the robot arm 310 and the coordinate system of the detection apparatus 330, and the correlation between the coordinate system of the light irradiation apparatus 60 and the coordinate system of the detection apparatus 330. The control apparatus 1000 may not calculate the position and the attitude of the light irradiation apparatus 60 in the coordinate system of the robot arm 310 as the calibration of the light irradiation apparatus 60, but may calculate the correlation between the coordinate system of the light irradiation apparatus 60 and the coordinate system of the detection apparatus 330. The correlation between the coordinate system of the light irradiation apparatus 60 and the coordinate system of the detection apparatus 330 may be a transformation matrix between the coordinate system of the light irradiation apparatus 60 and the coordinate system of the detection apparatus 330. When performing the calibration of the light irradiation apparatus 60, the control apparatus 1000 may control the driver 311 to move the robot arm 310 in a step S132 described later, on the basis of a calibration result of the light irradiation apparatus 60 and the position and the attitude of the target object (e.g., the circuit board T) calculated in a step S131 described later, for example. Furthermore, the control apparatus 1000 may control the driver 311 to move the robot arm 310 in a step S135 described later, on the basis of the calibration result of the light irradiation apparatus 60 and the position and the attitude of the target object (e.g., the element) calculated in a step S134 described later, for example. The calibration result of the light irradiation apparatus 60 may be the position and the attitude of the light irradiation apparatus 60 in the coordinate system of the robot arm 310, or may be the correlation between the coordinate system of the light irradiation apparatus 60 and the coordinate system of the detection apparatus 330, for example.

In the same manner as described above, the robot control unit 100 may not be a part of the control apparatus 1000, and may be configured separately from the control apparatus 1000. In this case, the control apparatus 1000 may generate a control signal for controlling the robot arm 310 (the driver 311), on the basis of the calibration result of the light irradiation apparatus 60 and the calculated position and attitude of the target object. The control apparatus 1000 may output the generated control signal to the robot control unit 100. The robot control unit 100 may generate a drive signal for driving the driver 311 on the basis of the control signal outputted from the control apparatus 1000. The robot control unit 100 may drive the driver 311 on the basis of the generated drive signal.

The marker may be also provided in a part of the light irradiation apparatus 60 included in the field of view of each of the cameras 31 and 32 of the detection apparatus 330. In this case, the control apparatus 1000 may perform the calibration on the basis of the shape data including the marker outputted from the detection apparatus 330, for example.

The control apparatus 1000 may perform the matching process by using not only the shape data, but also the image data outputted from the detection apparatus 330 and the CAD data of the light irradiation apparatus 60, thereby to perform the calibration of the light irradiation apparatus 60. The control apparatus 1000 may use not only the CAD data, but also the image data and the shape data of the light irradiation apparatus 60 obtained in advance, in the matching process, as described above.

As the calibration of the light irradiation apparatus 60, the control apparatus 1000 may use not only the detection apparatus 330, but also may use the image data and the shape data outputted from the detection apparatus 320. In this case, the assumption is that the robot arm 310 is provided with the detection apparatus 320 and the light irradiation apparatus 60 in such a positional relationship that a part of the light irradiation apparatus 60 is in the field of view of each of the cameras 21 and 22 of the detection apparatus 320.

In the following steps S131 to S138, the position and the attitude of the light irradiation apparatus 60 with respect to the detection apparatus 330 may be changed in some cases because the light irradiation apparatus 60 is brought into contact with a predetermined object or for similar reasons. In this case, the control apparatus 1000 may detect a change in the position and the attitude of the light irradiation apparatus 60 with respect to the detection apparatus 330, on the basis of a change of a part of the light irradiation apparatus 60 in the image data and the shape data outputted from the detection apparatus 330 (e.g., a change of a part of the light irradiation apparatus 60 on the image). When detecting the change in the position and the attitude of the light irradiation apparatus 60 with respect to the detection apparatus 330, the control apparatus 1000 may perform the calibration.

The control apparatus 1000 that controls the robot 3, calculates (estimates) the position and the attitude of the circuit board T as an example of the target object (step S 131). In the step S 131, the control apparatus 1000 calculates the position and the attitude at the initial stage (i.e., the initial position and attitude) of the circuit board T by the matching process of the matching unit 301. Furthermore, the control apparatus 1000 calculates the position of each solder pad formed on the circuit board T. The control apparatus 1000 calculates the position and the attitude of each solder pad on the circuit board T, on the basis of Gerber data of the circuit board T (i.e., design data of the circuit board T). More specifically, the control apparatus 1000 calculates the position and the attitude of each solder pad on the circuit board T, from a positional relationship between the solder pads on the circuit board T, and the calculated initial position and attitude of the circuit board T. Furthermore, the Gerber data of the circuit board T include data about an order of mounting the element on each solder pad, and the control apparatus 1000 specifies the order in which the elements are mounted on each solder pad on the basis of the Gerber data. The control apparatus 1000 may not calculate the initial position and attitude of the circuit board T, but may calculate the position attitude of any target object that can be used for the matching process, such as a cross mark formed on the circuit board T and an AR marker disposed on the circuit board T or in the vicinity of the circuit board T. The control apparatus 1000 may not specify the position and the attitude of each solder pad and the mounting order on the basis of the Gerber data, but may specify it by using other design data of the circuit board T (e.g., the CAD data), or may specify it by using information inputted by a user via a not-illustrated interface. The control apparatus 1000 may not calculate the position and the attitude of each solder pad on the circuit board T, but may calculate the position and the attitude of the spot to be irradiated with the processing light L or the vicinity of the spot, such as, for example, the element itself, an area in which the element is disposed, and an area in which the solder is disposed.

Then, the control apparatus 1000 controls the driver 311 to move the robot arm 310 such that the detection apparatuses 320 and 330 (or even the light irradiation apparatus 60) are brought close to the circuit board T (step 132). In the step S132, the control apparatus 1000 controls the driver 311 of the robot arm 310 such that the element (e.g., a chip LED having two electrodes) disposed on a firstly mounted solder pad is in the field of view of at least one of the detection apparatus 320 and the detection apparatus 330. More specifically, the control apparatus 1000 controls the driver 311 to move the robot arm 310, on the basis of the position and the attitude of the circuit board T outputted from the 2D tracking unit 302 of the tracking unit 300 at intervals of predetermined times, by using information about a the position and the attitude of the firstly mounted solder pad and the initial position and attitude of the circuit board T calculated (estimated) in the step S131.

Then, the control apparatus 1000 determines whether or not the element disposed on the firstly mounted solder pad is in the field of view of at least one of the detection apparatus 320 and the detection apparatus 330 (step S133). In the step S133, the control apparatus 1000 determines whether or not the detection apparatus 320 and the detection apparatus 330 are in a desired position and attitude with respect to the firstly mounted solder pad, on the basis of information about the position and the attitude of the firstly mounted solder pad calculated in the step S131, and information about the position and the attitude of the circuit board T outputted from the 2D tracking unit 302 at intervals of predetermined times. At this time, when the detection apparatus 320 and the detection apparatus 330 are in a desired position and attitude with respect to the firstly mounted solder pad, the control apparatus 1000 determines that the element disposed in the solder pad is in the field of view of at least one of the detection apparatus 320 and the detection apparatus 330. The determination method is not limited to the above example. The control apparatus 1000 may determine whether or not the information about the position and the attitude outputted from the 2D tracking unit 302 at intervals of predetermined times includes information about the position and the attitude of the element disposed on the firstly mounted solder pad, or may determine whether or not at least one of the image data and the shape data generated by at least one of the detection apparatus 320 and the detection apparatus 330 includes information about the element.

In the step S133, when it is determined that the element disposed on the firstly mounted solder pad is not in the field of view of at least one of the detection apparatus 320 and the detection apparatus 330 (the step S133: No), the control apparatus 1000 controls the driver 311 to continue to move the robot arm 310, on the basis of information about the position and the attitude of the circuit board T outputted from the 2D tracking unit 302 of the tracking unit 300 at intervals of predetermined times, and information about the position and the attitude of the firstly mounted solder pad calculated (estimated) in the step S131. That is, the step S132 is performed until it is determined that the element disposed on the firstly mounted solder pad is in the field of view of at least one of the detection apparatus 320 and the detection apparatus 330.

On the other hand, in the step S133, when it is determined that the element disposed in the firstly mounted solder pad is in the field of view of at least one of the detection apparatus 320 and the detection apparatus 330 (the step S133: Yes), the control apparatus 1000 calculates (estimates) the position and the attitude of the element disposed on the firstly mounted solder pad (step S134). In the step S134, the control apparatus 1000 calculates (estimates) the position and the attitude at the initial stage (the initial position and attitude) of the element disposed on the firstly mounted solder pad by the matching process of the matching unit 301. The control apparatus 1000 may not calculate (estimate) the initial position and attitude of the element, but may calculate (estimate) the position attitude of any target object that can be used for the matching process, such as a cross mark and a solder pad formed on the circuit board T and an AR marker and a solder disposed on the circuit board T.

Then, the control apparatus 1000 controls the driver 311 to move the robot arm 310 such that the position and the attitude of the light irradiation apparatus 60 are a desired position and a desired attitude that allow the solder disposed on the firstly mounted solder pad to be melted by the processing light L (step S135). In the step S135, the control apparatus 1000 controls the driver 311 to move the robot arm 310, on the basis of the position and the attitude of the element outputted from the 2D tracking unit 302 of the tracking unit 300 at intervals of predetermined times, by using information about the initial position and attitude of the element calculated (estimated) in the step S134. In other words, the control apparatus 1000 controls the driver 311 to move the robot arm 310 such that the light irradiation apparatus 60 (the detection apparatuses 320 and 330) is brought close to the element disposed on the firstly mounted solder pad of the circuitry board T.

Then, the control apparatus 1000 determines whether or not the position and the attitude of the light irradiation apparatus 60 are a desired position and a desired attitude that allow the solder disposed on the firstly mounted solder pad to be melted by the processing light L (step S136). In the step S136, the control apparatus 1000 determines whether or not the position and the attitude of the light irradiation apparatus 60 with respect to the element are a desired position and a desired attitude, on the basis of information about the position and the attitude of the element outputted from the 2D tracking unit 302 at intervals of predetermined times, for example. At this time, when the position and the attitude of the light irradiation apparatus 60 with respect to the element are a desired position and a desired attitude, the control apparatus 1000 determines that the position and the attitude of the light irradiation apparatus 60 are a desired position and a desired attitude that allow the solder disposed on the firstly mounted solder pad to be melted by the processing light L.

In the step S136, when it is determined that the position and the attitude of the light irradiation apparatus 60 are not a desired position and a desired attitude that allow the solder disposed on the firstly mounted solder pad to be melted by the processing light L (the step S136: No), the control apparatus 1000 controls the driver 311 to continue to move the robot arm 310, on the basis of the position and the attitude of the element outputted from the 2D tracking unit 302 at intervals of predetermined times, such that the light irradiation apparatus 60 is brought close to the element disposed on the firstly mounted solder pad. That is, the step S135 is performed until it is determined that the position and the attitude are a desired position and a desired attitude that allow the solder disposed on the firstly mounted solder pad to be melted by the processing light L.

On the other hand, when it is determined that the position and the attitude of the light irradiation apparatus 60 are a desired position and a desired attitude that allow the solder disposed on the firstly mounted solder pad to be melted by the processing light L (the step S136: Yes), the control apparatus 1000 controls the light irradiation apparatus 60 to apply the processing light L to the electrode of the element disposed on the solder pad, i.e., two electrodes of a chip LED, such that the solder disposed on the firstly mounted solder pad is melted (step S137). As a result, the solder disposed on the solder pad is melted, and the element is soldered to the circuit board T (the firstly mounted solder pad). Here, for example, the following two aspects are exemplified as a specific aspect of the step S137.

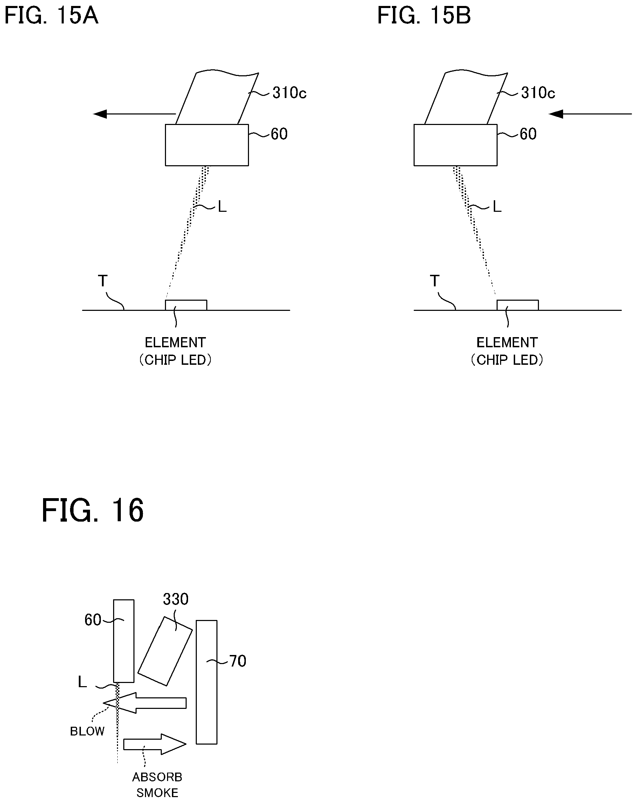

That is, in a first aspect, the electrodes of the chip LED are irradiated with the processing light L when the robot arm 310 is driven by the driver 311, i.e., when the light irradiation apparatus 60 and the detection apparatuses 320 and 330 are moved by the robot arm 310, as illustrated in FIG. 15A and FIG. 15B, for example. In this aspect, the control apparatus 1000 may control a direction of the Galvano mirror 61 of the light irradiation apparatus 60 such that the irradiation position of the processing light L from the light irradiation apparatus 60 moved by the robot arm 310 is maintained on one of the electrodes of the chip LED (e.g., such that the processing light L from the light irradiation apparatus 60 is applied to the same position of one of the electrodes of the chip LED), while controlling the driver 311 to move the light irradiation apparatus 60 and the detection apparatuses 320 and 330. For example, the control apparatus 1000 may control the direction of the Galvano mirror 61 of the light irradiation apparatus 60 such that the irradiation position of the processing light L from the light irradiation apparatus 60 moved by the robot arm 310 is maintained at the same position of one of the electrodes of the chip LED (in other words, such that the processing light L from the light irradiation apparatus 60 continues to be applied to the same position of one of electrodes of the chip LED for a predetermined time), while controlling the driver 311 to move the light irradiation apparatus 60 and the detection apparatuses 320 and 330. The same position also conceptually includes that the irradiation position of the processing light L varies extremely minutely to the extent that it does not affect the melting of the solder in the spot to be irradiated with the processing light L.

For example, as illustrated in FIG. 15A and FIG. 15B, when the light irradiation apparatus 60 or the like is moved by the robot arm 310 from the right to the left of a paper surface, the control apparatus 1000 may control the direction of the Galvano mirror 61 of the light irradiation apparatus 60 such that the irradiation position of the processing light L from the light irradiation apparatus 60 moved is maintained on one of the electrodes of the chip LED.

In the first aspect, for example, the control apparatus 1000 may control the direction of the Galvano mirror 61 such that the processing light L from the light irradiation apparatus 60 moved by the robot arm 310 is applied to a construction target obj ect (e.g., such that the processing light L is applied to the same position of the construction target object), on the basis of at least one of the image data and the shape data that are changed in accordance with the displacement of at least one of the detection apparatuses 320 and 330 moved by the robot arm 310.

In a second aspect, the control apparatus 1000 controls the driver 311 to stop the driving of the driver 311 of the robot arm 310 that is driven in the step S135, and after the driving of the driver 311 is stopped, the electrode of the chip LED is irradiated with the processing light L. In this aspect, the control apparatus 1000 controls the driver 311 to stop the driving of the driver 311. The control apparatus 1000 may control the direction of the Galvano mirror 61 of the light irradiation apparatus 60 such that the irradiation position of the processing light L from the light irradiation apparatus 60 is maintained on one of the electrodes of the chip LED after the driving of the driver 311 is stopped. For example, the control apparatus 1000 controls the driver 311 to stop the driving of the driver 311. The control apparatus 1000 ma control the direction of the Galvano mirror 61 of the light irradiation apparatus 60 such that the irradiation position of the processing light L from the light irradiation apparatus 60 is maintained at the same position of one of the electrodes of the chip LED (such that the processing light L from the light irradiation apparatus 60 is continuously applied to the same position of one of the electrodes of the chip LED for a predetermined time) after the driving of the driver 311 is stopped.

In the second aspect, for example, the control apparatus 1000 may control the direction of the Galvano mirror 61 such that the processing light L from the light irradiation apparatus 60 that is displaced with at least one of the detection apparatuses 320 and 330 is applied to the construction target object (e.g., such that the processing light L is applied to the same position of the construction target object), on the basis of at least one of the image and the shape data that are changed in accordance with the displacement of at least one of the detection apparatuses 320 and 330 after the driving of the driver 311 is stopped.

In the first aspect, for example, when the chip LED is mounted on a plurality of solder pads on the circuit board T at a high speed, the control apparatus 1000 controls the light irradiation apparatus 60 and the driver 311 of the robot arm 310 so as to apply the processing light L to the electrode of the chip LED disposed on the firstly mounted solder pad (in other words, the first position) and the electrode of the chip LED disposed on a secondly mounted solder pad (in other words, the second position) in order, while moving the light irradiation apparatus 60 (the detection apparatuses 320 and 330) from the firstly mounted solder pad to the secondly mounted solder pad. In this case, the control apparatus 1000 moves the light irradiation apparatus 60 (the detection apparatuses 320 and 330) from the firstly mounted solder pad to the secondly mounted solder pad, on the basis of the position and the attitude of the secondly mounted solder pad calculated (estimated) in the step S131, in parallel to the step S137.

Firstly, the control apparatus 1000 controls the direction of the Galvano mirror 61 of the light irradiation apparatus 60 such that the processing light L is applied to the electrode of the chip LED for a predetermined time from the light irradiation apparatus 60 (the detection apparatuses 320 and 330) that is moved (displaced) with respect to the electrode of the chip LED disposed on the firstly mounted solder pad. More specifically, the control apparatus 1000 gradually changes the direction of the Galvano mirror 61 such that the irradiation position of the processing light L is maintained on one of the electrodes of the chip LED (e.g., at the same position of one of the electrodes of the chip LED), on the basis of the position and the attitude of the chip LED outputted from the 2D tracking unit 302 at intervals of predetermined times, with the moving of the light irradiation apparatus 60 and the detection apparatuses 320 and 330 by the robot arm 310. At this time, the control apparatus 1000 is allowed to recognize a change in the position and the attitude of one of the electrodes of the chip LED with respect to the light irradiation apparatus 60, on the basis of the position and the attitude of the chip LED outputted from the 2D tracking unit 302 at intervals of predetermined times, and thus, the control apparatus 1000 is allowed to control the direction of the Galvano mirror 61 such that the irradiation position of the processing light L is maintained on one of the electrodes of the chip LED (e.g., at the same position of one of the electrodes of the chip LED). The position and the attitude of the chip LED in a point cloud indicated by the shape data and the position and the attitude of the chip LED in the image indicated by the image data, which are successively outputted from at least one of the detection apparatuses 320 and 330, change with time due to a relative displacement between the chip LED and the light irradiation apparatus 60 (the detection apparatuses 320 and 330).

After completing the irradiation of one of the electrodes of the chip LED with the processing light L for a predetermined time, the control apparatus 1000 then gradually changes the direction of the Galvano mirror 61 so as to be maintained such that the irradiation position of the processing light L is maintained on the other electrode of the chip LED (e.g., at the same position of the other electrode of the chip LED), on the basis of the position and the attitude of the chip LED outputted from the 2D tracking unit 302 at intervals of predetermined times, with the subsequent moving of the light irradiation apparatus 60 and the detection apparatuses 320 and 330 by the robot arm 310. Then, after completing the irradiation of the other electrode of the chip LED with the processing light L for a predetermined time, the control apparatus 1000 applies the processing light L to the electrode of the chip LED disposed in the secondly mounted solder pad in the same manner, by repeating the steps S132 to S137.

For example, the control apparatus 1000 may control the direction of the Galvano mirror 61 such that the irradiation position of the processing light L from the light irradiation apparatus 60 that is displaced with the displacement of at least one of the detection apparatuses 320 and 330 is maintained at the first position and is then maintained at the second position that is different from the first position, on the basis of at least one of the image data and the shape data that are changed in accordance with the displacement of at least one of the detection apparatuses 320 and 330.

For example, the control apparatus 1000 may control the direction of the Galvano mirror 61 such that the irradiation position of the processing light L from the light irradiation apparatus 60 moved by the robot arm 310 is maintained at the first position and is then maintained at the second position that is different from the first position, on the basis of at least one of the image data and the shape data that are changed in accordance with the displacement of at least one of the detection apparatuses 320 and 330 moved by the robot arm 310, while controlling the driver 311 to move the light irradiation apparatus 60 and the detection apparatuses 320 and 330.

In the second aspect, inertial force and elastic force are applied to the light irradiation apparatus 60 and the detection apparatuses 320 and 330 provided in the robot arm 310. Therefore, for example, the control apparatus 1000 controls the driver 311 to stop the driving of the driver 311 of the robot arm 310 that is driven in the step S135, and after the driving of the driver 311 is stopped, a relative position between the light irradiation apparatus 60 (the detection apparatuses 320 and 330) and the chip LED is changed with time to a greater or lesser extent, due to the displacement of the light irradiation apparatus 60 and the detection apparatuses 320 and 330 because of vibrations or the like. Therefore, the control apparatus 1000 controls the Galvano mirror 61 of the light irradiation apparatus 60 such that the irradiation position of the processing light L from the light irradiation apparatus 60 is maintained on one of the electrodes of the chip LED (in other words, the first position) for a predetermined time, even if the light irradiation apparatus 60 (the detection apparatuses 320 and 330) is displaced due to vibrations or the like. Then, the control apparatus 1000 controls the Galvano mirror 61 of the light irradiation apparatus 60 such that the irradiation position of the processing light L from the light irradiation apparatus 60 is maintained on the other electrode of the chip LED (in other words, the second position) for a predetermined time, even if the light irradiation apparatus 60 (the detection apparatuses 320 and 330) is still displaced due to vibrations or the like.

More specifically, first, the control apparatus 1000 changes the direction of the Galvano mirror 61 with time such that the irradiation position of the processing light L is maintained on one of the electrodes of the chip LED (e.g., at the same position of one of the electrodes of the chip LED), on the basis of the position and the attitude of the chip LED outputted from the 2D tracking unit 302 at intervals of predetermined times (with the displacement of the light irradiation apparatus 60 due to vibrations or the like). The control apparatus 1000 is allowed to recognize the change in the position and the attitude of one of the electrodes of the chip LED with respect to the light irradiation apparatus 60, and thus, the control apparatus 1000 is allowed to control the direction of the Galvano mirror 61 such that the irradiation position of the processing light L is maintained on one of the electrodes of the chip LED (e.g., at the same position of one of the electrodes of the chip LED). The position and the attitude of the chip LED in the point cloud indicated by the shape data and the position and the attitude of the chip LED in the image indicated by the image data, which are successively outputted from at least one of the detection apparatuses 320 and 330, change with time due to a relative displacement between the chip LED and the light irradiation apparatus 60 (the detection apparatuses 320 and 330).

After completing the irradiation of one of the electrodes of the chip LED with the processing light L for a predetermined time, the control apparatus 1000 then changes the direction of the Galvano mirror 61 with time such that the irradiation position of the processing light L is maintained on the other electrode of the chip LED (e.g., at the same position of the other electrode of the chip LED), on the basis of the position and the attitude of the chip LED outputted from the 2D tracking unit 302 at intervals of predetermined times (with the displacement of the light irradiation apparatus 60 due to vibrations or the like).

When the processing light L is applied to one or the other of the electrodes of the chip LED, the position of the chip LED with respect to the solder pad may be temporally changed due to surface tension of the molten solder or the like. In this case, the control apparatus 1000 gradually changes the direction of the Galvano mirror such that the irradiation position of the processing light L is maintained on one or the other of the chip LED, on the basis of the position and the attitude of the chip LED outputted from the 2D tracking unit 302 at intervals of predetermined times. At this time, the control apparatus 1000 is allowed to recognize a change in the position and the attitude of the one or the other electrode of the chip LED with respect to the light irradiation apparatus 60, on the basis of the position and the attitude of the chip LED outputted from the 2D tracking unit 302at intervals of predetermined times, and thus, the control apparatus 1000 is allowed to control the direction of the Galvano mirror such that the irradiation position of the processing light L is maintained on one of the electrodes of the chip LED.

Not only at the stop of the driver 311 of the robot arm 310 that is driven, but also at the time of or after the acceleration and deceleration of the robot arm 310, the light irradiation apparatus 60 and the detection apparatuses 320 and 330 provided on the robot arm 310 are displaced due to vibrations or the like, and a relative position between the light irradiation apparatus 60 (the detection apparatuses 320 and 330) and the spot to be irradiated with the processing light L (e.g., the electrode of the chip LED) is changed with time. Even in this case, the control apparatus 1000 is allowed to recognize a temporal change in the position and the attitude of the spot to be irradiated with the processing light L with respect to the light irradiation apparatus 60, on the basis of the position and the attitude of the chip LED outputted from the 2D tracking unit 302 at intervals of predetermined times, and thus, the control apparatus 1000 is allowed to control the direction of the Galvano mirror such that the irradiation position of the processing light L is maintained at the spot to be irradiated with the processing light L.

The control apparatus 1000 may control the light irradiation apparatus 60 so as to change the spot size and intensity of the processing light L when the processing light L is applied to the spot to be irradiated with the processing light L (e.g., the electrode of the chip LED) in the step S135. When the intensity of the processing light L is changed by changing the intensity of a light emitted from a light source (not illustrated) and when the light source (not illustrated) is disposed outside the light irradiation apparatus 60, the control apparatus 1000 may control the external light source (not illustrated).

For example, the control apparatus 1000 may control the direction of the Galvano mirror 61 such that the irradiation position of the processing light L from the light irradiation apparatus 60 that is displaced with the displacement of at least one of the detection apparatuses 320 and 330 is maintained at the first position and then is maintained at the second position that is different from the first position, on the basis of at least one of the image data and the shape data that are changed in accordance with the displacement of at least one of the detection apparatuses 320 and 330.

For example, the control apparatus 1000 may control the driver 311 to stop the driving of the driver 311. The control apparatus 1000 may control the direction of the Galvano mirror 61 such that the irradiation position of the processing light L from the light irradiation apparatus 60 that is displaced with the displacement of at least one of the detection apparatuses 320 and 330 is maintained at the first position and is maintained at the second position that is different from the first position, on the basis of at least one of the image data and the shape data that are changed in accordance with the displacement of at least one of the detection apparatuses 320 and 330 after the driving of the driver 311 is stopped.

When the light irradiation apparatus 60 or the like is moved by the robot arm 310 and when the processing light L is applied, the control apparatus 1000 may control at least one of the position and the attitude of the light irradiation apparatus 60, the direction of the Galvano mirror 61, or the like, on the basis of a prediction result of predicting the operation or the like of the robot arm 310 in addition to a result of the tracking process.

In the steps S131 to S137, for example, the control apparatus 1000 may control the driver 311 of the robot arm 310 such that the light irradiation apparatus 60 and the detection apparatuses 320 and 330 are brought close to the circuit board T, on the basis of at least one of the image data and the shape data generated by at least one of the detection apparatuses 320 and 330. When the light irradiation apparatus 60 and the detection apparatuses 320 and 330 are brought close to the circuit board T, the control apparatus 1000 may control the direction of the Galvano mirror 61 such that the processing light L from the light irradiation apparatus 60 that is displaced with at least one of the detection apparatuses 320 and 330 is applied to the spot to be irradiated with the processing light L (e.g., the solder pad formed on the circuit board T, the element or the solder disposed on the circuit board T) as a part of the target object (e.g., such that the processing light L is applied to the same position of the spot to be irradiated with the processing light L), on the basis of the at least one of the data that are changed in accordance with the displacement of the detection apparatuses 320 and 330.

After the step S137, the control apparatus 1000 performs a quality inspection of the solder and the soldered element, on the basis of at least one of the image data and the shape data outputted from at least one of the detection apparatuses 320 and 330 (step S138). Inspection items are, for example, position deviation of the element with respect to the solder pad, floating of the electrode of the element with respect to the solder pad (a so-called Manhattan phenomenon in which the electrode of the element is separated from the solder pad) or the like. For example, when performing the quality inspection of the position deviation of the element with respect to the solder pad, the control apparatus 1000 recognizes the element and the solder pad in the image indicated by the image data, and detects the position deviation of the element with respect to the solder pad, on the basis of the image data outputted from at least one of the detection apparatuses 320 and 330. The control apparatus 1000 may determine that it is a non-defective article (the quality is good) when at least a part of the electrode of the element overlaps the solder pad, and may determine that the quality is poor when at least a part of the electrode of the element does not overlap the solder pad, for example. The control apparatus 1000 may detect the position deviation of the element with respect to the solder pad, on the basis of not only the image data, but also the image data and the shape data, or the shape data outputted from at least one of the detection apparatuses 320 and 330. The condition of the poor quality regarding the position deviation of the element with respect to the solder pad, which is determined by the control apparatus 1000, may not be whether or not at least a part of the element overlaps the solder pad. For example, the control apparatus 1000 may determine the quality on the basis of an area in which the electrode of the element overlaps the solder pad.

The control apparatus 1000 may display, on a not-illustrated display apparatus, at least one of informations about the image data and the shape data used for the quality inspection of the soldering in the step S138, and a result of the quality inspection of the soldering.

The control apparatus 1000 may perform machine learning in an existing method, by using, as teacher data, the data that are obtained by associating the quality of the soldering determined in the step S138 with at least one of informations about the image data and the shape data used in the steps S131 to S137. In this case, the control apparatus 1000 may use a result of the machine learning for a control of each apparatus of the robot 3 (e.g., a control of the position and the attitude of the light irradiation apparatus 60, and a control of the light irradiation apparatus 60). Here, the control of the light irradiation apparatus 60 includes setting of a condition of the processing light L to be applied from the light irradiation apparatus 60 (e.g., at least one of the intensity of the processing light L, the spot size of the processing light L, an irradiation time of the processing light L, and an irradiation range of the processing light L). The control apparatus 1000 may use the result of the machine learning for at least one of a control of each apparatus of the robot 1 and a control of each apparatus of the robot 2.

After the step S138, the control apparatus 1000 starts to move the light irradiation apparatus 60 (the detection apparatuses 320 and 330) to the secondly mounted solder pad, on the basis of the position and the attitude of the secondly mounted solder pad calculated in the step S131 and the position and the attitude of the chip LED outputted from the 2D tracking unit 302 at intervals of predetermined times in the step S137 or the step S136, and repeats the steps S133 to S138. When starting to move the light irradiation apparatus 60 (the detection apparatuses 320 and 330) to the secondly mounted solder pad, the control apparatus 1000 may perform the step S131 before the steps S133 to S138. The control apparatus 1000 repeats the steps described above until the mounting (i.e., the soldering) of all the elements (e.g., the chip LED, etc.) disposed on each solder pad of the circuit board T is ended.

When there is only one element disposed on the solder pad on the circuit board T, the control apparatus 1000 may control the driver 311 or the like such that the robot arm 310 or the like is in the initial attitude determined in advance, after the step S136.

As described above, as in the above-described steps (especially as in the first aspect and the second aspect in the step S137), the control apparatus 1000 is allowed to recognize the position and the attitude of the target object at intervals of predetermined times by the tracking process. Consequently, the control apparatus 1000 is capable of applying the processing light L at a desired position of the target object (in other words, the spot to be irradiated with the processing light L), even if the relative position between the target object and the light irradiation apparatus 60 (the light detection apparatuses 320 and 330) is temporally changed (displaced), by the control of at least one of the Galvano mirror 61 and the driver 311 of the robot arm 310.

In the first aspect and the second aspect in the step S137, the control apparatus 1000 may control at least one of the Galvano mirror 61 and the driver 311 of the robot arm 310 such that the irradiation position of the processing light L is temporally changed in a wide range of the spot to be irradiated with the processing light L (e.g., a whole of the spot to be irradiated with the processing light L). For example, when applying the processing light L to the electrode of the element as the spot to be irradiated with the processing light L, the control apparatus 1000 may control the direction of the mirror of the Galvano mirror 61 such that the irradiation position of the processing light L is changed with time in the entire electrode, while recognizing the position and the attitude of the element (the electrode) at intervals of predetermined times by the tracking process. In other words, the control apparatus 1000 may control the direction of the mirror of the Galvano mirror 61 to allow the processing light L to scan on the electrode. Such a control makes it possible to prevent a local heat input to the electrode (in other words, a local heat input to the solder), and to prevent damage to the element due to heat, melting failure of the solder due to local heating, damage to the circuit board due to local heating, or the like. In this case, as in the first aspect in the step S137, it is also possible to change the direction of the Galvano mirror such that the irradiation position of the processing light L is temporally changed in a whole of one of the electrodes of the chip LED, on the basis of the position and the attitude of the chip LED (the electrode of the chip LED) outputted from the 2D tracking unit 302 at intervals of predetermined times, while moving the light irradiation apparatus 60 and the detection apparatuses 320 and 330 by the robot arm 310. At this time, the control apparatus 1000 is allowed to recognize a temporal change in the position and the attitude of one of the electrodes of the chip LED with respect to the light irradiation apparatus 60, on the basis of the position and the attitude of the chip LED outputted from the 2D tracking unit 302 at intervals of predetermined times, and is thus allowed to control the direction of the Galvano mirror such that the irradiation position of the processing light L is temporally changed in the whole of one of the electrodes of the chip LED.

The position and the attitude of the chip LED in the point clout or depth image indicated by the shape data and the position and the attitude of the chip LED in the image indicated by the image data, which are successively outputted from at least one of the detection apparatuses 320 and 330, change with time due to a relative displacement between the chip LED and the light irradiation apparatus 60 (the detection apparatuses 320 and 330). After completing the irradiation of one of the electrodes of the chip LED with the processing light L for a predetermined time, the control apparatus 1000 then changes the direction of the Galvano mirror such that the irradiation position of the processing light L is temporally changed in a whole of the other electrode of the chip LED, on the basis of the position and the attitude of the chip LED outputted from the 2D tracking unit 302 at intervals of predetermined times, with the subsequent moving of the light irradiation apparatus 60 and the detection apparatuses 320 and 330 by the robot arm 310. Then, after completing the irradiation of the other electrode of the chip LED with the processing light L for a predetermined time, the control apparatus 1000 applies the processing light L to the electrode of the chip LED disposed in the secondly mounted solder pad in the same manner, by repeating the steps S132 to S137.

Furthermore, for example, the control apparatus 1000 changes the direction of the Galvano mirror with time such that the irradiation position of the processing light L is temporally changed in the whole of one of the electrodes of the chip LED, on the basis of the position and the attitude of the chip LED outputted from the 2D tracking unit 302 at intervals of predetermined times (with displacement of the light irradiation apparatus 60 due to vibrations or the like). The control apparatus 1000 is allowed to recognize the change in the position and the attitude of one of the electrodes of the chip LED with respect to the light irradiation apparatus 60, and is thus allowed to control the direction of the Galvano mirror such that the irradiation position of the processing light L is temporally changed in the whole of one of the electrodes of the chip LED. The position and the attitude of the chip LED in the point cloud indicated by the shape data and the position and the attitude of the chip LED (the electrode of the chip LED) in the image indicated by the image data, which are successively outputted from at least one of the detection apparatuses 320 and 330, change with time due to the relative displacement between the chip LED and the light irradiation apparatus 60 (the detection apparatuses 320 and 330). After completing the irradiation of one of the electrodes of the chip LED with the processing light L for a predetermined time, the control apparatus 1000 then changes the direction of the Galvano mirror with time such that the irradiation position of the processing light L is temporally changed in the whole of the other electrode of the chip LED, on the basis of the position and the attitude of the chip LED outputted from the 2D tracking unit 302 at intervals of predetermined times (with the displacement of the light irradiation apparatus 60 due to vibrations or the like).

Therefore, the control apparatus 1000 is allowed to recognize the temporal change in the spot to be irradiated with the processing light L with respect to the light irradiation apparatus 60, on the basis of the position and the attitude of the spot to be irradiated with the processing light L (e.g., the electrode of the element) outputted from the 2D tracking unit 302 at intervals of predetermined times, and is thus allowed to apply the processing light L into a desired range (the same position and the whole) in the spot to be irradiated with the processing light L.

As described above, the spot to be irradiated with the processing light L as a part of the target object is not limited to the electrode of the element, but may be the solder pad or the solder. Even in this case, the control apparatus 1000 may control the direction of the mirror of the Galvano mirror 61 such that the irradiation position of the processing light L is changed with time in the whole of the spot to be irradiated with the processing light L (the solder pad or the solder). Furthermore, when the spot to be irradiated with the processing light L is wide, the control apparatus 1000 may control the direction of the Galvano mirror 61 to allow the processing light L to scan on the spot to be irradiated with the processing light L, while driving the driver 311 of the robot 310.

Furthermore, for example, the control apparatus 1000 may apply the processing light L temporally alternately to one or the other of the electrodes of the element having a plurality of electrodes (e.g., the chip LED having two electrodes) as the spot to be irradiated with the processing light L, thereby to melt the solder. In this case, the control apparatus 1000 may control the direction of the mirror of the Galvano mirror 61 such that the irradiation position of the processing light L is changed temporally alternately in one electrode and the other electrode, while recognizing the position and the attitude of the element (one electrode and the other electrode) at intervals of predetermined times by the tracking process. Furthermore, the control apparatus 1000 may control the direction of the mirror of the Galvano mirror 61 such that the irradiation position of the processing light L is changed with time in the whole of one of the electrodes, in a time zone of applying the processing light L to the one electrode. Similarly, the control apparatus 1000 may control the direction of the mirror of the Galvano mirror 61 such that the irradiation position of the processing light L is changed with time in the whole of the other electrode, in a time zone of applying the processing light L to the other electrode. Even in such a control, it is possible to prevent the local heat input to the electrode (in other words, the local heat input to the solder).

As described above, the spot to be irradiated with the processing light L is not limited to the electrode, but may be the solder pad or the solder. Even in this case, the control apparatus 1000 may control the direction of the Galvano mirror 61 such that the irradiation position of the processing light L is changed temporally alternately in a first spot (one solder pad or one solder) and a second spot (the other solder pad or the other solder) to be irradiated with the processing light L. Furthermore, when the first spot and the second spot to be irradiated with the processing light L are apart from each other, the control apparatus 1000 may control the direction of the Galvano mirror 61 to allow the processing light L to scan, while driving the driver 311 of the robot 310.

In the step S134, the control apparatus 1000 may perform CAD matching that uses the shape data outputted from the detection apparatus 330 and the CAD data related to the element, and may measure the position and the attitude of the element. At this time, the control apparatus 1000 may perform the CAD matching after removing data corresponding to a substrate surface of the circuit board T from the shape data, for example. With this configuration, it is possible to reduce a time required for the CAD matching (in other words, a time required for the step S 134). A detailed of a method of removing the shape data corresponding to the substrate surface will be omitted because various existing aspects can be applied to the method.

When the element can be mounted by melting the solder disposed on the solder pad, the control apparatus 1000 may not perform the step S131 and the step S133, or the step S135 and the step S133.

The control apparatus 1000 may display, on a not-illustrated display apparatus, at least one of information about the position and the attitude of the element, information about the order of mounting on each solder pad, information about the position and the attitude of each solder pad, and informations about the position and the attitude of the circuit board T, and the image data and the shape data used in the steps S131 to S137.

The control apparatus 1000 may detect at least one of an area of the solder pad and a status of the solder (at least one of informations about the position and the attitude of the solder, a volume of the solder, a shape of the solder, and a distance between the solder and the solder pad), on the basis of at least one of the image data and the shape data outputted from the detection apparatuses 320 and 330 in the steps S131 to S137. That is, the control apparatus 1000 may detect information about a status of the spot to be irradiated with the processing light L. Then, the control apparatus 1000 may use information about the status of the spot to be irradiated with the processing light L, which is detected as described above, to control the condition of the processing light L applied from the light irradiation apparatus 60 (e.g., at least one of the intensity of the processing light L, the spot size of the processing light L, the irradiation time of the processing light L, and the irradiation range of the processing light L). That is, the control apparatus 1000 may determine the condition of the processing light L, on the basis of the detected information about the status of the spot to be irradiated with the processing light L. The information about the status of the spot to be irradiated with the processing light L may include not only the information described above, but also information about the solder pad, the solder, and the element as the spot to be irradiated with the processing light L, wherein the information can be detected on the basis of at least one of the image data and the shape data outputted from at least one of the detection apparatuses 320 and 330.

As illustrated in FIG. 16, an air blower and smoke absorber 70 may be disposed in the vicinity of the light irradiation apparatus 60 that is the end effector of the robot arm 310 (not illustrated). Incidentally, one of the air blower and the smoke absorber may be disposed, while the other of the air blower and the smoke absorber may not be disposed.

With this configuration, it is possible to effectively prevent that a smoke generated when the solder is heated by the processing light L emitted from the light irradiation apparatus 60 adheres to an optical system of the light irradiation apparatus 60.

### Robot 1

The control apparatus 1000 that controls the robot 1, performs a steps S111 and S112 respectively corresponding to the steps S131 and S132. The control apparatus 1000 performs the steps S 111 and S112 by using the output of at least one of the detection apparatuses 120 and 130 provided in the robot 1.

The control apparatus 1000 may perform the calibration of the dispenser 40 before the following steps S111 to S117.

It is assumed that the robot arm 110 is provided with the detection apparatus 130 and the dispenser 40 in such a positional relationship that a part (e.g., a tip) of the dispenser 40 is in the field of view of each of the cameras 31 and 32 of the detection apparatus 130 having the same configuration as that of the detection apparatus 330. For convenience of explanation, the cameras are referred to as the cameras 31 and 32 of the detection apparatus 130, as an example in which the detection apparatus 130 includes the same cameras 31 and 32 as those of the detection apparatus 330.

The control apparatus 1000 performs the matching process by using the CAD data of the dispenser 40 and the shape data including the dispenser 40 outputted from the detection apparatus 230, and calculates in advance the position and the attitude of the dispenser 40 (e.g., the position and the attitude of the tip of the dispenser 40 included in the fields of view of the cameras 31 and 32 of the detection apparatus 130), as the calibration of the dispenser 40. That is, the control apparatus 1000 calculates in advance the position and the attitude of the dispenser 40 in the coordinate system of the robot arm 110, on the basis of the shape data of at least a part of the dispenser 40.

The control apparatus 1000 may obtain a correlation between the coordinate system of the dispenser 40 and the coordinate system of the detection apparatus 130, on the basis of the shape data of at least a part of the dispenser 40, as the calibration of the dispenser 40. Then, the control apparatus 1000 may calculate the position and the attitude of the dispenser 40 in the coordinate system of the robot arm 110, on the basis of a correlation obtained in advance between the coordinate system of the robot arm 110 and the coordinate system of the detection apparatus 130, and the correlation between the coordinate system of the dispenser 40 and the coordinate system of the detection apparatus 130. The control apparatus 1000 may not calculate the position and the attitude of the dispenser 40 in the coordinate system of the robot arm 110 as the calibration of the dispenser 40, and may calculate the correlation between the coordinate system of the dispenser 40 and the coordinate system of the detection apparatus 130. The correlation between the coordinate system of the dispenser 40 and the coordinate system of the detection apparatus 130 may be a transformation matrix between the coordinate system of the dispenser 40 and the coordinate system of the detection apparatus 130. When performing the calibration of the dispenser 40, the control apparatus 1000 may control the driver 111t to move the robot arm 110 in a step S112 described later, on the basis of a calibration result of the dispenser 40 and the position and the attitude of the target object (e.g., the circuit board T) calculated in a step S111 described later, for example. Furthermore, the control apparatus 1000 may control the driver 111 to move the robot arm 110 in a step S115 described later, on the basis of the calibration result of the dispenser 40 and the position and the attitude of the target object (e.g., the solder pad) calculated by a step S114 described later, for example. The calibration result of the dispenser 40 may be, for example, the position and the attitude of the dispenser 40 in the coordinate system of the robot arm 110, or the correlation between the coordinate system of the dispenser 40 and the coordinate system of the detection apparatus 130.

As described above, the robot control unit 100 may not be a part of the control apparatus 1000, and may be configured separately from the control apparatus 1000. In this case, the control apparatus 1000 may generate a control signal for controlling the robot arm 110 (the driver 111), on the basis of the calibration result of the dispenser 40 and the calculated position and attitude of the target object. The control apparatus 1000 may output the generated control signal to the robot control unit 100. The robot control unit 100 may generate a drive signal for driving the driver 111, on the basis of the control signal outputted from the control apparatus 1000. The robot control unit 100 may drive the driver 111 on the basis of the generated drive signal.

The marker may be provided in a part of the dispenser 40 included in the field of view of each of the cameras 31 and 32 of the detection apparatus 130. In this case, the control apparatus 1000 may perform the calibration on the basis of the shape data including the marker outputted from the detection apparatus 130, for example.

The control apparatus 1000 may perform the matching process by using not only the shape data, but also the image data outputted from the detection apparatus 130 and the CAD data of the dispenser 40, thereby to perform the calibration of the dispenser 40. The control apparatus 1000 may use not only the CAD data, but also the image data and the shape data of the dispenser 40 obtained in advance, in the matching process, as described above.

As the calibration result of the dispenser 40, the control apparatus 1000 may use not only the detection apparatus 130, but also may use the image data and the shape data outputted from the detection apparatus 120. In this case, the assumption is that the robot arm 110 is provided with the detection apparatus 120 and the dispenser 40 in such a positional relationship that a part of the dispenser 40 is in the field of view of each of the cameras 21 and 22 of the detection apparatus 120 having the same configuration as that of the detection apparatus 320.

In the following steps S111 to S117, the position and the attitude of the dispenser 40 with respect to the detection apparatus 130 may be changed in some cases because the dispenser 40 is brought into contact with a predetermined object or for similar reasons. In this case, the control apparatus 1000 may detect a change in the position and the attitude of the dispenser 40 with respect to the detection apparatus 130, on the basis of a change of a part of the dispenser 40 in the image data and the shape data outputted from the detection apparatus 130 (e.g., a change of a part of the dispenser 40 on the image). When detecting the change in the position and the attitude of the dispenser 40 with respect to the detection apparatus 130, the control apparatus 1000 may perform the calibration.

The control apparatus 1000 that controls the robot 1, calculates the position and the attitude of the circuit board T as an example of the target obj ect (step S111). As in the step S131, in the step S111, the control apparatus 1000 calculates the position and the attitude at the initial stage (i.e., the initial position and attitude) of the circuit board T by the matching process of the matching unit 301. Furthermore, the control apparatus 1000 calculates the position of each solder pad formed on the circuit board T. For example, the control apparatus 1000 calculates the position and the attitude of each solder pad on the circuit board T, on the basis of the Gerber data of the circuit board T (i.e., the design data of the circuit board T). The control apparatus 1000 specifies an order of mounting (here, disposing the solder) on each solder pad, on the basis of the Gerber data.

Then, the control apparatus 1000 controls the driver 111 to move the robot arm 110 such that the dispensers 40 (the detection apparatuses 120 and 130) is brought close to the circuitry board T (step 112). As in the step S132, in the step S112, the control apparatus 1000 controls the driver 111 of the robot arm 110 such that the firstly mounted solder pad is in the field of view of at least one of the detection apparatus 120 and the detection apparatus 130.

Then, the control apparatus 1000 determines whether or not the firstly mounted solder pad is in the field of view of at least one of the detection apparatus 120 and the detection apparatus 130 (step S113). As in the step S133, in the step S113, the control apparatus 1000 determines whether or not the detection apparatus 120 and the detection apparatus 130 are in a desired position and attitude with respect to the firstly mounted solder pad, on the basis of information about the position and the attitude of the firstly mounted solder pad calculated in the step S111, and information about the position and the attitude of the circuit board T outputted from the 2D tracking unit 302 at intervals of predetermined times. At this time, when the detection apparatus 120 and the detection apparatus 130 are in a desired position and attitude with respect to the solder pad, the control apparatus 1000 determines that the solder pad is in the field of view of at least one of the detection apparatus 120 and the detection apparatus 130.

In the step S113, when it is determined that the solder pad is not in the field of view of at least one of the detection apparatus 120 and the detection apparatus 130 (the step S113: No), the control apparatus 1000 controls the driver 111 to continue to move the robot arm 110, on the basis of information about the position and the attitude of the circuit board T outputted from the 2D tracking unit 302 at intervals of predetermined times, and information about the position and the attitude of the solder pad calculated in the step S111.

On the other hand, in the step S113, when it is determined that the solder pad is in the field of view of at least one of the detection apparatus 120 and the detection apparatus 130 (the step S113: Yes), the control apparatus 1000 calculates the position and the attitude of the firstly mounted solder pad (step S114). As in the step S134, in the step S114, the control apparatus 1000 calculates the initial position and attitude at the initial stage (the initial position and attitude) of the solder pad by the matching process of the matching unit 301. In the step S111, the position and the attitude of the solder pad are calculated on the basis of the Gerber data; however, since the Gerber data are the design data, there is an error between the position and the attitude of the solder pad on the actual circuit board T and those based on the Gerber data. Therefore, the control apparatus 1000 performs the step S114.

Then, the control apparatus 1000 controls the driver 111 to move the robot arm 110 such that the position and the attitude of the dispenser 40 are a desired position and a desired attitude that allow the solder to be discharged to the firstly mounted solder pad (step S115). As in the step S135, in the step S115, the control apparatus 1000 controls the driver 111 to move the robot arm 110, on the basis of the position and the attitude of the solder pad outputted from the 2D tracking unit 302 at intervals of predetermined times, by using information about the initial position and attitude of the solder pad calculated in the step S114. In other words, the control apparatus 1000 controls the driver 111 to move the robot arm 110 such that the dispenser 40 (the detection apparatuses 120 and 130) is brought close to the solder pad mounted firstly mounted on the circuitry board T.

Then, the control apparatus 1000 determines whether or not the position and the attitude of the dispenser 40 are a desired position and a desired attitude that allow the solder to be discharged to the firstly mounted solder pad (step S116). As in the step S136, in the step S116, the control apparatus 1000 determines whether or not the position and the attitude of the dispenser 40 with respect to the solder pad are a desired position and a desired attitude, on the basis of information about the position and the attitude of the firstly mounted solder pad outputted from the 2D tracking unit 302 at intervals of predetermined times, for example.

In the step S116, when it is determined that the position and the attitude of the dispenser 40 are not a desired position and a desired attitude that allow the solder to be discharged to the solder pad (the step S116: No), the control apparatus 1000 controls the driver 111 to continue to move the robot arm 110, on the basis of the position and the attitude of the solder pad outputted from the 2D tracking unit 302 at intervals of predetermined times, such that the dispenser 40 is brought close to the solder pad. On the other hand, when it is determined that the position and the attitude of the dispenser 40 are a desired position and a desired attitude that allow the solder to be discharged to the solder pad (the step S116: Yes), the control apparatus 1000 controls the dispenser 40 such that the solder is disposed in at least a part of the solder pad (step S117). Specifically, for example, the control apparatus 1000 controls the dispenser 40 to discharge the solder. Here, the control apparatus 1000 may estimate the area of the solder pad and may control the amount of the solder discharged from the dispenser 40 in accordance with the area of the solder pad, on the basis of the position and the attitude of the solder pad outputted from the 2D tracking unit 302 at intervals of predetermined times. In this case, the control apparatus 1000 may control the dispenser 40 such that the amount of the solder discharged increases as the estimated area of the solder pad increases. This allows an appropriate amount of the solder to be disposed on the solder pad.

At this time, for example, due to vibrations or the like of the robot arm 110, a relative position between the dispenser 40 and the construction target object may be changed. Therefore, for example, the position of the solder pad as the target object in the image indicated by the image data, which are successively outputted from the detection apparatus 130, may also be displaced with time due to the change in the relative position.

Therefore, the control apparatus 1000 controls at least one of the position and the attitude of the dispenser 40 on the basis of the result of the tracking process, in order to reduce or eliminate an influence of the change in the relative position on the step S117.

For example, the control apparatus 1000 may control the driver 111 such that the solder discharged from the dispenser 40 that is displaced with the displacement of at least one of the detection apparatuses 120 and 130 is disposed on the solder pad as the target object, on the basis of the at least one of the image data and the shape data that are changed in accordance with the displacement of at least one of the detection apparatuses 120 and 130.

For example, the control apparatus 1000 may control the driver 111 to stop the driving of the driver 111. The control apparatus 1000 may control the driver 111 such that the solder discharged from the dispenser 40 that is displaced with at least one of the detection apparatuses 120 and 130 is disposed on the solder pad as the target object, on the basis of at least one of the image data and the shape data that are changed in accordance with the displacement of at least one of the detection apparatuses 120 and 130 after the driving of the driver 111 is stopped.

In the steps S111 to S117, the control apparatus 1000 may control the driver 111 of the robot arm 110 such that the dispenser 40 and the detection apparatuses 120 and 130 are brought close to the circuit board T, on the basis of at least one of the image data and the shape data generated by at least one of the detection apparatuses 120 and 130. When the dispenser 40 and the detection apparatuses 120 and 130 are close to the circuit board T by a predetermined distance, the control apparatus 1000 may control the driver 111 such that the solder discharged from the dispenser 40 that is displaced with at least one of the detection apparatuses 120 and 130 is disposed on the solder pad as the target object, on the basis of the at least one of the data that are changed in accordance with the displacement of at least one of the detection apparatuses 120 and 130.

After the step S117, the control apparatus 1000 starts to move the dispenser 40 to the secondly mounted solder pad, on the basis of the position and the attitude of the secondly mounted solder pad calculated in the step S111 and the position and the attitude of the firstly mounted solder pad outputted from the 2D tracking unit 302 at intervals of predetermined times in the step S 117 or the step S116, and repeats the steps S 113 to S117. When starting to move the dispenser 40 to the secondly mounted solder pad, the control apparatus 1000 may perform the step S111 before the steps S113 to S117. The control apparatus 1000 repeats the steps described above until the disposition of the solder onto the solder pad on the circuit board T is ended.

When there is only one solder pad on the circuit board T, the control apparatus 1000 may control the driver 111 or the like such that the robot arm 110 or the like is in the initial attitude determined in advance, after the step S117.

The control apparatus 1000 may display, on a not-illustrated display apparatus, at least one of information about the order of mounting on each solder pad, information about the position and the attitude of each solder pad, and informations about the position and the attitude of the circuit board T, and the image data and the shape data used in the steps 5111 to S117.

When the solder can be disposed on the solder pad, the control apparatus 1000 may not perform the step S 111 and the step S113, or the step S115 and the step S 116.

The control apparatus 1000 may detect (calculate) the area of the solder pad, on the basis of at least one of the image data and the shape data outputted from the detection apparatuses 120 and 130, in the steps S115 to S117.

After the step S117, the control apparatus 1000 may detect the status of the solder disposed on the solder pad, on the basis of the matching process and at least one of the image data and the shape data outputted from at least one of the detection apparatuses 120 and 130. As the detected status of the solder, the distance between the solder and the solder pad, the shape of the solder, the volume of the solder, the position and the attitude of the solder, and the like are exemplified. The control apparatus 1000 may determine the quality of the solder, on the basis of the detected status of the solder.

For example, when detecting the distance between the solder and the solder pad, the control apparatus 1000 recognizes the solder and the solder pad in the image indicated by the image data, and detects the distance between the solder and the solder pad, on the basis of the image data outputted from at least one of the detection apparatuses 120 and 130. For example, the control apparatus 1000 may determine whether or not the arrangement position of the solder is good, on the basis of the detected distance between the solder and the solder pad. For example, when the detected distance between the solder and the solder pad is greater than or equal to a predetermined threshold (e.g., in a condition in which the solder is not disposed on the solder pad), the control apparatus 1000 may determine that the arrangement position of the solder is defective. Furthermore, for example, when detecting the shape of the solder, the control apparatus 1000 recognizes the solder in the point cloud indicated by the shape data, and detects the shape of the solder, on the basis of the shape data outputted from at least one of the detection apparatuses 120 and 130. For example, the control apparatus 1000 may determine whether or not the shape of the solder is good, on the basis of the detected shape of the solder. For example, when a difference between the detected shape of the solder and a desired shape is greater than or equal to a threshold, the control apparatus 1000 may determine that the shape of the solder is defective. Furthermore, for example, when detecting the volume of the solder, the control apparatus 1000 may estimate the volume of the solder by an existing method, on the basis of the shape of the solder detected by the above-described method. For example, the control apparatus 1000 may determine whether or not the volume of the solder is good, on the basis of the estimated volume of the solder. For example, when the detected volume of the solder is out of a threshold (e.g., in a condition in which the volume of the solder is too large or too small), the control apparatus 1000 may determine that the volume of the solder is defective. Furthermore, for example, when detecting the position and the attitude of the solder, the control apparatus 1000 recognizes the solder in the point cloud indicated by the shape data, and detects the position and the attitude of the solder, on the basis of the shape data outputted from at least one of the detection apparatuses 120 and 130. For example, the control apparatus 1000 may determine whether or not the shape of the solder is good, on the basis of the detected position and attitude of the solder. For example, when at least one of the detected position and attitude of the solder is out of a threshold, the control apparatus 1000 may determine that the position and the attitude of the solder are defective.

The control apparatus 1000 may perform the machine learning in an existing method, by using, as teacher data, the data that are obtained by associating the quality of the solder detected as described above with at least one of informations about the image data and the shape data used in the steps S111 to S117. In this case, the control apparatus 1000 may use a result of the machine learning for the control of each apparatus of the robot 1 (e.g., a control of the position and the attitude of the dispenser 40, a control of the discharge of the dispenser 40). The control apparatus 1000 may use the result of the machine learning for at least one of the control of each apparatus of the robot 2 and the control of each apparatus of the robot 3.

Furthermore, the control apparatus 1000 may use informations about the area of the solder pad and the status of the solder (at least one of informations about the distance between the solder and the solder pad, the shape of the solder, the volume of the solder, and the position and the attitude of the solder) detected as described above, for a control of the position and the attitude of the holding apparatus 50 by the robot arm 210 of the robot 2. In this case, it is possible to efficiently dispose the element held by the holding apparatus 50, on the solder.

Furthermore, the control apparatus 1000 may use informations about the area of the solder pad and the status of the solder (at least one of informations about the distance between the solder and the solder pad, the shape of the solder, the volume of the solder, and the position and the attitude of the solder) detected as described above, for at least one of the control of the Galvano mirror 61 and the control of the position and the attitude of the light irradiation apparatus 60 by the robot arm 310 of the robot 3. In this case, it is possible to efficiently apply the processing light L to the spot to be irradiated with the processing light L on the circuit board T (e.g., the disposed element, the disposed solder and solder pad, etc.) by using the light irradiation apparatus 60.

Furthermore, the control apparatus 1000 may use at least one of informations about the area of the solder pad and the status of the solder (at least one of informations about the distance between the solder and the solder pad, the shape of the solder, the volume of the solder, and the position and the attitude of the solder) detected as described above, for a control of the condition of the processing light L applied from the light irradiation apparatus 60 by the robot arm 310 of the robot 3 (e.g., at least one of the intensity of the processing light L, the spot size of the processing light L, the irradiation time of the processing light L, the irradiation range of the processing light L). The irradiation range of the processing light L includes, for example, at least a part of the solder pad, the solder, and the element, as the spot to be irradiated with the processing light L. Here, at least one of informations about the area of the solder pad and the status of the solder (at least one of informations about the distance between the solder and the solder pad, the shape of the solder, the volume of the solder, and the position and the attitude of the solder) may be referred to as information about the status of the spot to be irradiated with the processing light L. For example, the control apparatus 1000 may determine the condition of the processing light L, on the basis of information about the detected status of the spot to be irradiated with the processing light L. As an example, the control apparatus 1000 may determine the spot size of the processing light L on the basis of the area of the solder pad. The information about the status of the spot to be irradiated with the processing light L may include not only the above information, but also informations about the solder pad, the solder, and the element, as the spot to be irradiated with the processing light that can be detected on the basis of the matching process and at least one of the image data and the shape data outputted from at least one of the detection apparatuses 120 and 130.

Furthermore, the control apparatus 1000 may use at least one of information about the order of mounting on each solder pad, information about the position and the attitude of each solder pad, and information about the position and the attitude of the circuit board T calculated in the steps S111 to S117, for at least one of a control of the holding force of the holding apparatus 50 and the control of the position and the attitude of the holding apparatus 50 by the robot arm 210 of the robot 2. In this case, it is possible to efficiently dispose the element held by the holding apparatus 50, on the solder. For example, when the above information is used for the control of the position and the attitude of the holding apparatus 50 by the robot arm 210 of the robot 2, it is possible to efficiently dispose the element gripped by the holding apparatus 50, on the solder pad (the solder), because it is possible to omit a step S121 described later performed by the control apparatus 1000.

Furthermore, the control apparatus 1000 may use at least one of information about the order of mounting on each solder pad, information about the position and the direction of each solder pad, and information about the position and the attitude of the circuit board T calculated in the steps S111 to S117, for at least one of the control of the Galvano mirror 61 and the control of the position and the attitude of the light irradiation apparatus 60 by the robot arm 310 of the robot 3. In this case, it is possible to efficiently apply the processing light L to the spot to be irradiated with the processing light L on the circuit board T by using the light irradiation apparatus 60. For example, when using the above information for the control of the position and the attitude of the light irradiation apparatus 60 by the robot arm 310 of the robot 3, it is possible to efficiently melt the solder by the processing light L on the light irradiation apparatus 60, because it is possible to omit a S131 described later performed by the control apparatus 1000.

The control apparatus 1000 may display, on a not-illustrated display apparatus, at least one of informations about the image data and the shape data used for the process of detecting the status of the solder, and a detection result of the status of the solder.

For example, the control apparatus 1000 may control the driver 111 such that the solder discharged from the dispenser 40 that is displaced with the displacement of at least one of the detection apparatuses 120 and 130 is disposed at the first position of the circuit board T and is then disposed at the second position that is different from the first position, on the basis of at least one of the image data and the shape data that are changed in accordance with the displacement of at least one of the detection apparatuses 120 and 130.

For example, the control apparatus 1000 may control the driver 111 to stop the driving of the driver 111. The control apparatus 1000 may control the driver 111 such that the solder discharged from the dispenser 40 that is displaced with the displacement of at least one of the detection apparatuses 120 and 130 is disposed at the first position of the circuit board T and is then disposed at the second position that is different from the first position, on the basis of at least one of the image data and the shape data that are changed in accordance with the displacement of at least one of the detection apparatuses 120 and 130 after the driving of the driver 111 is stopped.

### Robot 2

The control apparatus 1000 that controls the robot 2, performs steps S122 and S123 respectively corresponding to the steps S131 and S132. The control apparatus 1000 performs the steps S121 and S123 by using the output of at least one of the detection apparatuses 220 and 230 provided in the robot 2.

For example, the holding apparatus 50 includes a tweezers hand that is capable of opening and closing the tips of the tweezers. The holding apparatus 50 may include a suction apparatus that is configured to suck and hold the element.

The control apparatus 1000 may perform the calibration of the holding apparatus 50 before the following steps S121 to S129.

It is assumed that the robot arm 210 is provided with the detection apparatus 230 and the holding apparatus 50 in such a positional relationship that a tip of the holding apparatus 50 (i.e., in the case of a tweezers hand, the tips of the tweezers that are in contact with the element when holding the element) is in the field of view of each of the cameras 31 and 32 of the detection apparatus 230 having the same configuration as that of the detection apparatus 330. For convenience of explanation, the cameras are referred to as the cameras 31 and 32 of the detection apparatus 230, as an example in which the detection apparatus 230 includes the same cameras 31 and 32 as those of the detection apparatus 330.

The control apparatus 1000 performs the matching process by using the CAD data of the holding apparatus 50 and the shape data outputted from the detection apparatus 230 when the holding apparatus 50 does not grip the element, and calculates in advance the position and the attitude of the holding apparatus 50 (e.g., the position and the attitude of the tip of the tweezers hand included in the fields of view of the cameras 31 and 32 of the detection apparatus 230), as the calibration of the holding apparatus 50. That is, the control apparatus 1000 calculates in advance the position and the attitude of the holding apparatus 50 in the coordinate system of the robot arm 210, on the basis of the shape data of at least a part of the holding apparatus 50 (e.g., the tip of the tweezers hand).

The control apparatus 1000 may obtain a correlation between the coordinate system of the holding apparatus 50 and the coordinate system of the detection apparatus 230, on the basis of the shape data of at least a part of the holding apparatus 50, as the calibration of the holding apparatus 50. Then, the control apparatus 1000 may calculate the position and the attitude of the holding apparatus 50 in the coordinate system of the robot arm 110, on the basis of a correlation obtained in advance between the coordinate system of the robot arm 210 and the coordinate system of the detection apparatus 230, and the correlation between the coordinate system of the holding apparatus 50 and the coordinate system of the detection apparatus 230. The control apparatus 1000 may not calculate the position and the attitude of the holding apparatus 50 in the coordinate system of the robot arm 210 as the calibration of the holding apparatus 50, but may calculate the correlation between the coordinate system of the holding apparatus 50 and the coordinate system of the detection apparatus 230. The correlation between the coordinate system of the holding apparatus 50 and the coordinate system of the detection apparatus 230 may be a transformation matrix between the coordinate system of the holding apparatus 50 and the coordinate system of the detection apparatus 230. When performing the calibration of the holding apparatus 50, the control apparatus 1000 may control the driver 211 to move the robot arm 210, on the basis of a calibration result of the holding apparatus 50 and the position and the attitude of the target object (e.g., the element) calculated in a step S121 described later. Furthermore, the control apparatus 1000 may control the driver 211 to move the robot arm 210 in a step S123 described later, on the basis of the calibration result of the holding apparatus 50 and the position and the attitude of the target object (e.g., the circuit board T) calculated in a step S122 described later, for example. Furthermore, the control apparatus 1000 may control the driver 211 to move the robot arm 210 in a step S126 described later, on the basis of the calibration result of the holding apparatus 50 and the position and the attitude of the target object (e.g., the solder and the solder pad) calculated in a step S125 described later, for example. The calibration result of the holding apparatus 50 may be, for example, the position and the attitude of the holding apparatus 50 in the coordinate system of the robot arm 210, or may be the correlation between the coordinate system of the holding apparatus 50 and the coordinate system of the detection apparatus 230.

As described above, the robot control unit 100 may not be a part of the control apparatus 1000, and may be configured separately from the control apparatus 1000. In this case, the control apparatus 1000 may generate a control signal for controlling the robot arm 210 (the driver 211), on the basis of the calibration result of the holding apparatus 50 and the calculated position and attitude of the target object. The control apparatus 1000 may output the generated control signal to the robot control unit 100. The robot control unit 100 may generate a drive signal for driving the driver 211, on the basis of the control signal outputted from the control apparatus 1000. The robot control unit 100 may drive the driver 211 on the basis of the generated drive signal.

The marker may be provided in a part of the holding apparatus 50 included in the field of view of each of the cameras 31 and 32 of the detection apparatus 230. In this case, the control apparatus 1000 may perform the calibration on the basis of the shape data including the marker outputted from the detection apparatus 230, for example.

The control apparatus 1000 may perform the matching process by using not only the shape data, but also the image data outputted from the detection apparatus 130 and the CAD data of the holding apparatus 50, thereby to perform the calibration of the holding apparatus 50. The control apparatus 1000 may use not only the CAD data, but also the image data and the shape data of the holding apparatus 50 obtained in advance, in the matching process, as described above.

As the calibration result of the holding apparatus 50, the control apparatus 1000 may use not only the detection apparatus 230, but also may use the image data and the shape data outputted from the detection apparatus 220. In this case, the assumption is that the robot arm 210 is provided with the detection apparatus 220 and the holding apparatus 50 in such a positional relationship that a part of the holding apparatus 50 is in the field of view of each of the cameras 21 and 22 of the detection apparatus 220 having the same configuration as that of the detection apparatus 320.

In the following steps S121 to S129, the position and the attitude of the holding apparatus 50 with respect to the detection apparatus 230 may be changed in some cases because the holding apparatus 50 is brought into contact with a predetermined object or for similar reasons. In this case, the control apparatus 1000 may detect a change in the position and the attitude of the holding apparatus 50 with respect to the detection apparatus 230, on the basis of a change in a part of the holding apparatus 50 (e.g., a change in a part of the holding apparatus 50 on the image) in the image data and the shape data outputted from the detection apparatus 230. When detecting the change in the position and the attitude of the holding apparatus 50 with respect to the detection apparatus 230, the control apparatus 1000 may perform the calibration.

The control apparatus 1000 that controls the robot 2, holds the element (step S121). The control apparatus 1000 controls the driver 211 of the robot arm 210 and the holding apparatus 50 such that a desired element is held by the holding apparatus 50, by bringing the holding apparatus 50 of the robot 2 close to a not-illustrated element supply apparatus (a so-called part feeder) to hold the desired element. For example, the control apparatus 1000 performs at least one of the matching process and the tracking process, calculates the position and the attitude of the desired element disposed on the not-illustrated element supply apparatus, and then allows the holding apparatus 50 to hold the desired element by bringing the holding apparatus 50 close to the desired element disposed in the not-illustrated element supply apparatus to hold the element. Here, the control apparatus 1000 may determine the force of holding (the force of gripping) the element in the holding apparatus 50, in accordance with a size of the element calculated by at least one of the matching process and the tracking process. This makes it possible to prevent the element from falling off the holding apparatus 50 or from damaging, due to the holding of the element by the holding apparatus 50.

After the step S121, the control apparatus 1000 calculates the position and the attitude of the circuit board T as an example of the target object (step S122). As in the step S111 and the step S131, in the step S122, the control apparatus 1000 calculates the position and the attitude at the initial stage (i.e., the initial position and attitude) of the circuit board T by the matching process of the matching unit 301. Furthermore, the control apparatus 1000 calculates the position of each solder pad formed on the circuit board T. The control apparatus 1000 calculates the position of each solder pad on the circuit board T, on the basis of the Gerber data of the circuit board T (i.e., the design data of the circuit board T). The control apparatus 1000 specifies the order of mounting (here, disposing the element) on each solder pad, on the basis of the Gerber data.

Then, the control apparatus 1000 controls the driver 211 to move the robot arm 210 such that the holding apparatus 50 (the detection apparatuses 220 and 230) is brought close to the circuit board T (step 123). As in the step S112 and the step S132, in the step S123, the control apparatus 1000 controls the driver 211 of the robot arm 210 such that the firstly mounted solder pad is in the field of view of at least one of the detection apparatus 220 and the detection apparatus 230.

Then, the control apparatus 1000 determines whether or not the marker provided in the vicinity of the firstly mounted solder pad is in the field of view of at least one of the detection apparatus 220 and the detection apparatus 230 (step S124). As in the step S113 and step S133, in the step S124, the control apparatus 1000 determines whether or not the detection apparatus 220 and the detection apparatus 230 are in a desired position and attitude with respect to the firstly mounted solder pad, on the basis of information about the position and the attitude of the circuit board T outputted from the 2D tracking unit 302 at intervals of predetermined times and information about the position and the attitude of the firstly mounted solder pad calculated in the step S121. At this time, when the detection apparatus 220 and the detection apparatus 230 are in a desired position and attitude with respect to the firstly mounted solder pad, the control apparatus 1000 determines that the marker provided in the vicinity of the solder pad is in the field of view of at least one of the detection apparatus 220 and the detection apparatus 230.

In the step S124, when it is determined that the marker provided in the vicinity of the firstly mounted solder pad is not in the field of view of at least one of the detection apparatus 220 and the detection apparatus 230 (the step S124: No), the control apparatus 1000 controls the driver 211 to continue to move the robot arm 210, on the basis of information about the position and the attitude of the firstly mounted solder pad calculated in the step S122 and information about the position and the attitude of the circuit board T outputted from the 2D tracking unit 302 at intervals of predetermined times.

On the other hand, in the step S124, when it is determined that the marker provided in the vicinity of the firstly mounted solder pad is in the field of view of at least one of the detection apparatus 220 and the detection apparatus 230 (the step S124: Yes), the control apparatus 1000 calculates the position and the attitude of the marker provided in the vicinity of the firstly mounted solder pad (step S125). As in the step S114 and the step S134, in the step S125, the control apparatus 1000 calculates the position and the attitude at the initial stage (the initial position and attitude) of the marker provided in the vicinity of the solder pad firstly mounted by the matching process of the matching unit 301.

Then, the control apparatus 1000 controls the driver 211 to move the robot arm 210 such that the position and the attitude of the holding apparatus 50 are a desired position and a desired attitude that allow the element to be disposed on the solder disposed on the firstly mounted solder pad (step S126). As in the step S115 and the step S135, in the step S126, the control apparatus 1000 controls the driver 211 to move the robot arm 210, on the basis of a positional relationship between the marker and the solder pad, and information about the position and the attitude of the marker disposed in the vicinity of the solder pad outputted from the 2D tracking unit 302 at intervals of predetermined times, by using information about the initial position and attitude of the marker disposed in the vicinity of the solder pad calculated in the step S125. The positional relationship between the marker and the solder pad is known.

In other words, the control apparatus 1000 controls the driver 211 to move the robot arm 210 such that the holding apparatus 50 (the detection apparatuses 220 and 230) is brought close to the solder pad (the solder disposed on the solder pad) firstly mounted on the circuitry board T. The control apparatus 1000 may control the driver 211to move the robot arm 210., on the basis of information about the distance between the solder and the solder pad detected after the solder is disposed on the solder pad by the dispenser 40 of the robot 1. In this case, it is possible to bring the holding apparatus 50 close to the solder pad (the solder disposed on the solder pad), more accurately (more efficiently).

Then, the control apparatus 1000 determines whether or not the position and the attitude of the holding apparatus 50 are a desired position and a desired attitude that allow the element to be disposed on the solder disposed on the first solder pad (step S127). As in the step S116 and the step S136, in the step S127, the control apparatus 1000 determines whether or not the position and the attitude of the holding apparatus 50 with respect to the solder pad (the solder disposed on the solder pad) are a desired position and a desired attitude, on the basis of the positional relationship between the marker and the solder pad, and information about the position and the attitude of the marker disposed in the vicinity of the firstly mounted solder pad outputted from the 2D tracking unit 302 at intervals of predetermined times, for example.

In the step S127, when it is determined that the position and the attitude of the holding apparatus 50 are not a desired position and a desired attitude that allow the element to be disposed on the solder disposed on the firstly mounted solder pad (the step S127: No), the control apparatus 1000 controls the driver 211 to continue to move the robot arm 210, on the basis of the position and the attitude of the solder pad (the solder) outputted from the 2D tracking unit 302 at intervals of predetermined times such that the holding apparatus 50 is brought close to the solder pad (the solder).

On the other hand, when it is determined that the position and the attitude of the holding apparatus 50 are a desired position and a desired attitude that allow the element to be disposed on the solder pad (the solder) (the step S127: Yes), the control apparatus 1000 calculates the position and the attitude of the element held by the holding apparatus 50 (step S128).

It is assumed, as described above, that the tip of the retaining apparatus 50 (i.e., in the case of a tweezers hand, the tips of the tweezers that are in contact with the element when holding the element) is in the field of view of each of the cameras 31 and 32 of the detection apparatus 230. Furthermore, the detection apparatus 230 is provided at a desired position on the robot arm 210 such that at least a part of the element held by the holding apparatus 50 is also in the field of view of each of the cameras 31 and 32.

The control apparatus 1000 performs the CAD matching process by using the CAD data of the element and the shape data outputted from the detection apparatus 230 while the holding apparatus 50 holds the element (i.e., data including the shape data of at least a part of the element and the tip of the holding apparatus 50), thereby to calculate the position and the attitude of the element, for example. The position and the attitude of the element held by the holding apparatus 50 change at each time that the element is held by the holding apparatus 50, even if the element is of the same type (i.e., the same shape). Therefore, since the control apparatus 1000 is allowed to recognize the position and the attitude of the element by performing this step S125, it is possible to dispose the element on the firstly mounted solder pad (solder) with high accuracy in a step S129 described later.

The control apparatus 1000 may perform the CAD matching that uses the CAD data of the element, thereby to calculate the position and the attitude of the element, after recognizing the shape data of the tip of the holding apparatus 50 by the CAD matching process or the like from among the shape data outputted from the detection processing 230 while the holding apparatus 50 holds the element, and after performing a process of removing the shape data of the tip of the holding apparatus 50 from the shape data outputted from the detection apparatus 230, for example. In this case, it is possible to prevent that the calculation accuracy of the position and the attitude of the element is lowered because the shape data of the tip of the holding apparatus 50 become noise in the process of calculating the position and the attitude of the element.

The control apparatus 1000 may perform the CAD matching process using CAD data of the element, thereby to calculate the position and the attitude of the element, after removing the shape data of the tip of the holding apparatus 50 calculated by the matching process in the calibration of the holding apparatus 50, from the shape data outputted from the shape data outputted from the detection apparatus 230 while the holding apparatus 50 holds the element, for example. Even in this case, it is possible to prevent that the calculation accuracy of the position and direction the attitude of the element is lowered.

For the calibration of the holding apparatus 50 described above, the robot arm 210 is provided with the detection apparatus 230 such that the tip of the holding apparatus 50 is in the field of view of each of the cameras 31 and 32 of the detection apparatus 230; however, when the calibration of the holding apparatus 50 is not performed, the robot arm 210 may be provided with the detection apparatus 230 such that the holding apparatus 50 is not included in and at least a part of the element held by the holding apparatus 50 is in the field of view of each of the cameras 31 and 32 of the detection apparatus 230.

After the step S128, the control apparatus 1000 controls the holding apparatus 50 such that the element is disposed on the firstly mounted solder pads (the solder) (step S129). The control apparatus 1000 controls the driver 211 of the robot arm 210 such that the position and the attitude of the element held by the holding apparatus 50 are a desired position and a desired attitude that allow the element to be disposed on the solder pad (the solder), on the basis of the position and the attitude of the solder pad (the solder) outputted from the 2D tracking unit 302 at intervals of predetermined times, and the position and the attitude of the element held by the holding apparatus 50 calculated in the step S128. Then, the control apparatus 1000 controls the holding apparatus 50 to dispose the element on the solder pad (the solder) such that the holding of the element is released.

At this time, as in the step S117, for example, due to vibrations or the like of the robot arm 210, a relative position between the holding apparatus 50 and the solder pad (the solder) as the target object may be changed. Therefore, the control apparatus 1000 controls at least one of the position and the attitude of the holding apparatus 50 on the basis of the result of the tracking process, in order to reduce or eliminate an influence of the change in the relative position on the step S129.

For example, the control apparatus 1000 may control the driver 211 such that element gripped by the retaining apparatus 50 that is displaced with displacement of at least one of the detection apparatuses 220 and 230 is disposed on solder pad (the solder), on the basis of at least one of the image data and the shape data that are changed in accordance with the displacement of at least one of the detection apparatuses 220 and 230.

For example, the control apparatus 1000 may control the driver 211 to stop the driving of the driver 211. The control apparatus 1000 may control the driver 211 such that the element gripped by apparatus 50 that is displaced with at least one of the detection apparatuses 220 and 230 is disposed on the solder pad (the solder), on the basis of at least one of the image data and the shape data that are changed in accordance with the displacement of at least one of the detection apparatuses 220 and 230 after the driving of the driver 211 is stopped.

In the step S121 to S129, the control apparatus 1000 controls the driver 211 of the robot arm 210 such that the holding apparatus 50 and the detection apparatuses 220 and 230 are brought close to the circuit board T, on the basis of at least one of the image data and the shape data generated by at least one of the detection apparatuses 220 and 230. When the holding apparatus 50 and the detection apparatuses 220 and 230 are close to the circuit board T by a predetermined distance, the control apparatus 1000 may control the driver 211 such that the element gripped by the holding apparatus 50 that is displaced with at least one of the detection apparatuses 220 and 230 is disposed on the solder pad (the solder) as the target object, on the basis of the at least one of the data that are changed in accordance with the displacement of at least one of the detection apparatuses 220 and 230.

After the step S129, the control apparatus 1000 drives the driver 211 of the robot arm 210 such that the holding apparatus 50 is brought close to a not-illustrated element supply apparatus, thereby to allow picking of the element to be disposed on the secondly mounted solder pad (solder). Then, the control apparatus 1000 repeats the steps S122 to S129. The control apparatus 1000 repeats the steps described above and the picking of the element until the disposition of the element onto the solder on each solder pad on the circuit board T is ended.

When there is only one solder pad on the circuit board T (one element to be disposed on the solder), the control apparatus 1000 may control the driver 211 or the like such that the robot arm 210 or the like is in the initial attitude determined in advance, after the step S129.

The control apparatus 1000 may perform the step S128 before the step S 127. The control apparatus 1000 may not perform the step S128. In this case, the control apparatus 1000 may control the holding apparatus 50 such that the element is disposed on the firstly mounted solder pad (solder) next to the step S127 (to be exact, the step S127: Yes).

The control apparatus 1000 may display, on a not-illustrated display apparatus, at least one of information about the order of mounting on each solder pad, information about the position and the attitude of each solder pad, information about the position and the attitude of the marker, and informations about the position and the attitude of the circuit board T, and the image data and the shape data used in the steps S122 to S129.

When the element can be disposed on the solder on the solder pad, the control apparatus 1000 may not perform the step S122 and the step S124, or the step S126 and the step S127.

After the step S 129, the control apparatus 1000 may detect a status of the element disposed on the solder on the solder pad, on the basis of the matching process and at least one of the image data and the shape data outputted from at least one of the detection apparatuses 220 and 230. As the detected status of the element, the position and the attitude of the element, a distance between the element and the solder, a distance between the element and the solder pad, and the like are exemplified. Then, the control apparatus 1000 may determine the quality of the disposed element on the basis of the detected status of the element.

For example, when detecting the position and the attitude of the element, the control apparatus 1000 calculates the position and the attitude of the element on the basis of the matching process described above. For example, the control apparatus 1000 may determine whether or not the arrangement position of the element is good, on the basis of the detected position and attitude of the element. For example, the control apparatus 1000 may determine that the arrangement position of the element is defective when at least one of the detected position and attitude of the element is out of a predetermined threshold.

For example, when detecting the distance between the element and the solder, the control apparatus 1000 recognizes the solder and the element in the point cloud indicated by the shape data and calculates the distance between the element and the solder, on the basis of the shape data outputted from at least one of the detection apparatuses 220 and 230. For example, the control apparatus 1000 may determine whether the arrangement position of the element is good, on the basis of the detected distance between the element and the solder. For example, the control apparatus 1000 may determine that the arrangement position of the element is defective when the detected distance between the element and the solder is greater than or equal to a predetermined threshold (e.g., in a condition in which the element is not disposed on the solder).

For example, when detecting the distance between the element and the solder pad, the control apparatus 1000 recognizes the solder pad and the element in the image indicated by the image data and calculates the distance between the element and the solder pad, on the basis of the image data outputted from at least one of the detection apparatuses 220 and 230. For example, the control apparatus 1000 may determine whether the arrangement position of the element is good, on the basis of the detected distance between the element and the solder pad. For example, the control apparatus 1000 may determine that the arrangement position of the element is defective when the detected distance between the element and the solder pad is greater than or equal to a predetermined threshold (e.g., in a condition in which the element is not disposed on the solder pad).

The control apparatus 1000 may perform the machine learning in an existing method, by using, as teacher data, the data that are obtained by associating the quality of the element determined as described above with at least one of informations about the image data and the shape data used in the steps S122 to S128. In this case, the control apparatus 1000 may use a result of the machine learning for the control of each apparatus of the robot 2 (e.g., the control of the position and the attitude of the holding apparatus 50 or a control of the holding of the holding apparatus 50). The control apparatus 1000 may use the result of the machine learning for at least one of the control of each apparatus of the robot 1 and the control of each apparatus of the robot 3.

Furthermore, the control apparatus 1000 may use at least one of informations about the distance between the element and the solder pad, the distance between the element and the solder, and the position and the attitude of the element, which are detected as described above, for at least one of controls of the change in the intensity and the spot size of the processing light L, the control of the Galvano mirror 61 of the light irradiation apparatus 60, the control of the position and the attitude of the light irradiation apparatus 60 by the robot arm 310 of the robot 3. In this case, it is possible to efficiently apply the processing light L to the spot to be irradiated with the processing light L on the circuit board T (e.g., the disposed element, the disposed solder and solder pad, etc.) by using the light irradiation apparatus 60. The control apparatus 1000 may use at least one of informations about the distance between the element and the solder pad, the distance between the element and the solder, and the position and the attitude of the element, which are detected as described above, for the control of the position and the attitude of the dispenser 40 by the robot arm 110 of the robot 1.

The control apparatus 1000 may detect at least one of the area of the solder pad and the status of the solder (at least one of infomations about the distance between the solder pad and the solder, the shape of the solder, the volume of the solder, and the position and the attitude of the solder), on the basis of at least one of the image data and the shape data outputted from the detection apparatuses 120 and 130 in the steps S122 to S129. That is, the control apparatus 1000 may detect information about the status of the spot to be irradiated with the processing light L. Then, the control apparatus 1000 may use the information about the status of the spot to be irradiated with the processing light L, detected as described above, to control the condition of the processing light L to be applied from the light irradiation apparatus 60 by the robot arm 310 of the robot 3 (e.g., at least one of the intensity of the processing light L, the spot size of the processing light L, the irradiation time of the processing light L, and the irradiation range of the processing light L). That is, the control apparatus 1000 may determine the condition of the processing light L on the basis of the detected information about the status of the spot to be irradiated with the processing light L. The information about the status of the spot to be irradiated with the processing light L may include not only the above information but also information about the solder pad, the solder, and the element as the spot to be irradiated with the processing light L that can be detected on the basis of the matching process and at least one of the image data and the shape data outputted from at least one of the detection apparatuses 220 and 230.

Furthermore, the control apparatus 1000 may use at least one of information about the position and the attitude of the solder pad (the solder), information about the position and the attitude of the marker, information about the order of mounting on each solder pad, information about the position and the attitude of the circuit board T calculated in the steps S122 to S129, for at least one of the control of the change in the intensity and the spot size of the processing light L, the control of the Galvano mirror 61, and the control of the position and the attitude of the light irradiation apparatus 60 by the robot arm 310 of the robot 3. In this case, it is possible to efficiently apply the processing light L to the spot to be irradiated with the processing light L on the circuit board T by using the light irradiation apparatus 60. The control apparatus 1000 may use at least one of information about the position and the attitude of the solder pad (solder) and information about the position and the attitude of the circuit board T, which are detected as described above, for the control of the position and the attitude of the dispenser 40 by the robot arm 110 of the robot 1.

The control apparatus 1000 may display, on a not-illustrated display apparatus, at least one of informations about the image data and the shape data used for the process of detecting the status of the element, and a detection result of the status of the element.

For example, the control apparatus 1000 may control the driver 211 such that one element gripped by the holding apparatus 50 that is displaced with the displacement of at least one of the detection apparatuses 220 and 230 is disposed at the first position of the circuit board T and another element gripped by the holding apparatus 50 is then disposed at the second position that is different from the first position, on the basis of at least one of the image data and the shape data that are changed in accordance with the displacement of at least one of the detection apparatuses 220 and 230.

For example, the control apparatus 1000 may control the driver 211 to stop the driving of the driver 211. The control apparatus 1000 may control the driver 211 such that one element gripped by the holding apparatus 50 that is displaced with the displacement of at least one of the detection apparatuses 220 and 230 is disposed at the first position of the circuit board T and another element gripped by the holding apparatus 50 is the disposed at the second position that is different from the first position, on the basis of at least one of the image data and the shape data that are changed in accordance with the displacement of at least one of the detection apparatuses 220 and 230 after the driving of the driver 211 is stopped.

The steps S111 to S117, the steps S121 to S129, and the steps S131 to S138 are repeated at the same time and in parallel.

The control apparatus 1000 may perform the machine learning in an existing method, by using, as teacher data, the data that are obtained by associating at least one of informations about the quality of the element determined as described above, the quality of the solder determined as described above, and the quality of the soldering determined in the step S138, with at least one of information about the image data and the shape data used in at least one of the steps S121 to S129, the steps S111 to S117, and the steps S131 to S138. In this case, the control apparatus 1000 may use a result of machine learning for at least one of the control of each apparatus of the robot 1, the control of each apparatus of the robot 2, and the control of each apparatus of the robot 3.

### (Technical effect)

A known technique/technology of mounting an element on a surface of a circuit board of a three-dimensional shape (i.e., a 3D circuit board) is LDS (Lase Direct Structuring) and SMT (Surface Mount Technology). In the LDS, however, it is necessary to use a special molding material (resin) having a heat resistance. It is also required to place the 3D circuit board inside a mounting machine (chip mounter) and a reflow oven or the like. Therefore, the LDS or the like can be applied only to a product that is relatively high in unit price and that is relatively small in size.

For this reason, a relatively large product often uses a technique/technology of connecting a child substrate to a parent substrate with a cable, for example. In such a technique/technology, for example, a product is relatively heavy due to the weight of the cable, or manpower is required in assembling wiring components. Meanwhile, for example, in the field of automotive, a technique/technology of mounting an element on a relatively large 3D substrate is required from the viewpoint of space constraints, weight constraints, or the like.

For the relatively large 3D board, it is desirable that a relatively inexpensive substrate material is used from the viewpoint of reducing a cost. Since the relatively inexpensive substrate material has a relatively low heat resistance, laser soldering that allows a pinpoint heat input is exemplified as a technique/technology of mounting the element. It has, however, a technical problem that the 3D substrate is thermally damaged if the irradiation position of the processing light L, such as a laser light, ca not be precisely controlled.

In contrast, in the above-described robot 3, the direction of the Galvano mirror 61 or the like is controlled such that the irradiation position of the processing light L is maintained at the same position even if the positional relationship between the target object (e.g., the solder pad, the element, and the solder) and the light irradiation apparatus 60 or the like is displaced, on the basis of at least one of the image data and the shape data outputted from the detection apparatus 330. That is, according to the robot 3, it is possible to precisely control the irradiation position of the processing light L.

In the soldering by the robot 3, it is possible to increase options of the substrate material because it is possible to prevent the thermal damage to the substrate. That is, in the soldering by the robot 3, it is possible to use the relatively inexpensive substrate material.

According to the robot 3, it is possible to apply the processing light L to a desired position by changing the irradiation position of the processing light L by the Galvano mirror 61, while moving the light irradiation apparatus 60 or the like by the robot arm 310 (i.e., during movement of the light irradiation apparatus 60 or the like). Therefore, it is possible to efficiently mount one or a plurality of elements on a relatively large substrate.

According to the robot 3, it is possible to apply the processing light L to a desired position by adjusting the irradiation position of the processing light L by the Galvano mirror 6, after moving the light irradiation apparatus 60 or the like by the robot arm 310 (in other words, when the robot arm 310 is not driven by the driver 311). Therefore, it is possible to apply the processing light L without waiting for the convergence of vibrations of the light irradiation apparatus 60 or the like moved by the robot arm 310. Furthermore, even if there is an error in the movement of the light irradiation apparatus 60 or the like by the robot arm 310, it is possible to apply the processing light L to a desired position by controlling the direction of the Galvano mirror 61 to correct the error.

According to the robots 3, it is possible to perform the quality inspection of the soldering (see the step S138) after the soldering (after the step S137) because the detection apparatuses 320 and 330 are provided. That is, according to the robot 3, it is possible to perform the quality inspection of the soldering on the spot of the soldering because the detection apparatuses 320 and 330 are provided. In other words, according to the robot 3, it is possible to perform the quality inspection of the soldering, efficiently.

In the robot 1, it is possible to recognize the position and the attitude of the target object (e.g., the solder pad) at intervals of predetermined times by the tracking process by the control apparatus 1000. As a result, the driver 111 of the robot arm 110 is controlled, and it is thus possible to dispose the solder at a desired position of the target object (in other words, a spot on which the solder is to be disposed) even if the relative position between the target object and the dispenser 40 (the detection apparatuses 120 and 130) is temporally changed (displaced).

In the robot 2, it is possible to recognize the position and the attitude of the target object (e.g., the solder disposed on the solder pad) at intervals of predetermined times by the tracking process by the control apparatus 1000. As a result, the driver 211 of the robot arm 210 is controlled, and it is thus possible to dispose the element at a desired position of the target object (in other words, a spot on which the element is to be disposed) even if the relative position between the target object and the holding apparatus 50 (the detection apparatuses 220 and 230) is temporally changed (displaced).

The robot 2 may be used not only for the above-described soldering, but also for another application. In the above-described soldering, the robot 2 holds the element by using the holding apparatus 50 and installs the held element on the target object in order to install the element to be soldered on the target object (e.g., the circuit board T), but it may hold an object that is other than the element to be soldered, by using the holding apparatus 50, and may install the held object on another object. For example, robot 2 may be used for the assembly of a plurality of objects. The robot 2 may assemble a first object and a second object by holding the first object by using the holding apparatus 50 and installing the held first object on the target object (the second object). Even in this case, as in the soldering, the control apparatus 1000 may control the robot 2 (the driver 211 of the robot arm 210) to hold the first object and to install the held first object on the target object (the second object), on the basis of at least one of the image data and the shape data from at least one of the detection apparatuses 220 and 230 of the robot 2. It can be said that the first object is the target object because it is subject to the holding by the holding apparatus 50.

The first object and the second object may be objects that are fitted to each other. For example, one of the first object and the second object may have a convex part, and the other of the first object and the second object may have a concave part in which the convex part is fitted. One of the first object and the second object may have a first concave part and a first convex part, and the other of the first object and the second object may have a second convex part and a second concave part that are respectively fitted to the first concave part and the first convex part. For example, the first object may be a rod-shaped object, and the second object may be an object having a hole in which the rod-shaped object is fitted. For example, the first object may be a plate-like object, and the second object may be an object having a slit part in which at least a part of the plate-like object is fitted. For example, the first and second objects may be connectors that are fitted to each other. The robot 2 may hold the first object by using the holding apparatus 50 and allow the held first object to be fitted to the second object. It can be said that fitting the first object and the second object is installing the first object on the second object.

The first object and the second object may not be objects that are fitted to each other. The first object and the second object may be objects to be joined to each other. An adhesive may be applied to at least one of the first object and the second object, and the first object and the second object may be objects to be adhered via an adhesive. The robot 2 may hold the first object by using the holding apparatus 50 and joins the held first object to the second object. It can be said that joining the first object to the second object is installing the first object on the second object.

It can be also said that fitting or joining the first object to the second object is assembling the first object to the second object. The first object and the second object may not be objects in which a positional relationship between the two is fixed by installing the first object on the second object. The second object may be a tray or a box for placing the first object. The robot 2 may hold the first object by using the holding apparatus 50 and place the held first object on the second object. It can be said that placing the first object on the second object is installing the first object on the second object. The robot 2 may hold any one first object from a tray or a box in which a plurality of first objects are loaded in bulk, and may install the held first object on the second object.

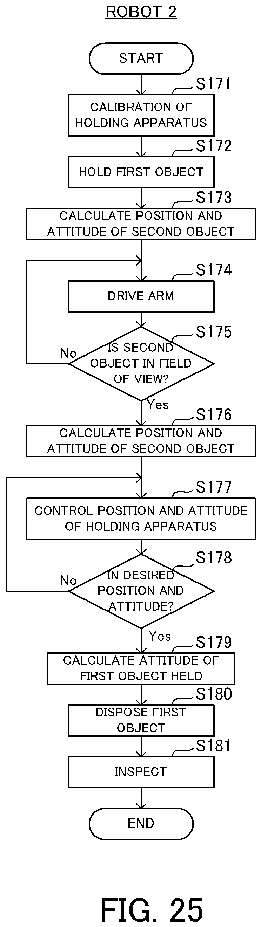

With reference to a flowchart in FIG. 25, a description is given to an operation of installing the first object on the second object by the robot 2 when fitting the first object having a convex part and the second object having a concave part in which the convex part can be fitted, as an example of installing, to the target object, an object that is different from the element to be soldered.

First, the control apparatus 1000 that controls the robot 2, performs the calibration of the holding apparatus 50 (step S171).

It is assumed that the robot arm 210 is provided with the detection apparatus 230 and the holding apparatus 50 in such a positional relationship that the tip of the holding apparatus 50 (i.e., in the case of a tweezers hand, the tips of the tweezers that are in contact with the first object when holding the first object) is in the field of view of each of the cameras 31 and 32 of the detection apparatus 230 having the same configuration as that of the detection apparatus 330. For convenience of explanation, the cameras are referred to as the cameras 31 and 32 of the detection apparatus 230, as an example in which the detection apparatus 230 includes the same cameras 31 and 32 as those of the detection apparatus 330.

The control apparatus 1000 performs the matching process by using the CAD data of the holding apparatus 50 and the shape data outputted from the detection apparatus 230 when the holding apparatus 50 does not hold the first object, and calculates in advance the position and the attitude of the holding apparatus 50 (e.g., the position and the attitude of the tip of the tweezers hand included in the fields of view of the cameras 31 and 32 of the detection apparatus 230), as the calibration of the holding apparatus 50. That is, the control apparatus 1000 calculates in advance the position and the attitude of the holding apparatus 50 in the coordinate system of the robot arm 210, on the basis of the shape data of at least a part (e.g., the tip of the tweezers hand) of the holding apparatus 50.

The control apparatus 1000 may obtain the correlation between the coordinate system of the holding apparatus 50 and the coordinate system of the detection apparatus 230, on the basis of at least a part of the holding apparatus 50 as the calibration of the holding apparatus 50. Then, the control apparatus 1000 may calculate the position and the attitude of the holding apparatus 50 in the coordinate system of the robot arm 110, on the basis of the correlation obtained in advance between the coordinate system of the robot arm 210 and the coordinate system of the detection apparatus 230, and the correlation between the coordinate system of the holding apparatus 50 and the coordinate system of the detection apparatus 230. The control apparatus 1000 may not calculate the position and the attitude of the holding apparatus 50 in the coordinate system of the robot arm 210 as the calibration of the holding apparatus 50, but may calculate the correlation between the coordinate system of the holding apparatus 50 and the coordinate system of the detection apparatus 230.

The marker may be provided in a part of the holding apparatus 50 included in the field of view of each of the cameras 31 and 32 of the detection apparatus 230. In this case, the control apparatus 1000 may perform the calibration on the basis of the shape data including the marker outputted from the detection apparatus 230, for example.

The control apparatus 1000 may perform the matching process by using not only the shape data, but also the image data outputted from the detection apparatus 230 and the CAD data of the holding apparatus 50, thereby to perform the calibration of the holding apparatus 50. The control apparatus 1000 may use not only the CAD data, but also the image data and the shape data of the holding apparatus 50 obtained in advance, as described above, in the matching process.

As the calibration of the holding apparatus 50, the control apparatus 1000 may use not only the detection apparatus 230, but also may use the image data and the shape data outputted from the detection apparatus 220. In this case, the assumption is that the robot arm 210 is provided with the detection apparatus 220 and the holding apparatus 50 in such a positional relationship that the tip of the holding apparatus 50 is in the field of view of each of the cameras 21 and 22 of the detection apparatus 220 having the same configuration as that of the detection apparatus 320.

Then, the control apparatus 1000 controls the holding apparatus 50 and the driver 211 of the robot arm 210 such that the holding apparatus 50 holds the first object (step S172).

The control apparatus 1000 controls the holding apparatus 50 and the driver 211 of the robot arm 210 such that a desired first object is by using the holding apparatus 50, by bringing the holding apparatus 50 of the robot 2 close to a not-illustrated tray such that the desired first object can be held from the not-illustrated tray in which at least one first object is disposed. For example, the control apparatus 1000 calculates the position and the attitude of the desired first object disposed in the not-illustrated tray by performing at least one of the matching process and the tracking process. The control apparatus 1000 brings the holding apparatus 50 close to the desired first object disposed in the not-illustrated tray and holds the desired first object by using the holding apparatus 50 such that the desired first object can be held, on the basis of the calibration result of the holding apparatus 50 performed in the step S171, and the calculated position and attitude of the desired first object. In the step S172, it can be said that the first object is the target object because it is subject to the holding by the holding apparatus 50. The calibration result of the holding apparatus 50 may be the position and the attitude of the holding apparatus 50 in the coordinate system of the robot arm 210, or the correlation between the coordinate system of the holding apparatus 50 and the coordinate system of the detection apparatus 230, as described above. The control apparatus 1000 may determine the force of holding (the force of gripping) the first object in the holding apparatus 50 in accordance with a size of the desired first object calculated by at least one of the matching process and the tracking process. This makes it possible to prevent the first object from falling off the holding apparatus 50 or from damaging, due to the holding of the first object by the holding apparatus 50.

After the step S172, the control apparatus 1000 calculates the position and the attitude of the second object as the target object (step S173). The control apparatus 1000 calculates the position and the attitude at the initial stage (i.e., the initial position and attitude) of the second object by the matching process of the matching unit 301.

Then, the control apparatus 1000 controls the driver 211 to move the robot arm 210 such that the holding apparatus 50 (the detection apparatuses 220 and 230) is brought close to the second object (step S174). The control apparatus 1000 controls the driver 211 of the robot arm 210 such that the holding apparatus 50 (the detection apparatuses 220 and 230) is brought close to the second object and the concave part of the second object is in the field of view of at least one of the detection apparatus 220 and the detection apparatus 230, on the basis of informations about the position and the attitude of the concave part of the second object (i.e., design data of the second object), and the position and the attitude of the second object calculated by the step S173. The control apparatus 1000 may use the result of the calibration of the holding apparatus 50 performed in the step S171, to control the driver 211 of the robot arm 210 in step S174.

Then, the control apparatus 1000 determines whether or not the concave part of the second object is in the field of view of at least one of the detection apparatus 220 and the detection apparatus 230 (step S175). The control apparatus 1000 determines whether or not the detection apparatus 220 and the detection apparatus 230 are in a desired position and a desired attitude with respect to the concave part of the second object, on the basis of information about the position of the concave part of the second object, and information about the position and the attitude of the second object outputted from the 2D tracking unit 302 at intervals of predetermined times. At this time, when the detection apparatus 220 and the detection apparatus 230 are in a desired position and a desired attitude with respect to the concave part of the second object, the control apparatus 1000 determines that the concave part of the second object is in the field of view of at least one of the detection apparatus 220 and the detection apparatus 230.

In the step S175, when it is determined that the concave part of the second object is not in the field of view of at least one of the detection apparatus 220 and the detection apparatus 230 (the step S175: No), the control apparatus 1000 controls the driver 211 to continue to move the robot arm 210 such that the concave part of the second object is in the field of view of at least one of the detection apparatus 220 and the detection apparatus 230, on the basis of information about the position of the concave part of the second object, and information about the position and the attitude of the second object outputted from the 2D tracking unit 302 at intervals of predetermined times.

On the other hand, in the step S175, when it is determined that the concave part of the second object is in the field of view of at least one of the detection apparatus 220 and the detection apparatus 230 (the step S175: Yes), the control apparatus 1000 calculates the position and the attitude of the concave part of the second object (step S 176). The control apparatus 1000 calculates the position and the attitude at the initial stage (the initial position and attitude) of the concave part provided in the second object by the matching process of the matching unit 301.

Then, the control apparatus 1000 controls the driver 211 to move the robot arm 210 such that the position and the attitude of the holding apparatus 50 are a desired position and a desired attitude that allow the convex part of the first object (held by the holding apparatus 50) to be fitted in the concave part of the second object (step S177). The control apparatus 1000 controls the driver 211 to move the robot arm 210, on the basis of the result of the calibration of the holding apparatus 50 performed in the step S171, and information about the position and the attitude of the concave part outputted from the 2D tracking unit 302 at intervals of predetermined times by using information about the initial position and attitude of the concave part of the second object calculated in the step S176. In other words, the control apparatus 1000 controls the driver 211 to move the robot arm 210 such that the holding apparatus 50 (the first object) is brought close to the concave part of the second obj ect.

Then, the control apparatus 1000 determines whether or not the position and the attitude of the holding apparatus 50 are a desired position and a desired attitude that allow the convex part of the first object (held by the holding apparatus 50) to be fitted in the concave part of the second object (step S178). The control apparatus 1000 determines whether or not the position and the attitude of the holding apparatus 50 with respect to the concave part are a desired position and a desired attitude, on the basis of the result of the calibration of the holding apparatus 50 performed in the step S171, and information about the position and the attitude of the concave part of the second object outputted from the 2D tracking unit 302 at intervals of a predetermined times, to for example.

In the step S178, when it is determined that the position and the attitude of the holding apparatus are not a desired position and a desired attitude that allow the convex part of the first object (held by the holding apparatus 50) to be fitted in the concave part of the second object (the step S178: No), the control apparatus 1000 controls the driver 211 to continue to move the robot arm 210 such that the position and the attitude of the holding apparatus 50 are a desired position and a desired attitude that allow the convex part of the first object (held by the holding apparatus 50) to be fitted in the concave part of the second object, on the basis of the result of the calibration of the holding apparatus 50 performed in the step S171, and information about the position and the attitude of the concave part outputted from the 2D tracking part 302 at intervals of predetermined times, in order that the holding apparatus 50 is brought close to the concave part.

On the other hand, when it is determined that the position and the attitude of the holding apparatus are a desired position and a desired attitude that allow the convex part of the first object to be fitted in the concave part of the second object (the step S178: Yes), the control apparatus 1000 calculates the position and the attitude of the first object held by the holding apparatus 50 (step S179).

It is assumed that the tip of the holding apparatus 50 (i.e., in the case of a tweezers hand, the tips of the tweezers that are in contact with the first object when holding the first object) is in the field of view of each of the cameras 31 and 32 of the detection apparatus 230, as described above. Furthermore, the detection apparatus 230 is provided at a desired position on the robot arm 210 such that at least a part of the first object held by the holding apparatus 50 is also included in the field of view of each of the cameras 31 and 32. The control apparatus 1000 performs the CAD matching process by using the CAD data of the first object and the shape data outputted from the detection apparatus 230 while the holding apparatus 50 holds the first object (i.e., data including the shape data of at least a part of the first object and the tip of the holding apparatus 50), thereby to calculate the position and the direction of the first object. The position and the attitude of the first object held by the holding apparatus 50 change at each time that the first object is held by the holding apparatus 50, even if the first object is of the same type (i.e., the same shape). Therefore, since the control apparatus 1000 is allowed to recognize the position and the attitude of the first object by performing this step S179, it is possible to allow the convex part of the first object to be fitted in the concave part of the second object with high accuracy in a step S180 described later. The control apparatus 1000 may calculate the position and the attitude of the convex part of the first object held by the holding apparatus 50, on the basis of information about the calculated position and attitude of the first object, and information about the position of the convex part of the first object (i.e., design data of the first object).

For example, the control apparatus 1000 may perform the CAD matching process using the CAD data of the first object, thereby to calculate the position and the attitude of the first object, after recognizing the shape data of the tip of the holding apparatus 50 by the CAD matching process or the like from among the shape data outputted from the detection apparatus 230 while the holding 50 holds the first object, and after performing the process of removing the shape data of the tip of the holding apparatus 50 from the shape data outputted from the detection apparatus 230, for example. In this case, it is possible to prevent that the calculation accuracy of the position and the attitude of the first object is lowered because the shape data of the tip of the holding apparatus 50 become noise in the process of calculating the position and the attitude of the first object.

The control apparatus 1000 may performs the CAD matching process using the CAD data of the first object, thereby to calculate the position and the attitude of the first object, after removing the shape data of the tip of the holding apparatus 50 calculated by the matching process in the calibration of the holding apparatus 50 in the step S171, from the shape data outputted from the detection apparatus 230 while the holding apparatus 50 holds the first object, for example. Even in this case, it is possible to prevent that the calculation accuracy of the position and the attitude of the first object is lowered.

After the step S179, the control apparatus 1000 controls the holding apparatus 50 such that the convex part of the first object is fitted in the concave part of the second object (step S180). The control apparatus 1000 controls the driver 211 of the robot arm 210 such that the position and the attitude of the first object (the convex part of the first object) held by the holding apparatus 50 are a desired position and a desired attitude that allow it to be fitted in the concave part of the second object, on the basis of the result of the calibration of the holding apparatus 50 performed in the step S171, the position and the attitude of the concave part of the second object outputted from the 2D tracking unit 302 at intervals of predetermined times, and the position and the attitude of the first object held by the holding apparatus 50, which is calculated in the step S179. Then, the control apparatus 1000 controls the driver 211 of the robot arm 210 such that the convex part of the first object is fitted in the concave part of the second object, controls the holding apparatus 50 to release the holding of the first object, and installs the convex part of the first object in the concave part of the second object.

After the step S180, the control apparatus 1000 performs an inspection of an installation of the first object on the second object, on the basis of at least one of the image data and the shape data outputted from at least one of the detection apparatuses 220 and 230 (step S181).

As an example, the control apparatus 1000 determines whether or not an installation attitude of the first object on the second object is good, as the inspection about the installation status of the first object on the second object. For example, the control apparatus 1000 calculates the attitude of the first object with respect to the second object, on the basis of the shape data of the first object and the second object outputted from at least one of the detection apparatuses 220 and 230. The control apparatus 1000 determines whether or not the installation attitude of the first object on the second object is good, on the basis of the calculated attitude of the first object with respect to the second object. For example, when the attitude of the first object with respect to the second object is deviated from a predetermined attitude, the control apparatus 1000 determines that the installation attitude of the first object on the second object is defective. The control apparatus 1000 may calculate the attitude of the first object with respect to the second object, on the basis of the image data of the first object and the second object outputted from at least one of the detection apparatuses 220 and 230. The control apparatus 1000 may calculate the attitude of the first object with respect to the second object, by calculating the respective attitudes of the first object and the second object by the matching process.

The control apparatus 1000 may determine whether or not the installation attitude of the first object on the second object is good, but it is not limited to when fitting the convex part of the first object in the concave part of the second object. For example, when the first object and the second object are objects to be joined to each other, the control apparatus 1000 may determine whether or not the installation attitude of the first object on the second object is good, after the first object is joined (i.e., installed) to the second object in the steps S171 to S180. For example, when the first object is placed on the second object, the control apparatus 1000 may determine whether or not the installation attitude of the first object on the second object is good, after the first object is disposed (i.e., installed) on the second object in the steps S171 to S180.

The control apparatus 1000 may determine whether or not an installation position of the first object on the second object is good, as the inspection of the installation status of the first object on the second object. As an example, when a plurality of concave parts in which the convex part of the first object can be fitted are formed in the second object, it is possible to inspect whether the convex part of the first object is fitted in a desired concave part of the concave parts formed in the second object. In this case, for example, the control apparatus 1000 may calculate the position of the first object in the second object, on the basis of the shape data of the first object and the second object outputted from at least one of the detection apparatuses 220 and 230. The control apparatus 1000 may determine whether or not the installation position of the first object on the second object is good, on the basis of the calculated position of the first object in the second object. For example, when the position of the first object in the second object is deviated from a predetermined position, the control apparatus 1000 may determine that the installation position of the first object on the second object is defective.

The control apparatus 1000 may calculate the position of the first object in the second object, on the basis of the image data of the first object and the second object outputted from at least one of the detection apparatuses 220 and 230. The control apparatus 1000 may calculate the position of the first object in the second object, by calculating the respective positions of the first object and the second object by the matching process. The control apparatus 1000 may determine whether or not the installation position of the first object on the second object is good, but it is not limited to when a plurality of concave parts in which the convex part of the first object can be fitted are formed in the second object. For example, when the first object and the second object are objects to be joined to each other, the control apparatus 1000 may determine whether or not the installation position of the first object on the second object is good, after the first object is joined (i.e., installed) to the second object in the steps S171 to S180. For example, when the first object is placed on the second object, the control apparatus 1000 may determine whether or not the installation position of the first object on the second object is good, after the first object is disposed (i.e., installed) on the second object in the steps S171 to S180.

The control apparatus 1000 may determine whether or not the first object is installed on the second object, as the inspection of the installation status of the first object on the second object. For example, the control apparatus 1000 may calculate a distance between the first object and the second object, on the basis of the shape data outputted from at least one of the detection apparatuses 220 and 230. For example, when the calculated distance between the first object and the second object is greater than or equal to the predetermined distance, or when there is no first object, the control apparatus 1000 may determine that the installation of the first object on the second object is defective. The control apparatus 1000 may calculate the distance between the first object and the second object, on the basis of the image data outputted from at least one of the detection apparatuses 220 and 230. The control apparatus 1000 may calculate the distance between the first object and the second object, by calculating the respective positions and attitudes of the first object and the second object, by the matching process.

The control apparatus 1000 may determine whether or not the first object is installed on the second object, but it is not limited to when fitting the convex part of the first object in the concave part of the second object. For example, when the first object and the second object are objects to be joined to each other, the control apparatus 1000 may determine whether or not the first object is installed on the second object, after the first object is joined (i.e., installed) to the second object in the steps S171 to S180. For example, when the first object is placed on the second object, the control apparatus 1000 may determine whether or not the first object is installed on the second object, after the first object is disposed (i.e., installed) on the second object in the steps S171 to S180.

The control apparatus 1000 may display, on a not-illustrated display apparatus, at least one of informations about the image data and the shape data used in the inspection, and a result of the inspection of the installation status of the first object on the second object performed in the step S181.

The control apparatus 1000 may perform machine learning in an existing method, by using data obtained by associating the result of the inspection of the installation status of the first object on the second object performed in the step S181 with at least one of informations about the image data and the shape data used in the steps S171 to S180, as teacher data. In this case, the control apparatus 1000 may use a result of the machine learning for the control of each apparatus of the robot 2 (e.g., the control of the holding of the holding apparatus 50, and the control of the position and the attitude of the holding apparatus 50).

The control apparatus 1000 may perform the step S179 before the step S178. The control apparatus 1000 may not perform the step S179. When the step S179 is not performed, the robot arm 210 may be provided with the detection apparatus 230 such that the first object held by the holding apparatus 50 is not included in the field of view of each of the cameras 31 and 32 of the detection apparatus 230.

The control apparatus 1000 may display, on a not-illustrated display apparatus, at least one of informations about the position and the attitude of the first object held by the holding apparatus 50, the calibration result of the holding apparatus 50, the position and the attitude of the second object, the shape data and the image data used in the steps S171 to S180.

When the first object can be installed on the second object, the control apparatus 1000 may not perform the step S173 and the step S175, or the step S177 and step S178.

The control apparatus 1000 may perform the step S171 between the steps S172 and S181 in addition to the step S171. The control apparatus 1000 may not perform the step S171 before the step S172, but may perform it between the steps S172 and S181.

The control apparatus 1000 may not perform the step S171. When the step S171 is not performed, the robot arm 210 may be provided with the detection apparatus 230 such that the holding apparatus 50 is not included in the field of view of each of the cameras 31 and 32 of the detection apparatus 230.

In the steps S 172 to S 181, the position and the attitude of the holding apparatus 50 with respect to the detection apparatus 230 may be changed in some cases because the holding apparatus 50 is brought into contact with a predetermined object or for similar reasons. In this case, the control apparatus 1000 may detect the change in the position and the attitude of the holding apparatus 50 with respect to the detection apparatus 230, on the basis of a change in a part of the holding apparatus 50 (e.g., a change in a part of the holding apparatus 50 on the image) in the image data and the shape data outputted from the detection apparatus 230. When detecting the change in the position and the attitude of the holding apparatus 50 with respect to the detection apparatus 230, the control apparatus 1000 may perform the calibration.

The control apparatus 1000 may not perform the step S181. The steps S171 to S181 is described as an example of the operation in which the first object is held by the holding apparatus 50 and the first object is installed on the second object as the target object; however, the second object may be held by the holding apparatus 50 and the second object may be installed on the first object as the target object. In this case, it can be said that the second object is the target object because it is subject to the holding by the holding apparatus 50.

In addition, in the steps S171 to S181, the detection apparatus (at least one of the detection apparatuses 220 and 230) that outputs at least one of the image data and the shape data used to control the robot arm 210 (the driver 211) is the same as the detection apparatus (at least one of the detection apparatuses 220 and 230) that outputs at least one of the image data and the shape data used to perform the inspection of the installation status of the first object on the second object. However, the detection apparatus that outputs at least one of the image data and the shape data used to control the robot arm 210 (the driver 211) may be different from the detection apparatus that outputs at least one of the image data and the shape data used to perform the inspection of the installation status of the first object on the second obj ect.

As described above, the robot control unit 100 may not be a part of the control apparatus 1000, and may be configured separately from the control apparatus 1000. In this case, the control apparatus 1000 may generate a control signal for controlling the robot arm 210 (the driver 211), on the basis of the result of calibration of the holding apparatus 50, and the calculated position and attitude of the target object (e.g., the second object). The control apparatus 1000 may output the generated control signal to the robot control unit 100. The robot control unit 100 may generate a drive signal for driving the driver 211 on the basis of the control signal outputted from the control apparatus 1000. The robot control unit 100 may drive the driver 211 on the basis of the generated drive signal.

A robot 5 described later may be used in the steps S171 to S181.

### <Second Example Embodiment>

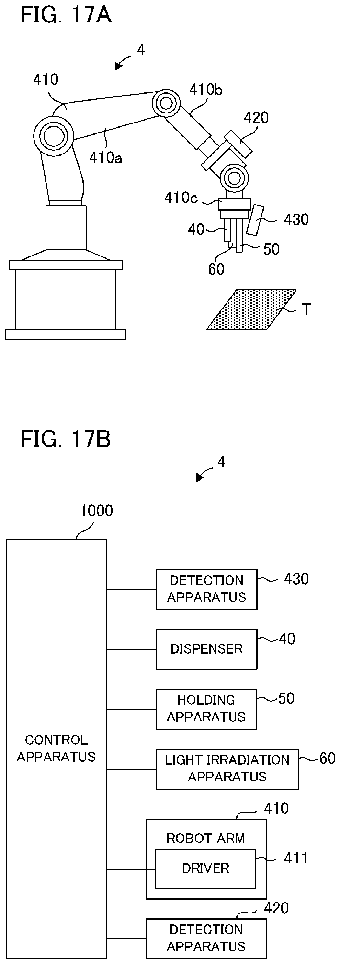

A second example embodiment will be described with reference to FIG. 17A to FIG. 18. Even in this example embodiment, as in the first example embodiment, exemplified is a soldering system including a robot that performs soldering. In the second example embodiment, a description that overlaps with that of the first example embodiment will be omitted, and the same parts on the drawings carry the same reference numerals. A basically different point will be described with reference to FIG. 17A to FIG. 18.

### (Overview)

An outline of a soldering system according to the second example embodiment will be described with reference to FIG. 17A and FIG. 17B. In FIG. 17A and FIG. 17B, the soldering system is a system that solders the element on the circuit board T. The soldering system includes a robot 4. The robot 4, which may be referred to as a processing apparatus, a solder coating apparatus, an element installation apparatus, or a soldering apparatus, includes a robot arm 410. The robot arm 410 is provided with: the dispenser 40 that discharges the solder; the holding apparatus 50 that is configured to hold the element; the light irradiation apparatus 60 that applies the light L for melting the solder; a housing part (not illustrated) that houses or contains the element; a supply apparatus (not illustrated) that supplies a desired element to the holding apparatus 50 from the housing part; and detection apparatuses 420 and 430 that detect a light from the circuit board T. The robot arm 410 includes a driver 411 that moves the dispenser 40, the holding apparatus 50, the light irradiation apparatus 60, and the detection apparatuses 420 and 430.

Here, the detection apparatuses 420 and 430 correspond to the detection apparatuses 320 and 330, respectively. The detection apparatus 420 may have the same configuration as that of the detection apparatus 320. The detection apparatus 430 may have the same configuration as that of the detection apparatus 330.

The soldering system includes the control apparatus 1000 (i) that controls the driver 411 such that the dispenser 40, the holding apparatus 50, the light irradiation apparatus 60 and the detection apparatuses 420 and 430 are brought close to the circuit board T, (ii) that controls the dispenser 40 such that the solder is disposed in a predetermined part of the circuit board T, (iii) that controls the holding apparatus 50 such that the element is disposed on the circuit board T through the disposed solder, and (iv) that controls the light irradiation apparatus 60 to melt the disposed solder.

In FIG. 17A, the control apparatus 1000 controls the dispenser 40 or the like such that the solder is disposed in the predetermined part of the circuit board T. The control apparatus 1000 subsequently controls the holding apparatus 50 or the like such that the element is disposed through the disposed solder. The control apparatus 1000 subsequently controls the light irradiation apparatus 60 to melt the solder. The control apparatus 1000 may then perform the quality inspection of the soldering, from a detection result of the detection apparatus 430, for example. That is, the robot 4 solely performs the work that is divided by the robots 1, 2 and 3 according to the first example embodiment. With this configuration, it is possible to improve productivity or the like, while reducing an initial investment of instruction of a robot.

### (Robot 4)

In FIG. 17A and FIG. 17B, the robot 4 includes the dispenser 40, the holding apparatus 50, the light irradiation apparatus 60, the housing part (not illustrated) that houses or contains the element, and the supply apparatus (not illustrated) that supplies a desired element to the holding apparatus 50 from the housing part. The robot 4 further includes (i) the detection apparatuses 220 and 230 that detect the light from the circuit board T and that generate at least one of the image data and the shape data, and (ii) the robot arm 410 that is provided with the dispenser 40, the holding apparatus 50, the light irradiation apparatus 60 and the detection apparatuses 420 and 430, and which includes the driver 411 that moves the holding apparatus 50 and the detection apparatuses 420 and 430. The housing part includes, for example, a reel, a tray, a stick, or the like. A detailed description of the housing part and the supply apparatus will be omitted because various existing aspects are applicable.

The robot arm 410 includes arm parts 410a and 410b and a wrist part 41 0c, as in the robot arm 310.

In FIG. 17A, the detection apparatus 420 is disposed on the arm part 410b of the robot arm 410, and the detection apparatus 430 is disposed on the wrist part 410c of the robot arm 410; however, the arrangement of the detection apparatuses 420 and 430 is not limited thereto. The robot 4 may include only one of the detection apparatuses 420 and 430, or may include another detection apparatus in addition to the detection apparatuses 420 and 430 (i.e., the robot 4 may include three or more detection apparatuses). In addition, the robot 4 may include at least one detection apparatus other than the detection apparatuses 420 and 430. That is, as long as the light irradiation apparatus 60, the holding apparatus 50, and the dispenser 40 can be brought close to the circuit board T or the predetermined part of the circuit board T (e.g., the solder pad provided on the circuit board T, or the element or the solder disposed on the circuit board T, etc.) by the driving of the driver 411 of the robot arm 410 such that the solder can be disposed on the circuit board T, such that the element can be disposed on the disposed solder, and the disposed solder can be melted by the processing light, the detection apparatuses 420 and 430 may have any configuration (e.g., the number and specifications of the cameras in the detection apparatus, the presence or absence of a projector, etc.), and an arrangement position and the number of the detection apparatuses 420 and 430 may be arbitrary.

The control apparatus 1000 (i) may control the driver 411 such that the solder discharged from the dispenser 40 that is displaced with the displacement of at least one of the detection apparatuses 420 and 430 with the displacement of at least one of the detection apparatuses 420 and 430 is disposed in the predetermined part of the circuit board T, (ii) may control the driver 411 such that the element gripped (held) by the holding apparatus 50 that is displaced with the displacement of at least one of the detection apparatuses 420 and 430 is disposed in the predetermined part of the circuit board T, and (iii) may control the direction of the Galvano mirror 61 such that the processing light L from the light irradiation apparatus 60 that is displaced with the displacement of at least one of the detection apparatuses 420 and 430 is applied to the same position, on the basis of at least one of the image data and the shape data that are changed in accordance with the displacement of at least one of the detection apparatuses 420 and 430, for the robot 4 configured as described above.

Here, the control apparatus 1000 may be an apparatus that is different from the robot 4, or may constitute a part of the robot 4 (in other words, the robot 4 may include the control apparatus 1000).

The robot arm 410 may be mounted on the AGV (Automatic Guided Vehicle), for example. In this case, the control apparatus 1000 may control at least one of the driver of the AGV, an end effector of the robot arm 410, and the driver of the robot arm 410, on the basis of information about the position and the attitude of the target object obtained by the matching process or the tracking process described above and later.

### (Robot Operation)

First, the control apparatus 1000 may perform the calibration of the dispenser 40, the holding apparatus 50, and the light irradiation apparatus 60 before the following steps.

It is assumed that the robot arm 410 is provided with the detection apparatus 430, the dispenser 40, the holding apparatus 50, and the light irradiation apparatus 60 in such a positional relationship that a part of the dispenser 40, a part of the holding apparatus 50, and a part of the light irradiation apparatus 60 are in the field of view of each of the cameras 31 and 32 of the detection apparatus 430.

The positions and the attitudes of the dispenser 40, the holding apparatus 50, and the light irradiation apparatus 60 are calculated in advance by a process that is similar to the above-described calibration process.

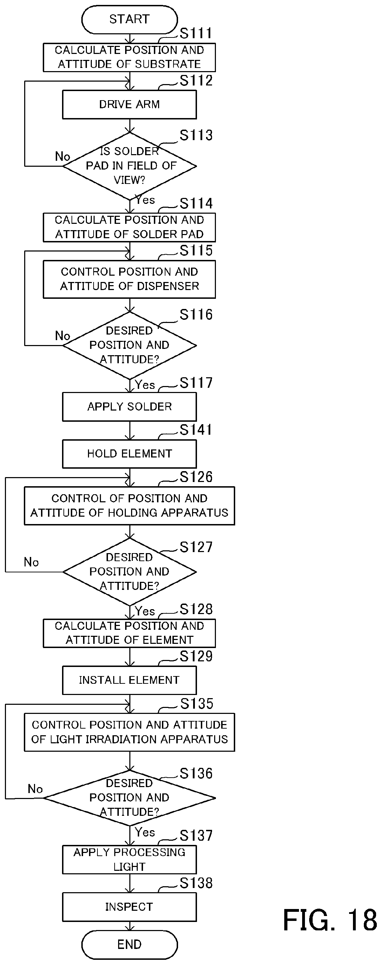

Next, the operation of the robot 4 will be described with reference to a flowchart in FIG. 18. The control apparatus 1000 performs each process in the flowchart in FIG. 18 by using an output of at least one of the detection apparatuses 420 and 430 of the robot 4.

The control apparatus 1000 that controls the robot 1, calculates the position and the attitude of the circuit board T as an example of the target obj ect (step S111). In the step S111, the control apparatus 1000 calculates the position and the attitude at the initial stage (i.e., the initial position and attitude) of the circuit board T by the matching process of the matching unit 301. Furthermore, the control apparatus 1000 calculates the position of each solder pad formed on the circuit board T. For example, the control apparatus 1000 calculates the position and the attitude of each solder pad on the circuit board T, on the basis of the Gerber data of the circuit board T (i.e., the design data of the circuit board T). The control apparatus 1000 specifies the order of mounting (here, disposing the solder) on each solder pad, on the basis of the Gerber data.

Then, the control apparatus 1000 controls the driver 411 to move the robot arm 410 such that the dispensers 40 (the detection apparatuses 420 and 430) is brought close to the circuitry board T (step 112). In the step S112, the control apparatus 1000 controls the driver 411 of the robot arm 410 such that the firstly mounted solder pad is in the field of view of at least one of the detection apparatus 420 and the detection apparatus 430.

Then, the control apparatus 1000 determines whether or not the firstly mounted solder pad is in the field of view of at least one of the detection apparatus 420 and the detection apparatus 430 (step S113). In the step S113, the control apparatus 1000 determines whether or not the detection apparatus 420 and the detection apparatus 430 are in a desired position and attitude with respect to the firstly mounted solder pad, on the basis of information about the position and the attitude of the firstly mounted solder pad calculated in the step 5111, and information about the position and the attitude of the circuit board T outputted from the 2D tracking unit 302 at intervals of predetermined times. At this time, when the detection apparatus 420 and the detection apparatus 430 are in a desired position and attitude with respect to the solder pad, the control apparatus 1000 determines that the solder pad is in the field of view of at least one of the detection apparatus 420 and the detection apparatus 430.

In the step S113, when it is determined that the solder pad is not in the field of view of at least one of the detection apparatus 420 and the detection apparatus 430 (the step S113: No), the control apparatus 1000 controls the driver 411 to continue to move the robot arm 410, on the basis of information about the position and the attitude of the circuit board T outputted from the 2D tracking unit 302 at intervals of predetermined times, and information about the position and the attitude of the solder pad calculated in the step S111.

On the other hand, in the step S113, when it is determined that the solder pad is in the field of view of at least one of the detection apparatus 420 and the detection apparatus 430 (the step S113: Yes), the control apparatus 1000 calculates the position and the attitude of the firstly mounted solder pad (step S114). In the step S114, the control apparatus 1000 calculates the initial position and attitude at the initial stage (the initial position and attitude) of the solder pad by the matching process of the matching unit 301.

Then, the control apparatus 1000 controls the driver 411 to move the robot arm 410 such that the position and the attitude of the dispenser 40 are a desired position and a desired attitude that allow the solder to be discharged to the firstly mounted solder pad (step S115). In the step S115, the control apparatus 1000 controls the driver 411 to move the robot arm 410, on the basis of the position and the attitude of the solder pad outputted from the 2D tracking unit 302 at intervals of predetermined times, by using information about the initial position and attitude of the solder pad calculated in the step S114. In other words, the control apparatus 1000 controls the driver 411 to move the robot arm 410 such that the dispenser 40 (the detection apparatuses 420 and 430) is brought close to the solder pad mounted firstly mounted on the circuitry board T.

Then, the control apparatus 1000 determines whether or not the position and the attitude of the dispenser 40 are a desired position and a desired attitude that allow the solder to be discharged to the firstly mounted solder pad (step S116). In the step S116, the control apparatus 1000 determines whether or not the position and the attitude of the dispenser 40 with respect to the solder pad are a desired position and a desired attitude, on the basis of information about the position and the attitude of the firstly mounted solder pad outputted from the 2D tracking unit 302 at intervals of predetermined times, for example.

In the step S116, when it is determined that the position and the attitude of the dispenser 40 are not a desired position and a desired attitude that allow the solder to be discharged to the solder pad (the step S116: No), the control apparatus 1000 controls the driver 411 to continue to move the robot arm 410, on the basis of the position and the attitude of the solder pad outputted from the 2D tracking unit 302 at intervals of predetermined times, such that the dispenser 40 is brought close to the solder pad. On the other hand, when it is determined that the position and the attitude of the dispenser 40 are a desired position and a desired attitude that allow the solder to be discharged to the solder pad (the step S116: Yes), the control apparatus 1000 controls the dispenser 40 such that the solder is disposed in at least a part of the solder pad (step S117). Specifically, for example, the control apparatus 1000 controls the dispenser 40 to discharge the solder. Here, the control apparatus 1000 may estimate the area of the solder pad and may control the amount of the solder discharged from the dispenser 40 in accordance with the area of the solder pad, on the basis of the position and the attitude of the solder pad outputted from the 2D tracking unit 302 at intervals of predetermined times. In this case, the control apparatus 1000 may control the dispenser 40 such that the amount of the solder discharged increases as the estimated area of the solder pad increases. This allows an appropriate amount of the solder to be disposed on the solder pad.

At this time, for example, due to vibrations or the like of the robot arm 410, a relative position between the dispenser 40 and the construction target object may be changed. Therefore, for example, the position of the construction target object as the target object in the image indicated by the image data, which are successively outputted from the detection apparatus 430, may also be displaced with time due to the change in the relative position.

Therefore, the control apparatus 1000 controls at least one of the position and the attitude of the dispenser 40 on the basis of the result of the tracking process, in order to reduce or eliminate an influence of the change in the relative position on the step S117.

The control apparatus 1000 may display, on a not-illustrated display apparatus, at least one of information about the order of mounting on each solder pad, information about the position and the attitude of each solder pad, and informations about the position and the attitude of the circuit board T, and the image data and the shape data used in the steps 5111 to S117.

When the solder can be disposed on the solder pad, the control apparatus 1000 may not perform the step S111 and the step S113, or the step S115 and the step S 116.

After the step S117, the control apparatus 1000 may detect the status of the solder disposed on the solder pad, on the basis of the matching process and at least one of the image data and the shape data outputted from at least one of the detection apparatuses 420 and 430. As the detected status of the solder, the distance between the solder and the solder pad, the shape of the solder, the volume of the solder, the position and the attitude of the solder, and the like are exemplified. The control apparatus 1000 may determine the quality of the solder, on the basis of the detected status of the solder.

In parallel with the step S111 to S117, or at least before a step S128 described later, the control apparatus 1000 controls the supply apparatus (not illustrated) provided in the robot arm 410 to supply a desired element from the housing part (not illustrated) to the holding apparatus 50, and controls the holding apparatus 50 such that the supplied element is held by the holding apparatus 50 (step S141).

After the step S117 (step S141), the control apparatus 1000 controls the driver 411 to move the robot arm 410 such that the position and the attitude of the holding apparatus 50 are a desired position and a desired attitude that allow the element to be disposed on the solder disposed on the firstly mounted solder pad (step S126). In the step S126, the control apparatus 1000 controls the driver 411 to move the robot arm 410, on the basis of a positional relationship between the marker and the solder pad, and information about the position and the attitude of the marker disposed in the vicinity of the solder pad outputted from the 2D tracking unit 302 at intervals of predetermined times, by using information about the initial position and attitude of the marker disposed in the vicinity of the solder pad calculated in the step S114.

Then, the control apparatus 1000 determines whether or not the position and the attitude of the holding apparatus 50 are a desired position and a desired attitude that allow the element to be disposed on the solder disposed on the first solder pad (step S127). In the step S127, the control apparatus 1000 determines whether or not the position and the attitude of the holding apparatus 50 with respect to the solder pad (the solder disposed on the solder pad) are a desired position and a desired attitude, on the basis of the positional relationship between the marker and the solder pad, and information about the position and the attitude of the marker disposed in the vicinity of the firstly mounted solder pad outputted from the 2D tracking unit 302 at intervals of predetermined times, for example.

In the step S127, when it is determined that the position and the attitude of the holding apparatus 50 are not a desired position and a desired attitude that allow the element to be disposed on the solder disposed on the firstly mounted solder pad (the step S127: No), the control apparatus 1000 controls the driver 411 to continue to move the robot arm 410, on the basis of the position and the attitude of the solder pad (the solder) outputted from the 2D tracking unit 302 at intervals of predetermined times such that the holding apparatus 50 is brought close to the solder pad (the solder).

On the other hand, when it is determined that the position and the attitude of the holding apparatus 50 are a desired position and a desired attitude that allow the element to be disposed on the solder pad (the solder) (the step S127: Yes), the control apparatus 1000 calculates the position and the attitude of the element held by the holding apparatus 50 (step S128).

After the step S128, the control apparatus 1000 controls the holding apparatus 50 such that the element is disposed on the firstly mounted solder pads (the solder) (step S129). The control apparatus 1000 controls the driver 411 of the robot arm 410 such that the position and the attitude of the element held by the holding apparatus 50 are a desired position and a desired attitude that allow the element to be disposed on the solder pad (the solder), on the basis of the position and the attitude of the solder pad (the solder) outputted from the 2D tracking unit 302 at intervals of predetermined times, and the position and the attitude of the element held by the holding apparatus 50 calculated in the step S128. Then, the control apparatus 1000 controls the holding apparatus 50 to dispose the element on the solder pad (the solder) such that the holding of the element is released.

At this time, as in the step S117, for example, due to vibrations or the like of the robot arm 410, a relative position between the holding apparatus 50 and the construction target object may be changed. Therefore, the control apparatus 1000 controls at least one of the position and the attitude of the holding apparatus 50 on the basis of the result of the tracking process, in order to reduce or eliminate an influence of the change in the relative position on the step S129.

The control apparatus 1000 may display, on a not-illustrated display apparatus, at least one of information about the order of mounting on each solder pad, information about the position and the attitude of each solder pad, information about the position and the attitude of the marker, and informations about the position and the attitude of the circuit board T, and the image data and the shape data used in the steps S126 to S129.

When the element can be disposed on the solder on the solder pad, the control apparatus 1000 may not perform the step S126 and the step S127.

After the step S129, the control apparatus 1000 may detect the status of the element disposed on the solder on the solder pad, on the basis of the matching process and at least one of the image data and the shape data outputted from at least one of the detection apparatuses 420 and 430. As the detected status of the element, the position and the attitude of the element, the distance between the element and the solder, the distance between the element and the solder pad, and the like are exemplified. Then, the control apparatus 1000 may determine the quality of the disposed element on the basis of the detected status of the element.

The control apparatus 1000 may display, on a not-illustrated display apparatus, at least one of informations about the image data and the shape data used for the process of detecting the status of the element, and a detection result of the status of the element.

Then, the control apparatus 1000 controls the driver 411 to move the robot arm 410 such that the position and the attitude of the light irradiation apparatus 60 are a desired position and a desired attitude that allow the solder disposed on the firstly mounted solder pad to be melted by the processing light L (step S135). In the step S135, the control apparatus 1000 controls the driver 411 to move the robot arm 410, on the basis of the position and the attitude of the element outputted from the 2D tracking unit 302 at intervals of predetermined times of the tracking unit 300, by using information about the initial position and attitude of the element calculated (estimated) in the step S134. In other words, the control apparatus 1000 controls the driver 411 to move the robot arm 410 such that the light irradiation apparatus 60 (the detection apparatuses 420 and 430) is brought close to the element disposed on the firstly mounted solder pad of the circuitry board T.

Then, the control apparatus 1000 determines whether or not the position and the attitude of the light irradiation apparatus 60 are a desired position and a desired attitude that allow the solder disposed on the firstly mounted solder pad to be melted by the processing light L (step S136). In the step S136, the control apparatus 1000 determines whether or not the position and the attitude of the light irradiation apparatus 60 with respect to the element are a desired position and a desired attitude, on the basis of information about the position and the attitude of the element outputted from the 2D tracking unit 302 at intervals of predetermined times, for example. At this time, when the position and the attitude of the light irradiation apparatus 60 with respect to the element are a desired position and a desired attitude, the control apparatus 1000 determines that the position and the attitude of the light irradiation apparatus 60 are a desired position and a desired attitude that allow the solder disposed on the firstly mounted solder pad to be melted by the processing light L.

In the step S136, when it is determined that the position and the attitude of the light irradiation apparatus 60 are not a desired position and a desired attitude that allow the solder disposed on the firstly mounted solder pad to be melted by the processing light L (the step S136: No), the control apparatus 1000 controls the driver 411 to continue to move the robot arm 410, on the basis of the position and the attitude of the element outputted from the 2D tracking unit 302 at intervals of predetermined times, such that the light irradiation apparatus 60 is brought close to the element disposed on the firstly mounted solder pad. That is, the step S135 is performed until it is determined that the position and the attitude are a desired position and a desired attitude that allow the solder disposed on the firstly mounted solder pad to be melted by the processing light L.

On the other hand, when it is determined that the position and the attitude of the light irradiation apparatus 60 are a desired position and a desired attitude that allow the solder disposed on the firstly mounted solder pad to be melted by the processing light L (the step S136: Yes), the control apparatus 1000 controls the light irradiation apparatus 60 to apply the processing light L to the electrode of the element disposed on the solder pad, i.e., two electrodes of a chip LED, such that the solder disposed on the firstly mounted solder pad is melted (step S137). As a result, the solder disposed on the solder pad is melted, and the element is soldered to the circuit board T (the firstly mounted solder pad).

After the step S137, the control apparatus 1000 performs the quality inspection of the solder and the soldered element, on the basis of at least one of the image data and the shape data outputted from at least one of the detection apparatuses 420 and 430 (step S138). The inspection items are, for example, position deviation of the element with respect to the solder pad, floating of the electrode of the element with respect to the solder pad (a so-called Manhattan phenomenon in which the electrode of the element is separated from the solder pad) or the like.

The control apparatus 1000 may display, on a not-illustrated display apparatus, at least one of informations about the image data and the shape data used for the quality inspection of the soldering in the step S138, and a result of the quality inspection of the soldering.

When the element can be mounted by melting the solder disposed on the solder pad, the control apparatus 1000 may not perform the step S135 and the step S133.

The control apparatus 1000 may perform the step S128 before the step S127. The control apparatus 1000 may not perform the step S128. In this case, the control apparatus 1000 may control the holding apparatus 50 such that the element is disposed on the firstly mounted solder pad (the solder) next to the S127.

The control apparatus 1000 may display, on a not-illustrated display apparatus, at least one of information about the position and the attitude of the element, information about the order of mounting on each solder pad, information about the position and the attitude of each solder pad, and informations about the position and the attitude of the circuit board T, and the image data and the shape data used in the steps S135 to S137.

After the step S138, the control apparatus 1000 starts to move the dispenser 40 to the secondly mounted solder pad, on the basis of the position and the attitude of the secondly mounted solder pad calculated in the step S111 and the position and the attitude of the firstly mounted solder pad outputted from the 2D tracking unit 302 at intervals of predetermined times, and repeats the step S113 and the subsequent steps. When starting to move the dispenser 40 to the secondly mounted solder pad, the control apparatus 1000 may perform the step S111 before the steps S113 and the subsequent steps. The control apparatus 1000 repeats the steps described above until the disposition of the solder onto each solder pad of the circuit board T is ended.

### (Technical effect)

As described above, the robot 4 performs the solder disposition step, the element installation step, the soldering step and the inspection step by using a single robot arm. Therefore, the step S114 and the subsequent steps in FIG. 17 are performed after the driving of the robot arm 410 by the driver 411 is stopped.

Immediately after the driving of the robot arm 410 is stopped, however, vibrations may occur at the tip of the robot arm 410 (e.g., the light irradiation apparatus 60 or the like as the end effector). Furthermore, vibrations may occur due to the operation of the wrist part 410c of the robot arm 410, such as solder disposition. If it is necessary to wait for a start of the process of disposing the solder or the like until vibrations converge at each time of the occurrence of vibrations, the productivity is significantly reduced.

In contrast, in the robot 4, the direction of the Galvano mirror 61 of the light irradiation apparatus 60 and at least one of the position and the attitude of the light irradiation apparatus 60 or the like are controlled, on the basis of a result of a tracking process or the like that is similar to the tracking process according to the first example embodiment, for example. Therefore, in the robot 4, even if vibrations occur, it is possible to properly dispose the solder, to properly dispose the element, or to properly apply the processing light L, with respect to the construction target object, on the basis of the result of the tracking process or the like. That is, according to the robot 4, it is possible to start the process of disposing the solder or the like, without waiting for the convergence of vibrations.

### <Modified Examples>

Modified examples according to the first and second example embodiments will be described.

### (Modified Examples of Detection Apparatus 320)

Although a modified example of the detection apparatus 320 will be described herein, the detection apparatuses 120, 220, and 420 may be modified in the same manner.
(1) The detection apparatus 320 may include a single camera instead of cameras 21 and 22. In this case, the detection apparatus 320 generates and outputs only the image data. Even in this case, for example, the control apparatus 1000 is configured to properly bring the light irradiation apparatus 60 or the like close to the circuit board T, on the basis of the result of the tracking process performed by the 2D tracking unit 302 (see FIG. 12) on the basis of the image data.
(2) The detection apparatus 320 may include a projector in addition to the cameras 21 and 22. In this case, the detection apparatus 320 may be configured to generate and output at least one of the image data and the shape data of the target object.
(3) The detection apparatus 320 may include a single camera and a projector instead of the cameras 21 and 22. In this case, for example, the detection apparatus 320 may be configured to project the structure light as illustrated in FIG. 7A to FIG. 7C from the projector to target object, and to generate the image data of the target object on which the structure light is projected, by using the single camera. The detection apparatus 320 may be configured to generate the shape data in addition to the image data. Various existing aspects may be applied to a method of generating the shape data, such as, for example, a phase shift method, a random dot method, and a TOF method.

### (Modified Examples of Detection Apparatus 330)

Although a modified example of the detection apparatus 330 will be described herein, the detection apparatuses 130, 230, and 430 may be modified in the same manner.
(1) The detection apparatus 330 may include a single camera instead of the cameras 31 and 32 and the projector 33. In this case, the detection apparatus 330 generates and outputs only the image data. Even in this case, for example, the control apparatus 1000 is configured to properly apply the processing light L to the construction target object, on the basis of the result of the tracking process performed by the 2D tracking unit 302 (see FIG. 12) on the basis of the image data.
(2) The detection apparatus 330 may not include the projector 33. In this case, the detection apparatus 330 may image the target object by using the cameras 31 and 32 at the same time, and to generate and output the shape data as a detection result on the basis of the two image data outputted respectively from the cameras 31 and 32, for example.
(3) The detection apparatus 330 may include a projector 33 and a single camera instead of the cameras 31 and 32. In this case, for example, the detection apparatus 330 may be configured to project the structure light as illustrated in FIG. 7A to FIG. 7C from the projector 33 to the target object, and to generate the image data of the target object on which the structure light is projected, by using the single camera. The detection apparatus 330 may be configured to generate the shape data in addition to the image data. Various existing aspects may be applied to a method of generating the shape data, such as, for example, a phase shift method, a random dot method, and a TOF method.

### (Modified Examples of Light Irradiation Apparatus 60)

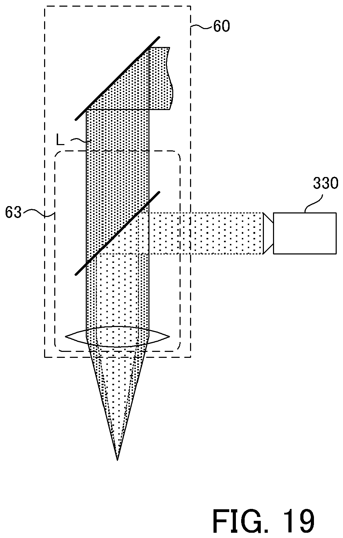

(1) In the robots 3 and 4 described above, the light irradiation apparatus 60 and the detection apparatuses 320, 330, 420, and 430 are individually provided on the robot arm 310 or 410. That is, the optical path of the processing light L in the light irradiation apparatus 60 is different from an optical path of each of the detection apparatuses 320, 330, 420, and 430 (to be exact, an optical path of the camera of each of the detection apparatuses 320, 330, 420, and 430). The configuration, however, is not limited to this example, and as illustrated in FIG. 19, a part of the optical path of the processing light L in the light irradiation apparatus 60 may be common to a part of the optical path of the detection apparatus 320, 330, 420, or 430 (to be exact, a part of the optical path of the camera of the detection apparatus 320, 330, 420, or 430). In other words, a final optical element 63 of the light irradiation apparatus 60 may constitute a part of the optical system of the camera of the detection apparatus 330, for example. That is, the light irradiation apparatus 60 may be a so-called coaxial laser processing head. The final optical element 63 may include the Galvano mirror 61 and the fθ lens 62.
(2) The light irradiation apparatus 60 may include a mechanism that is configured to change an optical path of a MEMS (Micro Electro Mechanical System) mirror, a polygon mirror, a DMD or the like, instead of the Galvano mirror 61. In this case, the mechanism that is configured to change the optical path may function as a scanning unit that is configured to scan the surface of the target object with the processing light L.
(3) The light irradiation apparatus 60 may not include the scanning unit such as the Galvano mirror 61.

### (Modified Examples of Matching Process and Tracking Process)

### First Modified Example

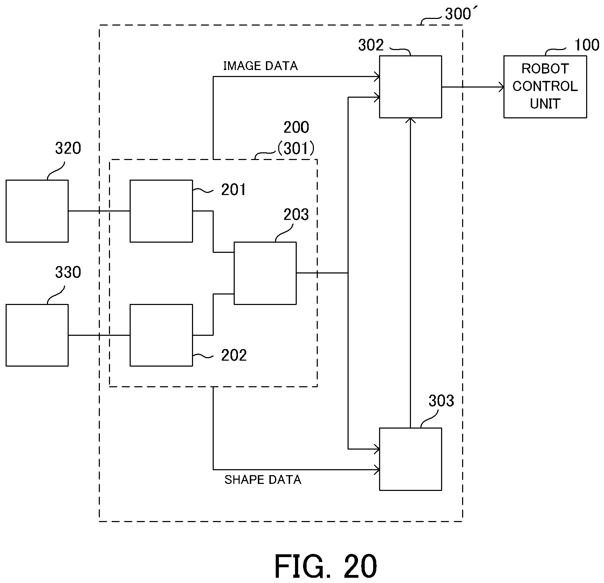

The control apparatus 1000 may include a tracking unit 300' illustrated in FIG. 20, instead of the matching processor 200 and the tracking unit 300, for example. In other words, the matching unit 301 of the tracking unit 300 may include a processing block or a processing circuit that is similar to the matching processor 200.

In the comparison unit 203 of the matching processor 200 of the tracking unit 300', when it is determined that the first matching ratio is greater than the second matching ratio (i.e., when the first matching ratio > the second matching ratio), the image data are inputted to the 2D tracking unit 302 from among the image data and the shape data outputted from the detection apparatus 320 at intervals of predetermined times, and the shape data are inputted to the 3D tracking unit 303 from among the image data and the shape data.

In addition, the comparison unit 203 outputs, to the 2D tracking unit 302, the position and the attitude (i.e., the position/attitude estimation result) of the target object calculated by the first matching unit 201 by the 2D matching that uses the image data outputted from the detection apparatus 320 at intervals of predetermined times. The comparison unit 203 outputs, to the 3D tracking unit 303, the position and the attitude (i.e., the position/attitude estimation result) of the target object calculated by the first matching unit 201 by the 3D matching that uses the shape data outputted from the detection apparatus 320 at intervals of predetermined times.

In the comparison unit 203, when it is determined that the second matching ratio is greater than or equal to the first matching ratio (i.e., when the first matching ratio ≦ the second matching ratio), the image data are inputted to the 2D tracking unit 302 from among the image data and the shape data outputted from the detection apparatus 330 at intervals of predetermined times, and the shape data are inputted to the 3D tracking unit 303 from among the image data and the shape data.

In addition, the comparison unit 203 outputs, to the 2D tracking unit 302, the position and the attitude (i.e., the position/attitude estimation result) of the target object calculated by the second matching unit 202 by the 2D matching that uses the image data outputted from the detection apparatus 330 at intervals of predetermined times. The comparison unit 203 outputs, to the 3D tracking unit 303, the position and the attitude (i.e., the position/attitude estimation result) of the target object calculated by the second matching unit 202 by the 3D matching that uses the shape data outputted from the detection apparatus 330 at intervals of predetermined times.

As described above, each of the first matching unit 201 and the second matching unit 202 may narrow down the range on which the 3D matching is to be performed, on the basis of the result of the 2D matching, and may perform the 3D matching by using the shape data corresponding to the narrowed range (see FIG. 10). In this method, each of the first matching part 201 and the second matching part 202 is allowed to perform the 3D matching at a high speed. In this case, the comparison unit 203 (see FIG. 9) may successively compare the respective results of the 3D matching performed by the first matching unit 201 and the second matching unit 202, and may output the position/attitude estimation result with a high matching ratio, to the 2D tracking unit 302 and the 3D tracking unit 303 at intervals of predetermined times.

The control apparatus 1000 may perform the matching process on the first matching unit 201 or the second matching unit 202 at intervals of predetermined times in accordance with the result of the comparison of the matching ratios in the comparison unit 203, and may correct the result of the tracking process (the calculation result of the position and the attitude of the target object) of each of the 2D tracking unit 302 and the 3D tracking unit 303, by using the result of the matching process generated by the first matching unit 201 or the second matching unit 202, on the basis of the result of the matching process (the calculation result of the position and the attitude of the target object). That is, as in the timing chart in FIG. 13, the control apparatus 1000 may correct the result of the tracking process of each of the 2D tracking unit 302 and the 3D tracking unit 303, on the basis of the result of the matching process at intervals of predetermined times.

The control apparatus 1000 may perform the matching process on the first matching unit 201 or the second matching unit 202 at intervals of predetermined times in accordance with the result of the comparison of the matching ratios in the comparison unit 203, and may correct the result of the tracking process of the 2D tracking unit 302 or the 3D tracking unit, by using the result of the matching process generated by the first matching unit 201 or the second matching unit 202, on the basis of the result of the matching process. In this case, the control apparatus 1000 may output the result of the matching process to at least one of the 2D tracking unit 302 and the 3D tracking unit 303 that correct the result of the tracking process through the comparison unit 203 from the first matching unit 201 or the second matching unit 202, on the basis of the result of the comparison of the matching ratios.

The control apparatus 1000 may not correct the result of the tracking process of each of the 2D tracking unit 302 and the 3D tracking unit 303, on the basis of the result of the matching process generated by the first matching unit 201 or the second matching unit 202.

The control apparatus 1000 may compare the matching ratios on the comparison unit 203, for all the results of the matching process outputted from each of the first matching unit 201 and the second matching unit 202 at intervals of predetermined times. In this case, the control apparatus 1000 may switch the result of the matching process outputted from the comparative unit 203 to the 2D tracking unit 302 and the 3D tracking unit 303, between the result of the matching process from the first matching unit 201 and the result of the matching process from the second matching unit 202, on the basis of the result of the comparison of the matching ratios generated by the comparison unit 203 at intervals of predetermined times.

The control apparatus 1000 may not compare the matching ratios on the comparison unit 203, for all the results of the matching process outputted from the first matching unit 201 and the second matching unit 202 at intervals of predetermined times. For example, the control apparatus 1000 may compare the matching ratios on the comparison unit 203, on the basis of the result of the matching process outputted from each of the first matching unit 201 and the second matching unit 202, at a time of starting the tracking process of the target object. The control apparatus 1000 may compare the matching ratios at a predetermined time point on the comparison unit 203, and may output, after that predetermined time point, the results of the matching process outputted from the first matching unit 201 or the second matching unit 202 at intervals of predetermined times on the basis of a result of the comparison of the matching ratios performed at the predetermined time point, to at least one of the 2D tracking unit 302 and the 3D tracking unit 303.

The control apparatus 1000 may output at least one of the result of the 2D matching process and the result of the 3D matching process, to at least one of the 2D tracking unit 302 and the 3D tracking unit 303 (through the comparison unit 203) from at least one of the first matching unit 201 and the second matching unit 202.

### Second Modified Example

Here, the detection apparatus 330 is exemplified as the detection apparatus, but the same may be applied to the detection apparatus 130, 230 and 430.

In the tracking process, the result of the tracking process by the 2D tracking unit 302 (hereinafter referred to as a "2D tracking process" as appropriate) is corrected by the result of the tracking process by the 3D tracking unit 303 (hereinafter referred to as a "3D tracking process" as appropriate), and the result of the 2D tracking process is outputted to the robot control unit 100 (see FIG. 12).

The method of the tracking process, however, is not limited to the above-described method (see FIG. 12).

For example, in the control apparatus 1000, the result of the tracking to be outputted to the robot control unit 100 may be selected (switched), on the basis of a predetermined determination condition, from among the result of the 2D tracking process and the result of the tracking process by the 3D tracking unit 303 (hereinafter referred to as a "3D tracking process" as appropriate). In other words, in the control apparatus 1000, the result of the tracking process to be outputted to the robot control unit 100 is successively selected and outputted to the robot control unit 100, on the basis of a predetermined determination condition, for the result of the 2D tracking process and the result of the 3D tracking process that are generated at intervals of predetermined times. Here, the predetermined determination condition includes, for example, the number of the feature areas of the target object extracted by the 2D tracking process, a temporal change in the position and the attitude of the target object calculated by the 2D tracking process, and a differences between the position and the attitude calculated by the 2D tracking process and the position and the attitude calculated by the 3D tracking process.

For example, in the control apparatus 1000, the number of the feature areas extracted by the 2D tracking process is detected. When the number of the detected feature areas is less than a predetermined number, the result of the 3D tracking process is outputted to the robot control unit 100. This is because the estimation accuracy of the position and the attitude of the target object by the 2D tracking process is lowered when the number of the feature areas is low. In the control apparatus 1000, the result of the 3D tracking process that has a higher estimation accuracy of the position and the attitude of the target object than that of 2D tracking process, is outputted to the robot control unit 100.

In addition, for example, in the control apparatus 1000, the temporal change in the position and the attitude of the target object calculated by the 2D tracking process is calculated. In the control apparatus 1000, the calculated temporal change in the position and the attitude of the target object is divided into temporal changes on the respective axes of the coordinate system of the robot arm (the coordinate system defined by the X axis, the Y axis, and the Z axis). When each of the temporal change on the X axis, the temporal change on the Y axis, and the temporal change on the Z axis is greater than a predetermined threshold, the result of the 3D tracking process is outputted to the robot control unit 100. This is because the estimation accuracy of the position and the attitude of the target object by the 2D tracking process is lowered when the position and the attitude of the target object are significantly changed in three dimensions. In the control apparatus 1000, the result of the 3D tracking process with a higher estimation accuracy of the position and the attitude of the target object than that of the 2D tracking process, is outputted to the robot control unit 100.

Furthermore, for example, in the control apparatus 1000, the difference is calculated between the position and the attitude calculated by the 2D tracking process and the position and the attitude calculated by the 3D tracking process. When the difference is greater than a predetermined threshold, the result of the 3D tracking process is outputted to the robot control unit 100. This is because it is considered that many errors are included in the result of the 2D tracking process with a lower estimation accuracy of the position and the attitude of the target object by the 3D tracking process, when the difference is high between the position and the attitude calculated by the 2D tracking process and the position and the attitude calculated by the 3D tracking process.

In the control apparatus 1000, the result to be outputted to the robot control unit 100 may be selected, on the basis of at least one of the predetermined determination conditions that are the number of the feature areas of the target object extracted by the 2D tracking process, the temporal change in the position and the attitude of the target object calculated by the 2D tracking process, and the difference between the position and the attitude calculated by the 2D tracking process and the position and the attitude calculated by the 3D tracking process. In addition, when the result to be outputted to the robot control unit 100 is selected on the basis of a plurality of determination conditions from among the predetermined determination conditions, and, for example, when it is determined in the control apparatus 1000 that the selected result based on at least one determination condition from among the plurality of determination conditions is the result of the 3D tracking process to be outputted to the robot control unit 100, the result of the 3D tracking process may be outputted to the robot control unit 100, whichever result is selected on the basis of another determination condition. As described above, the control apparatus 1000 selects the result of the tracking process to be outputted to the robot control unit 100 on the basis of the predetermined determination condition. Therefore, it is possible to switch between the process that prioritizes a processing speed (the 2D tracking) and the process that prioritizes the estimation accuracy (the 3D tracking) and to perform an appropriate tracking process, in accordance with the change in the position, attitude and type of the target object.

Since the processes by the control apparatus 1000, other than the process of selecting the result of the 2D tracking process and the result of the 3D tracking process on the basis of the predetermined determination condition, are the same as those described above, a description thereof will be omitted.

The second modified example is also applicable to the tracking unit 300' illustrated in FIG. 20. In other words, even in the tracking unit 300', it is possible to adopt the same aspect as the second modified example. When the second modified example is applied to the tracking unit 300' illustrated in FIG. 20, each of the first matching unit 201 and the second matching unit 202 may narrow down the range on which the 3D matching is to be performed, on the basis of the result of the 2D matching, and may perform the 3D matching by using the shape data corresponding to the narrowed range (see FIG. 10), as described above. In this method, each of the first matching part 201 and the second matching part 202 is allowed to perform the 3D matching at a high speed.

### Third modified example

In the first and second example embodiments, for example, which of the output of the detection apparatus 320 and the output of the detection apparatus 330 is inputted to the tracking unit 300, is determined in accordance with the result of the comparison of the matching ratios by the matching processor 200 (see FIG. 9). The control apparatus 1000, however, may not include the matching processor 200. In this case, the control apparatus 1000 may perform the following tracking process.

As described above, the detection apparatus 320 of the robot 3 is configured to detect at least a part of the circuit board T from a wide range when the light irradiation apparatus 60 is relatively far from the circuit board T, and the detection apparatus 330 is configured to detect a part of the circuit board T with high accuracy such that the light irradiation apparatus 60 is brought closer to the part to apply the processing light L to the part of the circuit board T (e.g., the predetermined part described above) when the light irradiation apparatus 60 is relatively close to the circuit board T.

For example, the control apparatus 1000 may control the driver 311 such that the light irradiation apparatus 60 and the detection apparatuses 320 and 330 are brought close to the circuit board T, on the basis of at least one of the image data and the shape data generated by the detection apparatus 320, which may be referred to as a first imager, detecting the light from the circuit board T. For example, when the light irradiation apparatus 60 and the detection apparatuses 320 and 330 are close to the circuit board T by a predetermined distance, the control apparatus 1000 may control the Galvano mirror 61 such that the processing light L from the light irradiation apparatus 60 that is displaced with the detection apparatus 330 is applied to the same position on the circuit board T, on the basis of at least one of the image data and the shape data that are generated by the detection apparatus 330, which may be referred to as a second imager, detecting the light from the circuit board T and that are changed in accordance with the displacement of the detection apparatus 330.

In other words, the control apparatus 1000 may control the driver 311 of the robot arm 310 such that the light irradiation apparatus 60 is brought close to the circuit board T, on the basis of the output of the detection apparatus 320 (e.g., at least one of the image data and the shape data), when the light irradiation apparatus 60 is relatively far from the circuit board T. The control apparatus 1000 may control the driver 311 such that the light irradiation apparatus 60 is in a desired position and attitude, on the basis of the output of the detection apparatus 330 (e.g., at least one of the image data and the shape data), when the light irradiation apparatus 60 is relatively close to the circuit board T. The control apparatus 1000 may also control the direction of the Galvano mirror 61 such that the processing light L applied from the light irradiation apparatus 60 is applied to the same position on the circuit board T.

For example, the desired position and the desired attitude in the robot 3 are the relative position and the relative attitude of the light irradiation apparatus 60 with respect to the circuit board T that allow the solder on the circuit board T to be properly melted by the processing light L applied from the light irradiation apparatus 60. The control apparatus 1000 may control the driver 311 such that the light irradiation apparatus 60 is brought closer to the circuit board T, on the basis of the output of the detection apparatus 330.

The control apparatus 1000 performs the CAD matching (corresponding to the above-described 2D matching) of the target object that uses the image data outputted from the detection apparatus 320 while the light irradiation apparatus 60 or the like of the robot 3 is relatively far from the circuit board T, thereby to specify the position of the target object in the image indicated by the image data, for example. Then, the control apparatus 1000 determines a range (e.g., corresponding to a range A illustrated in FIG. 10B) in which the CAD matching (the above-described 3D matching) of the target object that uses the shape data outputted from the detection apparatus 320 is to be performed, on the basis of the position of the specified target object. Then, the control apparatus 1000 performs the CAD matching of the target object by using the shape data corresponding to the determined range.

At this time, the control apparatus 1000 calculates the matching ratio of the CAD matching of the target object that uses the image data and the matching ratio of the CAD matching of the target object that uses the shape data.

In parallel with the matching, the control apparatus 1000 performs a tracking process that is similar to the tracking process performed on the tracking unit 300, by using the image data and the shape data outputted from the detection apparatus 320. Therefore, the control apparatus 1000 controls the driver 311 such that the light irradiation apparatus 60 or the like is brought close to the circuit board T, on the basis of the image data and the shape data outputted from the detection apparatus 320.

As the light irradiation apparatus 60 or the like is brought closer to the circuit board T, the matching ratio of the CAD matching of the target object that uses the image data and the shape data each outputted from the detection apparatus 320 is reduced. This is because the image of the circuit board T captured by the cameras 21 and 22 of the detection apparatus 320 is blurred, the entire circuit board T is not in the fields of view of the cameras 21 and 22, and the number of the feature areas in the matching is reduced, for example.

The control apparatus 1000 performs the CAD matching of the target object that uses each of the image data and the shape data outputted from the detection apparatus 330, instead of the image data and the shape data outputted from the detection apparatus 320, when the matching ratio of the CAD matching of the target object that uses each of the image data and the shape data outputted from the detection target object 320 is less than or equal to a threshold. In addition, the control apparatus 1000 performs a tracking process that is similar to the tracking process performed on the tracking unit 300, by using the image data and the shape data outputted from the detection apparatus 330, instead of the image data and the shape data outputted from the detection apparatus 320. Consequently, the control apparatus 1000 controls the driver 311 such that the light irradiation apparatus 60 or the like is brought closer to the circuit board T, on the basis of the image data and the shape data outputted from the detection apparatus 330, instead of the image data and the shape data outputted from the detection apparatus 320.

The control apparatus 1000 may not need to determine a range on which the CAD matching of the target object that uses the shape data is to be performed, by using the result of the CAD matching of the target object that uses the image data. The control apparatus 1000 may perform the matching and the tracking, by using only one of the image data and the shape data. When the control apparatus 1000 performs the matching and the tracking by using only the shape data, the detection apparatuses 320 and 330 may not generate the image data (in other words, they may generate only the shape data). When the control apparatus 1000 performs the matching and the tracking by using only the image data, the detection apparatuses 320 and 330 may not generate the shape data (in other words, they may generate only the image data). In this case, the detection apparatuses 320 and 330 may include only a single camera.

The control apparatus 1000 may not calculate the matching ratio. In this case, for example, when a degree of blurring of the image of the target object captured by the cameras 21 and 22 of the detection apparatus 320 is greater than or equal to a threshold, the control apparatus 1000 may perform the tracking by using the image data and the shape data outputted from the detection apparatus 330, instead of the image data and the shape data outputted from the detection apparatus 320. Alternatively, for example, when the number of feature points at the time of matching that uses the image data and the shape data outputted from the detection apparatus 320 is less than or equal to a threshold, the control apparatus 1000 may perform the tracking by using the image data and the shape data outputted from the detection apparatus 330, instead of the image data and the shape data outputted from the detection apparatus 320.

### <Third Example Embodiment>

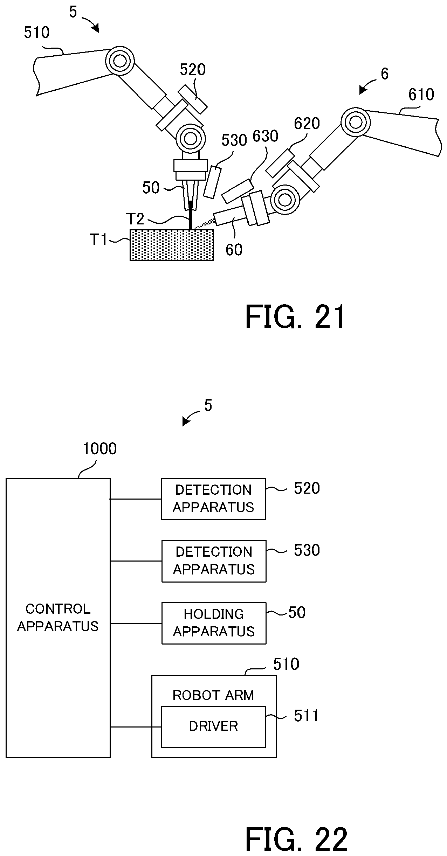

A third example embodiment will be described with reference to FIG. 21 to FIG. 24. In this example embodiment, a welding system including a robot that performs laser welding is exemplified. In the third example embodiment, a description that overlaps with that of the first example embodiment will be omitted, and the same parts on the drawings carry the same reference numerals. A basically different point will be described with reference to FIG. 21 to FIG. 24.

A laser welding system according to the third example embodiment will be described with reference to FIG. 21 to FIG. 24. In FIG. 21, the laser welding system is a system that welds a component T1 and a component T2, for example. The laser welding system includes a robot 5 and a robot 6.

Here, the "welding" is a concept including fusion welding, brazing, overlay welding, and the like, for example. In the case of the fusion welding, for example, the components T1 and T2 are metallic members (i.e., base metals). In the case of the brazing, for example, a metal (i.e., a brazing/melting material) with a lower melting point than those of the components T1 and T2, is disposed between the component T1 and the component T2 (not illustrated). In the case of the overlay welding, a metal for overlay may be supplied from a robot (not illustrated) that is different from the robots 5 and 6, for example.

Examples of the irradiation position of a laser light (in other words, a welding spot) include, for example, a boundary between the component T1 and the component T2 generated when an end of the component T1 butts against an end of the component T2, a boundary between the component T1 and the component T2 generated when one of the components T1 and T2 is disposed upright on the other of the components T1 and T2 (see FIG. 20), a boundary generated when at least a part of one of the components T1 and T2 overlaps at least a part of the other of the components T1 and T2, and the like. In these boundaries, the components T1 and T2 may not be in contact (in other words, there may be a gap between the component T1 and the component T2).

The robot 5, which may be referred to as a processing apparatus, includes a robot arm 510. The robot arm 510 is provided with the holding apparatus 50 that is configured to hold the component T2, and detection apparatuses 520 and 530 that detect a light from the component T2, for example. The robot arm 510 includes a driver 511 that moves the holding apparatus 50 and the detection apparatuses 520 and 530.

The robot 6, which may be referred to as a processing apparatus, is a robot that applies a laser light as the processing light to the target obj ect (here, the welding part). The robot 6 includes a robot arm 610. The robot arm 610 is provided with the light irradiation apparatus 60 that applies a laser light as the processing light, and detection apparatuses 620 and 630 that detect a light from the target object. The robot arm 610 includes a driver 611 that moves the light irradiation apparatus 60 and the detection apparatuses 620 and 630.

Here, the detection apparatuses 520 and 620 correspond to the detection apparatus 320. The detection apparatuses 520 and 620 may have the same configuration as that of the detection apparatus 320. The detection apparatuses 530 and 630 correspond to the detection apparatus 330. The detection apparatuses 530 and 630 may have the same configuration as that of the detection apparatus 330. The light irradiation apparatus 60 may not include the scanning unit such as the Galvano mirror 61.

In FIG. 21, the detection apparatus 520 is disposed on an arm part of the robot arm 510. The detection apparatus 530 is disposed on a wrist part of the robot arm 510. The detection apparatus 620 is disposed on an arm part of the robot arm 610. The detection apparatus 630 is disposed on a wrist part of the robot arm 610. The arrangement of the detection apparatuses 520, 530, 620, and 630, however, is not limited to this example. The robot 5 may include another detection apparatus in addition to the detection apparatuses 520 and 530 (i.e., the robot 5 may include three or more detection apparatuses). The robot 5 may include only one of the detection apparatuses 520 and 530. Similarly, the robot 6 may include another detection apparatus in addition to the detection apparatuses 620 and 630 (i.e., the robot 6 may include three or more detection apparatuses). The robot 6 may include only one of the detection apparatuses 620 and 630.

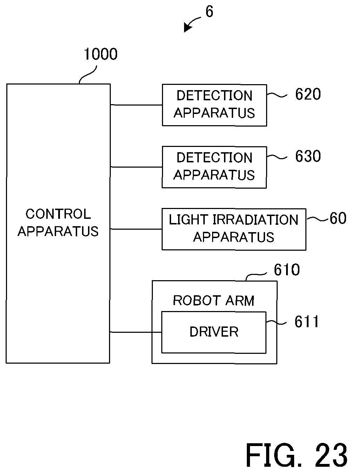

The laser welding system includes the control apparatus 1000 (see FIG. 22 and FIG. 23) (i) that controls the holding apparatus 50 as an end effector of the robot 5 such that the component T2 is held at a predetermined position on the component T1, for example, and (ii) that controls the driver 611 of the robot arm 610 such that the light irradiation apparatus 60 as an end effector of the robot 6 is brought close to the components T1 and T2, on the basis of a detection result of at least one of the detection apparatuses 620 and 630, and controls the light irradiation apparatus 60 to weld the components T1 and T2.

The control apparatus 1000 may control the driver 511 such that the component T2 held by the holding apparatus 50 that is displaced with the displacement of at least one of the detection apparatuses 520 and 530, maintains a predetermined position on the component T1, on the basis of the at least one of the image data and the shape data that are changed in accordance with the displacement of at least one of the detection apparatuses 520 and 530, for the robot 5, for example.

The control apparatus 1000 may control the direction of the Galvano mirror 61 such that the laser light as the processing light from the light irradiation apparatus 60 that is displaced with the displacement of at least one of the detection apparatuses 620 and 630, is applied to the target object (in this case, the welding part), on the basis of at least one of the image data and the shape data that are changed in accordance with the displacement of at least one of the detection apparatus es620 and 630, for the robot 6.

The control apparatus 1000 may be an apparatus that is different from the robot 5, or may constitute a part of the robot 5 (in other words, the robot 5 may include the control apparatus 1000). Similarly, the control apparatus 1000 may be an apparatus that is different from the robot 6, or may constitute a part of the robot 6 (in other words, the robot 6 may include the control apparatus 1000).

At least one of the robot arm510 and 610 may be mounted on the AGV (Automatic Guided Vehicle), for example. In this case, the control apparatus 1000 may control at least one of the driving unit of the AGV, an end effector of the at least one of the robot arms 510 and 610, and the driver of the at least one of the robot arms 510 and 610, on the basis of information about the position and the attitude of the target object obtained by the matching process and the tracking process described above and described later.

### (Operation of Each Robot)

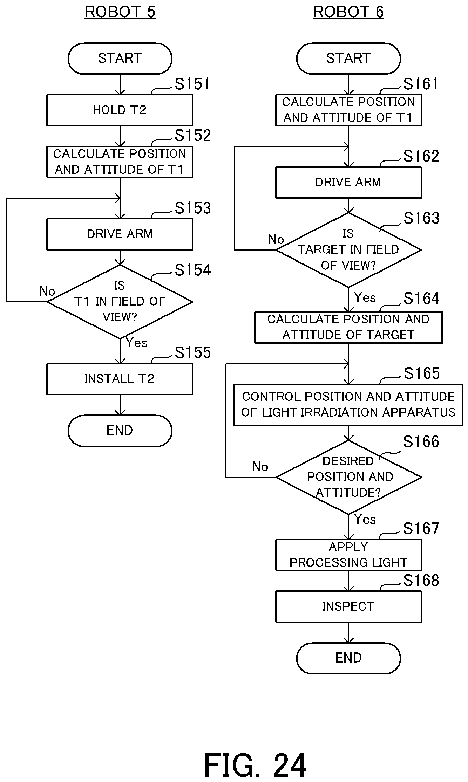

The operation of each of the robots 5 and 6 will be described with reference to a flowchart in FIG. 24. In the following description, it is assumed that the component T2 illustrated in FIG. 21 is of a flat plate shape extending toward a depth direction of a paper surface. It is assumed that the laser light as the processing light from the light irradiation apparatus 60 is applied to at least a part of the boundary between the component T1 and the component T2, as the target object.

### Robot 5

For example, the holding apparatus 50 includes a gripper that is configured to open and close the tip(s). The control apparatus 1000 may perform the calibration of the holding apparatus 50 before the following steps S151 to S155.

It is assumed that the robot arm 510 is provided with the detection apparatus 530 and the holding apparatus 50 in such a positional relationship that the tip of the holding apparatus 50 (i.e., in the case of the gripper, a tip of the gripper that is in contact with the component T2 when holding the component T2) is in the field of view of each of the cameras 31 and 32 of the detection apparatus 530 having the same configuration as that of the detection apparatus 330. For convenience of explanation, the cameras are referred to as the cameras 31 and 32 of the detection apparatus 530, as an example in which the detection apparatus 530 includes the same cameras 31 and 32 as those of the detection apparatus 330.

The control apparatus 1000 performs the matching process by using the CAD data of the holding apparatus 50 and the shape data outputted from the detection apparatus 530 when the holding apparatus 50 does not hold the component T2, and calculates in advance the position and the attitude of the holding apparatus 50 (e.g., the position and the attitude of the tip of the gripper included in the fields of view of the cameras 31 and 32 of the detection apparatus 530), as the calibration of the holding apparatus 50. That is, the control apparatus 1000 calculates in advance the position and the attitude of the holding apparatus 50 in the coordinate system of the robot arm 510, on the basis of the shape data of at least a part of the holding apparatus 50 (e.g., the tip of the gripper).

The control apparatus 1000 may obtain a correlation between the coordinate system of the coordinate system of the holding apparatus 50 and the coordinate system of the detection apparatus 530, on the basis of the shape data of at least a part of the holding apparatus 50, as the calibration of the holding apparatus 50. Then, the control apparatus 1000 may calculate the position and the attitude of the holding apparatus 50 in the coordinate system of the robot arm 510, on the basis of a correlation obtained in advance between the coordinate system of the robot arm 510 and the coordinate system of the detection apparatus 530, and the correlation between the coordinate system of the holding apparatus 50 and the coordinate system of the detection apparatus 530. The control apparatus 1000 may not calculate the position and the attitude of the holding apparatus 50 in the coordinate system of the robot arm 510 as the calibration of the holding apparatus 50, but may calculate the correlation between the coordinate system of the holding apparatus 50 and the coordinate system of the detection apparatus 530. The correlation between the coordinate system of the holding apparatus 50 and the coordinate system of the detection apparatus 530 may be a transformation matrix between the coordinate system of the holding apparatus 50 and the coordinate system of the detection apparatus 530. When performing the calibration of the holding apparatus 50, the control apparatus 1000 may control the driver 511 to move the robot arm 510, on the basis of the calibration result of the holding apparatus 50 and the position and the attitude of the target object (e.g., the component T2) calculated in a step S151 described later. Furthermore, the control apparatus 1000 may control the driver 511 to move the robot arm 510 in a step S153 described later, on the basis of the calibration result of the holding apparatus 50 and the position and the attitude of the target object (e.g., the component T1) calculated in a step S152 described later, for example. The calibration result of the holding apparatus 50 may be, for example, the position and the attitude of the holding apparatus 50 in the coordinate system of the robot arm 510, or may be the correlation between the coordinate system of the holding apparatus 50 and the coordinate system of the detection apparatus 530.

As described above, the robot control unit 100 may not be a part of the control apparatus 1000, and may be configured separately from the control apparatus 1000. In this case, the control apparatus 1000 may generate a control signal for controlling the robot arm 510 (the driver 511), on the basis of the calibration result of the holding apparatus 50 and the calculated position and attitude of the target object. The control apparatus 1000 may output the generated control signal to the robot control unit 100. The robot control unit 100 may generate a drive signal for driving the driver 511 on the basis of the control signal outputted from the control apparatus 1000. The robot control unit 100 may drive the driver 511 on the basis of the generated drive signal.

As the calibration of the holding apparatus 50, the control apparatus 1000 may use not only the detection apparatus 530, but also may use the image data and the shape data outputted from the detection apparatus 520. In this case, the assumption is that the robot arm 510 is provided with the detection apparatus 520 and the holding apparatus 50 in such a positional relationship that the tip of the holding apparatus 50 is in the field of view of each of the cameras 21 and 22 of the detection apparatus 520 having the same configuration as that of the detection apparatus 320.

In the following steps S151 to S155, the position and the attitude of the holding apparatus 50 with respect to the detection apparatus 530 may be changed in some cases because the holding apparatus 50 is brought into contact with a predetermined object or for similar reasons. In this case, the control apparatus 1000 may detect a change in the position and the attitude of the holding apparatus 50 with respect to the detection apparatus 530, on the basis of a change in a part of the holding apparatus 50 (e.g., a change in a part of the holding apparatus 50 on the image) in the image data and the shape data outputted from the detection apparatus 530. When detecting the change in the position and the attitude of the holding apparatus 50 with respect to the detection apparatus 530, the control apparatus 1000 may perform the calibration.

Before the step S152 described later, the control apparatus 1000 controls the holding apparatus 50 and the driver 511 of the robot arm 510 such that the component T2 is held by the holding apparatus 50, by bringing the holding apparatus 50 of the robot 5 close to a component storage unit (not illustrated) to hold the component T2, for example. The control apparatus 1000 may perform at least one of the matching process and the tracking process in a process of picking the component T2, and may hold a desired component T2 by using the holding apparatus 50. Here, the control apparatus 1000 may determine the force of holding (the force of gripping) the component T2 in the holding apparatus 50, in accordance with a size of the component T2 calculated by at least one of the matching process and the tracking process. This makes it possible to prevent the component T2 from falling off the holding apparatus 50 or from damaging, due to the holding of the component T2 by the holding apparatus 50.

After the step S151, the control apparatus 1000 that controls the robot 5, calculates the position and the attitude of the component T1 (step S152). In the step S152, the control apparatus 1000 calculates the position and the attitude at the initial stage (i.e., the initial position and attitude) of the component T1 by the matching process of the matching unit 301. In addition, the control apparatus 1000 calculates the position of a spot on the component T1 on which the component T2 is to be disposed, on the basis of design data of the welded components T1 and T2.

Then, the control apparatus 1000 controls the driver 511 to move the robot arm 510 such that the holding apparatus 50 (the detection apparatuses 520 and 530) is brought close to the component T1 (step 153). In the step S153, the control apparatus 1000 controls the driver 511 of the robot arm 510 such that the spot on the component T1 on which the component T2 is to be disposed is in the field of view of at least one of the detection apparatus 520 and the detection apparatus 530.

Then, the control apparatus 1000 determines whether or not the spot on the component T1 on which the component T2 is to be disposed is in the field of view of at least one of the detection apparatus 520 and the detection apparatus 530 (step S154). In the step S154, the control apparatus 1000 determines whether or not the detection apparatus 520 and the detection apparatus 530 are in a desired position and attitude with respect to the spot on the component T1 on which the component T2 is to be disposed, on the basis of information about the position and the attitude of the spot on the component T1 on which the component T2 is to be disposed, calculated in the step S152, and information about the position and the attitude of the component T1 outputted from the 2D tracking unit 302 at intervals of predetermined times. At this time, when the detection apparatus 520 and the detection apparatus 530 are in a desired position and attitude with respect to the spot on the component T1 on which the component T2 is to be disposed, the control apparatus 1000 determines that the spot on the component T1 on which the component T2 is to be disposed is in the field of view of at least one of the detection apparatus 520 and the detection apparatus 530.

In the step S124, when it is determined that the spot on the component T1 on which the component T2 is to be disposed is not in the field of view of at least one of the detection apparatus 520 and the detection apparatus 530 (the step S154: No), the control apparatus 1000 controls the driver 511 to continue to move the robot arm 510, on the basis of information about the position and the attitude of the component T1 outputted from the 2D tracking unit 302 at intervals of predetermined times, and information about the position and the attitude of the spot on the component T1 on which the component T2 is to be disposed, calculated in the step S152.

On the other hand, in the step S154, when it is determined that the spot on the component T1 on which the component T2 is to be disposed is in the field of view of at least one of the detection apparatus 520 and the detection apparatus 530 (the step S154: Yes), the control apparatus 1000 controls the holding apparatus 50 such that the component T2 is disposed on the spot on the component T1 on which the component T2 is to be disposed (step S155).

### Robot 6

First, the control apparatus 1000 may perform the calibration of the light irradiation apparatus 60 before the following steps S161 to S168.

It is assumed that the robot arm 610 is provided with the detection apparatus 630 and the light irradiation apparatus 60 in in such a positional relationship that a part (e.g., the tip) of the light irradiation apparatus 60 is in the field of view of each of the cameras 31 and 32 of the detection apparatus 630.

The control apparatus 1000 performs the matching process by using the CAD data of the light irradiation apparatus 60 and the shape data including a part of the light irradiation apparatus 60 outputted from the detection apparatus 630, and calculates in advance the position and the attitude of the light irradiation apparatus 60 (e.g., the position and the attitude of the tip of the light irradiation apparatus 60 included in the fields of view of the cameras 31 and 32 of the detection apparatus 630), as the calibration of the light irradiation apparatus 60. That is, the control apparatus 1000 calculates in advance the position and the attitude of the light irradiation apparatus 60 in the coordinate system of the robot arm 610, on the basis of the shape data of at least a part of the light irradiation apparatus 60.

The control apparatus 1000 may obtain a correlation between the coordinate system of the light irradiation apparatus 60 and the coordinate system of the detection apparatus 630, on the basis of the shape data of at least a part of the light irradiation apparatus 60, as the calibration of the light irradiation apparatus 60. Then, the control apparatus 1000 may calculate the position and the attitude of the light irradiation apparatus 60 in the coordinate system of the robot arm 610, on the basis of a correlation obtained in advance between the coordinate system of the robot arm 610 and the coordinate system of the detection apparatus 630, and the correlation between the coordinate system of the light irradiation apparatus 60 and the coordinate system of the detection apparatus 630. The control apparatus 1000 may not calculate the position and the attitude of the light irradiation apparatus 60 in the coordinate system of the robot arm 610 as the calibration of the light irradiation apparatus 60, but may calculate the correlation between the coordinate system of the light irradiation apparatus 60 and the coordinate system of the detection apparatus 630. The correlation between the coordinate system of the light irradiation apparatus 60 and the coordinate system of the detection apparatus 630 may be a transformation matrix between the coordinate system of the light irradiation apparatus 60 and the coordinate system of the detection apparatus 630. When performing the calibration of the light irradiation apparatus 60, the control apparatus 1000 may control the driver 611 to move the robot arm 610 in a step S162 described later, on the basis of the calibration result of the light irradiation apparatus 60 and the position and the attitude of the target object (e.g., the component T1) calculated in a step S161 described later, for example. Furthermore, the control apparatus 1000 may control the driver 611 to move the robot arm 610 in a step S165 described later, on the basis of the calibration result of the light irradiation apparatus 60 and the position and the attitude of the target object (e.g., the boundary between the component T1 and the component T2) calculated in a step S164 described later, for example. The calibration result of the light irradiation apparatus 60 may be the position and the attitude of the light irradiation apparatus 60 in the coordinate system of the robot arm 610, or may be the correlation between the coordinate system of the light irradiation apparatus 60 and the coordinate system of the detection apparatus 630, for example.

As described above, the robot control unit 100 may not be a part of the control apparatus 1000, and may be configured separately from the control apparatus 1000. In this case, the control apparatus 1000 may generate a control signal for controlling the robot arm 610 (the driver 611) on the basis of the calibration result of the light irradiation apparatus 60 and the calculated position and attitude of the target object. The control apparatus 1000 may output the generated control signal to the robot control unit 100. The robot control unit 100 may generate a drive signal for driving the driver 611 on the basis of the control signal outputted from the control apparatus 1000. The robot control unit 100 may drive the driver 611 on the basis of the generated drive signal.

The marker may be also provided in a part of the light irradiation apparatus 60 included in the field of view of each of the cameras 31 and 32 of the detection apparatus 630. In this case, the control apparatus 1000 may perform the calibration on the basis of the shape data including the marker outputted from the detection apparatus 630, for example.

The control apparatus 1000 may perform the matching process by using not only the shape data, but also the image data outputted from the detection apparatus 630 and the CAD data of the light irradiation apparatus 60, thereby to perform the calibration of the light irradiation apparatus 60. The control apparatus 1000 may use not only the CAD data, but also the image data and the shape data of the light irradiation apparatus 60 obtained in advance, in the matching process, as described above.

As the calibration of the light irradiation apparatus 60, the control apparatus 1000 may use not only the detection apparatus 630, but also may use the image data and the shape data outputted from the detection apparatus 620. In this case, the assumption is that the robot arm 310 is provided with the detection apparatus 620 and the light irradiation apparatus 60 in such a positional relationship that a part of the light irradiation apparatus 60 is in the field of view of each of the cameras 21 and 22 of the detection apparatus 620.

In the following steps S161 to S168, the position and the attitude of the light irradiation apparatus 60 with respect to the detection apparatus630 may be changed in some cases because the light irradiation apparatus 60 is brought into contact with a predetermined object or for similar reasons. In this case, the control apparatus 1000 may detect a change in the position and the attitude of the light irradiation apparatus 60 with respect to the detection apparatus 630, on the basis of a change of a part of the light irradiation apparatus 60 in the image data and the shape data outputted from the detection apparatus 630 (e.g., a change of a part of the light irradiation apparatus 60 on the image). When detecting the change in the position and the attitude of the light irradiation apparatus 60 with respect to the detection apparatus 630, the control apparatus 1000 may perform the calibration.

The control apparatus 1000 that controls the robot 6 calculates (estimates) the position and the attitude of the component T1 as an example of the target object (step S161). In the step S161, the control apparatus 1000 calculates the position and the attitude at the initial stage (i.e., the initial position and attitude) of the component T1 by the matching process of the matching unit 301. In addition, the control apparatus 1000 calculates the position of the boundary between the component T1 and the component T2. The control apparatus 1000 calculates the position and the attitude of a welding start spot (in other words, the position and the attitude of an irradiation start spot of the processing light L) and the position and the attitude of a welding end spot in the components T1 and T2, on the basis of the design data of the welded components T1 and T2, for example. The control apparatus 1000 may not calculate the position and the attitude (the initial position and attitude) of the component T1, but may calculate the position and the attitude of the component T2, and may calculate the position and the attitude of the components T1 and T2.

Then, the control apparatus 1000 controls the driver 611 to move the robot arm 610 such that the detection apparatuses 620 and 630 (or even the light irradiation apparatus 60) are brought close to the component T1 (step 162). In the step S162, the control apparatus 1000 controls the driver 611 of the robot arm 610 such that at least a part of the boundary between the component T1 and the component T2 (i.e., the target object) is in the field of view of at least one of the detection apparatus 620 and the detection apparatus 630 by the 2D tracking process, on the basis of information about the position and the attitude at the initial stage of the component T1 calculated in the step S161, and information about the position and the attitude of the welding start spot in the components T1 and T2.

Then, the control apparatus 1000 determines whether or not at least a part of the boundary between the component T1 and the component T2 is in the field of view of at least one of the detection apparatus 620 and the detection apparatus 630 (step S163). In the step S163, the control apparatus 1000 determines whether or not the detection apparatus 620 and the detection apparatus 630 are in a desired position and attitude with respect to the welding start spot in the boundary between the component T1 and the component T2, on the basis of information about the position and the attitude of the welding start spot in the components T1 and T2 calculated in the step S161, information about the position and the attitude of at least a part of the boundary between the component T1 and the component T2 calculated in the step S161, and information about the position and the attitude of at least a part of the boundary between the component T1 and the component T2 outputted from the 2D tracking unit 302 at intervals of predetermined times. At this time, when the detection apparatus 620 and the detection apparatus 630 are in a desired position and attitude with respect to the welding start spot in the boundary between the component T1 and the component T2, the control apparatus 1000 determines that the welding start spot in the boundary between the component T 1 and the component T2 is in the field of view of at least one of the detection apparatus 620 and the detection apparatus 630.

In the step S163, when it is determined that the welding start spot in the boundary between the component T1 and the component T2 is not in the field of view of at least one of the detection apparatus 620 and the detection apparatus 630 (the step S163: No), the control apparatus 1000 controls the driver 611 to continue to move the robot arm 610, on the basis of information about the position and the attitude of the component T1 outputted from the 2D tracking unit 302 of the tracking unit 300 at intervals of predetermined times, and information about the position and the attitude of the welding start spot in the components T1 and T2 calculated in the step S161. That is, the step S162 is performed until it is determined that at least a part of the boundary between the component T1 and the component T2 is in the field of view of at least one of the detection apparatus 620 and the detection apparatus 630.

On the other hand, in the step S163, when it is determined that the welding start spot in the boundary between the component T 1 and the component T2 is in the field of view of at least one of the detection apparatus 620 and the detection apparatus 630 (the step S163: Yes), the control apparatus 1000 calculates (estimates) the position and the attitude of the welding start spot in the boundary between the component T1 and the component T2 (step S164). In the step S164, the control apparatus 1000 calculates (estimates) the position and the attitude at the initial stage (the initial position and attitude) of the welding start spot in the boundary between the component T1 and the component T2 by the matching process of the matching unit 301.

Then, the control apparatus 1000 controls the driver 611 to move the robot arm 610 such that the position and the attitude of the light irradiation apparatus 60 are a desired position and a desired attitude that allow the welding of the welding start spot in the boundary between the component T1 and the component T2 by a laser light as the processing light (step S165). In the step S165, the control apparatus 1000 controls the driver 611 to move the robot arm 610, on the basis of the position and the attitude of the welding start spot in the boundary between the component T2 and the component T1 outputted from the 2D tracking unit 302 of the tracking unit 300 at intervals of predetermined times, by using information about the initial position and attitude of the welding start spot in the boundary between the component T1 and the component T2 calculated (estimated) in the step S164. In other words, the control apparatus 1000 controls the driver 611 to move the robot arm 610 such that the light irradiation apparatus 60 (the detection apparatuses 620 and 630) is brought close to the welding start spot in the boundary between the component T1 and the component T2.

Then, the control apparatus 1000 determines whether or not the position and the attitude of the light irradiation apparatus 60 are a desired position and a desired attitude that allow the welding of the welding start spot in the boundary between the component T 1 and the component T2 by the laser light as the processing light (step S166). In the step S166, the control apparatus 1000 determines whether or not the position and the attitude of the light irradiation apparatus 60 with respect to the welding start spot in the boundary between the component T1 and the component T2 are a desired position and a desired attitude, on the basis of information about the position and the attitude of the welding start spot in the boundary between the component T1 and the component T2 outputted from the 2D tracking unit 302 at intervals of predetermined times, for example. At this time, when the position and the attitude of the light irradiation apparatus 60 with respect to the welding start spot in the boundary between the component T1 and the component T2 are a desired position and a desired attitude, the control apparatus 1000 determines that the position and the attitude of the light irradiation apparatus 60 are a desired position and a desired attitude that allow the welding of the welding start spot in the boundary between the component T1 and the component T2 by the laser light as the processing light.

In the step S166, when it is determined that the position and the attitude of the light irradiation apparatus 60 are not a desired position and a desired attitude that allow the welding of the welding start spot in the boundary between the component T1 and the component T2 by the laser light as the processing light (the step S166: No), the control apparatus 1000 controls the driver 611 to continue to move the robot arm 610 such that the light irradiation apparatus 60 is brought close to the welding start spot in the boundary between the component T1 and the component T2, on the basis of the position and the attitude of the welding start spot in the boundary between the component T1 and the component T2 outputted from the 2D tracking unit 30 at intervals of predetermined times. That is, the step S165 is performed until it is determined that the position and the attitude are a desired position and a desired attitude that allow the welding of the welding start spot in the boundary between the component T1 and the component T2 by the laser light as the processing light.

On the other hand, when it is determined that the position and the attitude of the light irradiation apparatus 60 are a desired position and a desired attitude that allow the welding of the welding start spot in the boundary between the component T1 and the component T2 by the laser light as the processing light (the step S166: Yes), the control apparatus 1000 controls the light irradiation apparatus 60 to apply the laser light as the processing light to the welding start spot in the boundary, so as to weld the welding start spot in the boundary between the component T1 and the component T2 (step S167).

Here, as a specific aspect of the step S167, for example, the following two aspects are exemplified.

That is, in a first aspect, as in FIG. 15A and FIG. 15B described above, when the robot arm 610 is driven by the driver 611, i.e., when the light irradiation apparatus 60 and detection apparatuses 620 and 630 are moved by the robot arm 610, the laser light as the processing light is applied to the welding start spot in the boundary between the component T1 and the component T2. In this aspect, the control apparatus 1000 may control the direction of the Galvano mirror 61 of the light irradiation apparatus 60 such that the irradiation position of the laser light as the processing light from the light irradiation apparatus 60 moved by the robot arm 610 is maintained at the welding start spot and an adjacent welding spot in the boundary between the component T1 and the component T2, while controlling the driver 611 to move the light irradiation apparatus 60 and the detection apparatuses 620 and 630. For example, the control apparatus 1000 may control the direction of the Galvano mirror 61 of the light irradiation apparatus 60 such that the irradiation position of the laser light as the processing light from the light irradiation apparatus 60 moved by the robot arm 610 is maintained at the same position of the welding start spot and the adjacent welding spot in the boundary between the component T1 and the component T2, while controlling the driver 611 to move the light irradiation apparatus 60 and the detection apparatuses 620 and 630.

In a second aspect, the control apparatus 1000 may control the driver 611 to stop the driving of the driver 611 of the robot arm 610 driven by in the step S165, and after the driving of the driver 611 is stopped, the laser light as the processing light is applied to the welding start spot in the boundary between the component T1 and the component T2. In this aspect, the control apparatus 1000 controls the driver 611 to stop the driving of the driver 611. The control apparatus 1000 may control the direction of the Galvano mirror 61 of the light irradiation apparatus 60 such that the irradiation position of the laser light as the processing light from the light irradiation apparatus 60 is maintained at the welding start spot in the boundary between the component T1 and the component T2 after the driving of the driver 611 is stopped. For example, the control apparatus 1000 controls the driver 611 to stop the driving of the driver 611. The control apparatus 1000 may control the direction of the Galvano mirror 61 of the light irradiation apparatus 60 such that the irradiation position of the laser light as the processing light from the light irradiation apparatus 60 is maintained at the same position of the welding start spot in the boundary between the component T1 and the component T2 after the driving of the driver 611 is stopped.

In the first aspect, for example, when welding the boundary between the component T1 and the component T2 at a high speed, the control apparatus 1000 may control the light irradiation apparatus 60 and the driver 611 of the robot arm 610 such that the laser light as the processing light is applied to a first welding spot in the boundary between the component T1 and the component T2 (i.e., which is the welding start spot and is referred to as a first position) and then to a second welding spot (i.e., a second position), while moving the light irradiation apparatus 60 (the detection apparatuses 620 and 630) from the first welding spot and then the second welding spot.

For example, the control apparatus 1000 may control the direction of the Galvano mirror 61 such that the irradiation position of the laser light as the processing light from the light irradiation apparatus 60 that is displaced with the displacement of at least one of the detection apparatuses 620 and 630 is maintained at the first position in the boundary between the component T1 and the component T2 and is then maintained at the second position that is different from the first position, on the basis of at least one of the image data and the shape data that are changed in accordance with the displacement of at least one of the detection apparatuses 620 and 630.

For example, the control apparatus 1000 may control the direction of the Galvano mirror 61 such that the irradiation position of the laser light as the processing light from the light irradiation apparatus 60 moved by the robot arm 610 is maintained at the first position in the boundary between the component T1 and the component T2 and is then maintained at the second position that is different from the first position, on the basis of at least one of the image data and the shape data that are changed in accordance with the displacement of at least one of the detection apparatuses 620 and 630 moved by the robot arm 610, while controlling the driver 611 to move the light irradiation apparatus 60 and the detection apparatuses 620 and 630.

In the second aspect, inertial force and elastic force are applied to the light irradiation apparatus 60 and the detection apparatuses 620 and 630 provided in the robot arm 610. Therefore, for example, the control apparatus 1000 controls the driver 611 to stop the driving of the driver 611 of the robot arm 610 that is driven in the step S165, and after the driving of the driver 611 is stopped, a relative position between the light irradiation apparatus 60 (the detection apparatuses 620 and 630) and a part of the boundary between the component T1 and the component T2 is changed with time to a greater or lesser extent, due to the displacement of the light irradiation apparatus 60 and the detection apparatuses 620 and 630 because of vibrations or the like. Therefore, the control apparatus 1000 controls the Galvano mirror 61 of the light irradiation apparatus 60 such that the irradiation position of the laser light as the processing light from the light irradiation apparatus 60 is maintained at the first position in the boundary between the component T1 and the component T2 for a predetermined time, even if the light irradiation apparatus 60 (the detection apparatuses 620 and 630) is displaced due to vibrations or the like. Then, the control apparatus 1000 controls the Galvano mirror 61 of the light irradiation apparatus 60 such that the irradiation position of the laser light as the processing light from the light irradiation apparatus 60 is maintained at the second position in the boundary between the component T1 and the component T2 for a predetermined time, even if the light irradiation apparatus 60 (the detection apparatuses 620 and 630) is still displaced due to vibrations or the like.

Not only at the stop of the driver 611 of the robot arm 610 that is driven, but also at the time of or after the acceleration and deceleration of the robot arm 610, the light irradiation apparatus 60 and the detection apparatuses 620 and 630 provided on the robot arm 610 are displaced due to vibrations or the like, and a relative position between the light irradiation apparatus 60 (the detection apparatuses 620 and 630) and the spot to be irradiated with the laser light as the processing light (e.g., the welding spot) is changed with time. Even in this case, the control apparatus 1000 is allowed to recognize a temporal change in the position and the attitude of the spot to be irradiated with the laser light as the processing light with respect to the light irradiation apparatus 60, on the basis of the position and the attitude of at least a part of the boundary between the component T1 and the component T2 outputted from the 2D tracking unit 302 at intervals of predetermined times, and thus, the control apparatus 1000 is allowed to control the direction of the Galvano mirror such that the irradiation position of the laser light as the processing light is maintained at the spot to be irradiated with the laser light.

In this step S165, when the laser light is applied to spot to be irradiated with the laser light as the processing light, the control apparatus 1000 may control the light irradiation apparatus 60 to change a spot size of the laser light, an intensity of the laser light, an irradiation time of the laser light, and an irradiation range of the laser light. When the intensity of the laser light as the processing light is changed by changing the intensity of a light emitted from a light source (not illustrated) and when the light source (not illustrated) is disposed outside the light irradiation apparatus 60, the control apparatus 1000 may control the external light source (not illustrated).

For example, the control apparatus 1000 may control the direction of the Galvano mirror 61 such that the irradiation position of the laser light as the processing light from the light irradiation apparatus 60 that is displaced with the displacement of at least one of the detection apparatuses 620 and 630 is maintained at the first position and is then maintained at the second position that is different from the first position, on the basis of at least one of the image data and the shape data that are changed in accordance with the displacement of at least one of the detection apparatuses 620 and 630.

For example, the control apparatus 1000 may control the driver 611 to stop the driving of the driver 611. The control apparatus 1000 may control the direction of the Galvano mirror 61 such that the irradiation position of the laser light as the processing light from the light irradiation apparatus 60 that is displaced with the displacement of at least one of the detection apparatuses 620 and 630 is maintained at the first position and is then maintained at the second position that is different from the first position, on the basis of at least one of the image data and the shape data that are changed in accordance with the displacement of at least one of the detection apparatuses 620 and 630 after the driving of the driver 611 is stopped.

When the laser light as the processing light is applied while the light irradiation apparatus 60 or the like is moved by the robot arm 610, the control apparatus 1000 may control at least one of the attitude and position of the light irradiation apparatus 60, the direction of the Galvano mirror 61, or the like, on the basis of a result of prediction of the operation of the robot arm 610 or the like, in addition to the result of the tracking process.

After the step S167, the control apparatus 1000 performs quality inspection of the welding, on the basis of at least one of the image data and the shape data outputted from at least one of the detection apparatuses 620 and 630 (step S138). An inspection item is, for example, a welding status (cracks and holes on a surface) or the like. When performing the quality inspection of the welding, the control apparatus 1000 recognizes the welding spot in the image indicated by the image data, and detects the welding status, on the basis of the image data outputted from at least one of the detection apparatuses 620 and 630. The control apparatus 1000 determines that it is a non-defective article (the quality is good) when a length and width of a crack and a diameter and depth of a hole are less than a predetermined threshold, and determines that the quality is poor when the length and width of the crack and the diameter and depth of the hole are greater than a predetermined threshold, for example.

After the step S138, the control apparatus 1000 starts to move the light irradiation apparatus 60 (the detection apparatuses 620 and 630) to the second welding spot in the boundary between the component T1 and the component T2, on the basis of the position and the attitude of the welding start spot outputted from the 2D tracking unit 302 at intervals of predetermined times in the step S167 or the step S167, and the position and the attitude of the welding end spot in the components T1 and T2 calculated in the step S131, and repeats the steps S163 to 168. When starting to move the light irradiation apparatus 60 (the detection apparatuses 620 and 630) to the second welding spot, the control apparatus 1000 may perform the steps S163 to S168 after the step S161. The control apparatus 1000 repeats the above-described steps until the welding of all the welding spots is ended from the welding starting spot to the welding end spot in the boundary between the component T1 and the component T2.

The control apparatus 1000 may display, on a not-illustrated display apparatus, at least one of informations about the image data and the shape data used for the quality inspection of the welding in the step S168, and a result of the quality inspection of the welding.

The control apparatus 1000 may change a condition of the laser light as the processing light to be applied to a next welding spot (wherein the condition of the laser light is at least one of the intensity of the laser light, the spot size of the laser light, the irradiation time of the laser light, and the irradiation range of the laser light), on the basis of the welding status detected in the step S168.

The control apparatus 1000 may perform machine learning in an existing method, by using, as teacher data, the data that are obtained by associating the quality of the welding determined in the step S138 with at least one of informations about the image data and the shape data used in the steps S161 to S167. In this case, the control apparatus 1000 may use a result of the machine learning for a control of each apparatus of the robot 6 (e.g., the control of the position and the attitude of the light irradiation apparatus 60, and the control of the light irradiation apparatus 60). Here, the control of the light irradiation apparatus 60 includes setting of the condition of the laser light as the processing light to be applied from the light irradiation apparatus 60 (e.g., at least one of the intensity of the laser light, the spot size of the laser light, an irradiation time of the laser light, and an irradiation range of the laser light).

### (Technical Effect)

By the robot 5, for example, the component T2 is gripped. Therefore, jigs and tools for fixing the positional relationship between the component T1 and the component T2 are not required, and it is possible to significantly shorten a time required for a preparation before the welding.

The control apparatus 1000 may perform a tracking process or the like that is similar to the tracking process according to the first example embodiment, on the basis of the detection result of at least one of the detection apparatuses 620 and 630 of the robot 6. That is, the control apparatus 1000 may control at least one of the attitude and position of the light irradiation apparatus 60 or the like, and the direction of the Galvano mirror 61 light irradiation apparatus 60 or the like, on the basis of a results of the tracking process or the like, for example. Therefore, even if vibrations occur in the robot 6, the control apparatus 1000 is allowed to properly apply the laser light as the processing light to a desired irradiation position (in other words, welding spot) from the light irradiation apparatus 60, on the basis of the result of the tracking process or the like. That is, according to the laser welding system, it is possible to realize high-precision laser welding.

### <Supplementary Notes>

The following Supplementary Notes are further disclosed for the example embodiments described above.

### (Supplementary Note 1)

A soldering apparatus that applies a processing light for melting a solder disposed on a circuit board, the soldering apparatus including:
a light irradiation apparatus that includes a Galvano mirror and that applies the processing light through the Galvano mirror;
a detection apparatus that detects a light from the circuit board and that generates at least one of image data and shape data; and
a robot arm that is provided with the light irradiation apparatus and the detection apparatus and that includes a driver that moves the light irradiation apparatus and the detection apparatus, wherein
the light irradiation apparatus controls a direction of the Galvano mirror such that the processing light from the light irradiation apparatus that is displaced with the detection apparatus is applied to a same position, on the basis of the at least one of the data that are changed in accordance with a displacement of the detection apparatus.

### (Supplementary Note 2)

The soldering apparatus according to Supplementary Note 1, wherein the light irradiation apparatus controls the direction of the Galvano mirror such that the processing light from the light irradiation apparatus that is displaced with the detection apparatus is applied to the same position, on the basis of the at least one of the data that are changed in accordance with the displacement of the detection apparatus, after driving of the driver is stopped.

### (Supplementary Note 3)

The soldering apparatus according to Supplementary Note 1 or 2, wherein
the driver moves the light irradiation apparatus and the detection apparatus, and
the light irradiation apparatus controls the direction of the Galvano mirror such that the processing light from the light irradiation apparatus moved by the robot arm is applied to the same position, on the basis of the at least one of the data that are changed in accordance with the displacement of the detection apparatus moved by the robot arm.

### (Supplementary Note 4)

The soldering apparatus according to any one of Supplementary Notes 1 to 3, wherein the light irradiation apparatus controls the direction of the Galvano mirror such that an irradiation position of the processing light from the light irradiation apparatus that is displaced with the detection apparatus is maintained at a first position and is then maintained at a second position that is different from the first position, on the basis of the at least one of the data that are changed in accordance with the displacement of the detection apparatus.

### (Supplementary Note 5)

The soldering apparatus according to Supplementary Note 4, wherein the light irradiation apparatus controls the direction of the Galvano mirror such that the irradiation position of the processing light from the light irradiation apparatus that is displaced with the detection apparatus is maintained at the first position and is then maintained at the second position, on the basis of the at least one of the data that are changed in accordance with the displacement of the detection apparatus, after driving of the driver is stopped.

### (Supplementary Note 6)

The soldering apparatus according to Supplementary Note 4 or 5, wherein
the driver moves the light irradiation apparatus and the detection apparatus, and
the light irradiation apparatus controls the direction of the Galvano mirror such that the irradiation position of the processing light from the light irradiation apparatus moved by the robot arm is maintained at the first position and is then maintained at the second position, on the basis of the at least one of the data that are changed in accordance with the displacement of the detection apparatus moved by the robot arm.

### (Supplementary Note 7)

The soldering apparatus according to any one of Supplementary Notes 1 to 6, wherein
the driver drives the robot arm such that the light irradiation apparatus and the detection apparatus are brought close to the circuit board, on the basis of the at least one of the data, and
the light irradiation apparatus controls the direction of the Galvano mirror such that the processing light from the light irradiation apparatus that is displaced with the detection apparatus is applied to the same position, on the basis of the at least one of the data that are changed in accordance with the displacement of the detection apparatus, when the light irradiation apparatus and the detection apparatus are close to the circuit board by a predetermined distance.

### (Supplementary Note 8)

The soldering apparatus according to any one of Supplementary Notes 1 to 7, wherein
the detection apparatus includes a first imager and a second imager having a narrower field of view than that of the first imager,
the driver drives the robot arm such that the light irradiation apparatus and the detection apparatus are brought close to the circuit board, on the basis of at least one of the data that are generated by that the first imager detects the light from the circuit board, and
the light irradiation apparatus controls the direction of the Galvano mirror such that the processing light from the light irradiation apparatus that is displaced with the second imager is applied to the same position, on the basis of the at least one of the data that are generated by that the second imager detects the light from the circuit board and that are changed in accordance with a displacement of the second imager, when the light irradiation apparatus and the detection apparatus are close to the circuit board by a predetermined distance.

### (Supplementary Note 9)

A soldering apparatus that applies a processing light for melting a solder disposed on a circuit board, the soldering apparatus including:
a light irradiation apparatus that includes a Galvano mirror and that applies the processing light through the Galvano mirror;
a detection apparatus that detects a light from the circuit board and that generates at least one of image data and shape data;
a robot arm that is provided with the light irradiation apparatus and the detection apparatus and that includes a driver that moves the light irradiation apparatus and the detection apparatus; and
a control apparatus that controls a direction of the Galvano mirror such that the processing light from the light irradiation apparatus that is displaced with the detection apparatus is applied to a same position, on the basis of the at least one of the data that are changed in accordance with a displacement of the detection apparatus.

### (Supplementary Note 10)

The soldering apparatus according to Supplementary Note 9, wherein
the control apparatus controls the driver to stop driving of the driver, and
the control apparatus controls the direction of the Galvano mirror such that the processing light from the light irradiation apparatus that is displaced with the detection apparatus is applied to the same position, on the basis of the at least one of the data that are changed in accordance with the displacement of the detection apparatus after the driving of the driver is stopped.
   characterized in that.

### (Supplementary Note 11)

The soldering apparatus according to Supplementary Note 9 or 10, wherein the control apparatus controls the direction of the Galvano mirror such that the processing light from the light irradiation apparatus moved by the robot arm is applied to the same position, on the basis of the at least one of the data that are changed in accordance with the displacement of the detection apparatus moved by the robot arm, while controlling the driver to move the light irradiation apparatus and the detection apparatus.

### (Supplementary Note 12)

The soldering apparatus according to any one of Supplementary Notes 9 to 11, wherein the control apparatus controls the direction of the Galvano mirror such that an irradiation position of the processing light from the light irradiation apparatus that is displaced with the detection apparatus is maintained at a first position and is then maintained at a second position that is different from the first position, on the basis of the at least one of the data that are changed in accordance with the displacement of the detection apparatus.

### (Supplementary Note 13)

The soldering apparatus according to Supplementary Note 12, wherein
the control apparatus controls the driver to stop driving of the driver, and
the control apparatus controls the direction of the Galvano mirror such that the irradiation position of the processing light from the light irradiation apparatus that is displaced with the detection apparatus is maintained at the first position and is then maintained at the second position, on the basis of the at least one of the data that are changed in accordance with the displacement of the detection apparatus after the driving of the driver is stopped.
   characterized in that.

### (Supplementary Note 14)

The soldering apparatus according to Supplementary Note 12 or 13, wherein the control apparatus controls the direction of the Galvano mirror such that the irradiation position of the processing light from the light irradiation apparatus moved by the robot arm is maintained at the first position and is then maintained at the second position, on the basis of the at least one of the data that are changed in accordance with the displacement of the detection apparatus moved by the robot arm, while controlling the driver to move the light irradiation apparatus and the detection apparatus.

### (Supplementary Note 15)

The soldering apparatus according to any one of Supplementary Notes 9 to 14, wherein the control apparatus controls the driver of the robot arm such that the light irradiation apparatus and the detection apparatus are brought close to the circuit board, on the basis of the at least one of the data, and controls the direction of the Galvano mirror such that the processing light from the light irradiation apparatus that is displaced with the detection apparatus is applied to the same position, on the basis of the at least one of the data that are changed in accordance with the displacement of the detection apparatus, when the light irradiation apparatus and the detection apparatus are close to the circuit board by a predetermined distance.

### (Supplementary Note 16)

The soldering apparatus according to any one of Supplementary Notes 9 to 16, wherein
the detection apparatus includes a first imager and a second imager having a narrower field of view than that of the first imager, and
the control apparatus controls the driver such that the light irradiation apparatus and the detection apparatus are brought close to the circuit board, on the basis of the at least one of the data that are generated by that the first imager detects the light from the circuit board, and controls the direction of the Galvano mirror such that the processing light from the light irradiation apparatus that is displaced with the second imager is applied to the same position, on the basis of the at least one of the data that are generated by that the second imager detects the light from the circuit board and that are changed in accordance with the displacement of the second imager, when the light irradiation apparatus and the detection apparatus are close to the circuit board by a predetermined distance.

### (Supplementary Note 17)

The soldering apparatus according to any one of Supplementary Notes 9 to 16, wherein the circuit board includes a circuit film on which a circuit is formed, and a substrate.

### (Supplementary Note 18)

The soldering apparatus according to any one of Supplementary Notes 9 to 17, wherein the circuit board has a three-dimensional shape.

### (Supplementary Note 19)

The soldering apparatus according to any one of image 9 to 18, wherein the control apparatus performs an inspection of soldering, on the basis of at least one of image data and shape data generated by the detection apparatus.

### (Supplementary Note 20)

The soldering apparatus according to Supplementary Note 19, wherein the control apparatus determines whether or not a quality of the soldering is good, as the inspection of the soldering.

### (Supplementary Note 21)

The soldering apparatus described in Supplementary Note 19, wherein the control apparatus displays, on a display apparatus, a result of the inspection of the soldering.

### (Supplementary Note 22)

The soldering apparatus according to any one of image 19 to 21, wherein the control apparatus displays, on a display apparatus, at least one of image data and shape data used for the inspection of the soldering.

### (Supplementary Note 23)

A processing apparatus that applies a processing light to a target object, the processing apparatus including:
a light irradiation apparatus that applies the processing light;
a detection apparatus that detects a light from the target object;
a moving apparatus that is provided with the light irradiation apparatus and the detection apparatus and that includes a driver that moves the light irradiation apparatus and the detection apparatus; and
a control apparatus (i) that controls the driver on the basis of a detection result of the detection apparatus, and (ii) that performs an inspection of processing by irradiation with the processing light on the basis of the detection result of the detection apparatus.

### (Supplementary Note 24)

The processing apparatus according to Supplementary Note 23, wherein the control apparatus determines a quality of the processing, as the inspection of the processing by the irradiation with the processing light.

### (Supplementary Note 25)

The processing apparatus according to Supplementary Note 23 or 24, wherein the control apparatus displays, on a display apparatus, a result of the inspection of the processing by the irradiation with the processing light.

### (Supplementary Note 26)

The processing apparatus according to any one of Supplementary Notes 23 to 25, wherein the processing includes soldering an element on the circuit board.

### (Supplementary Note 27)

The processing apparatus according to any one of Supplementary Notes 23 to 25, wherein the processing includes welding between metallic members.

### (Supplementary Note 28)

A soldering apparatus that applies a processing light for melting a solder disposed on a circuit board, the soldering apparatus including:
a light irradiation apparatus that includes a Galvano mirror and that applies the processing light through the Galvano mirror;
a detection apparatus that detects a light from the circuit board and that generates at least one of image data and shape data;
a robot arm that is provided with the light irradiation apparatus and the detection apparatus and that includes a driver that moves the light irradiation apparatus and the detection apparatus; and
a control apparatus that controls a direction of the Galvano mirror such that an irradiation position of the processing light from the light irradiation apparatus that is displaced with the detection apparatus is temporally changed in an area to be irradiated with the processing light, on the basis of the at least one of the data that are changed in accordance with a displacement of the detection apparatus.

### (Supplementary Note 29)

A soldering system that solders an element on a circuit board, the soldering system including:
a first robot arm that is provided with a detection apparatus that detects a light from the circuit board and that generates at least one data of image data and shape data, and a solder discharge apparatus that discharges a solder, and that includes a driver that moves the detection apparatus and the solder discharge apparatus;
a second robot arm that is provided with a holding apparatus that is configured to hold the element and that includes a driver that moves the holding apparatus;
a third robot arm that is provided with a light irradiation apparatus that is configured to apply a processing light for melting a solder and that includes a driver that moves the light irradiation apparatus; and
a control apparatus (i) that controls the driver of the first robot arm such that the solder discharge apparatus is brought close to the circuit board and controls the solder discharge apparatus such that the solder is disposed on the circuit board, on the basis of the data generated by the detection apparatus, (ii) that detects a status of a spot to be irradiated with the processing light, on the basis of the data generated by the detection apparatus, (iii) that controls the holding apparatus such that the element is disposed on the circuit board through the disposed solder, and (iv) that determines a condition of the processing light on the basis of the detected status of the spot to be irradiated with the processing light and controls the light irradiation apparatus to melt the disposed solder.

### (Supplementary Note 30)

The soldering system according to Supplementary Note 29, where the condition of the processing light includes at least one of conditions that are an intensity of the processing light, a spot size of the processing light, an irradiation time of the processing light, and an irradiation range of the processing light.

### (Supplementary Note 31)

A soldering system that solders an element on a circuit board, the soldering system including:
a first robot arm that is provided with a solder discharge apparatus that discharges a solder, and that includes a driver that moves the solder discharge apparatus;
a second robot arm that is provided with a detection apparatus that detects a light from the circuit board and that generates at least one data of image data and shape data, and a holding apparatus that is configured to hold the element, and that includes a driver that moves the detection apparatus and the holding apparatus;
a third robot arm that is provided with a light irradiation apparatus that is configured to apply a processing light for melting a solder and that includes a driver that moves the light irradiation apparatus; and
a control apparatus (i) that controls the solder discharge apparatus such that the solder is disposed on the circuit board, (ii) that controls the driver of the second robot arm such that the holding apparatus is brought close to the circuit board, on the basis of the data generated by the detection apparatus, (iii) that detects a status of a spot to be irradiated with the processing light, on the basis of the data generated by the detection apparatus, (iv) that controls the holding apparatus such that the element is disposed on the circuit board through the disposed solder, and (iv) that determines a condition of the processing light on the basis of the detected status of the spot to be irradiated with the processing light and controls the light irradiation apparatus to melt the disposed solder.

### (Supplementary Note 32)

The soldering system according to Supplementary Note 31, wherein the processing condition of the processing light includes at least one of conditions that are an intensity of the processing light, a spot diameter of the processing light, and an irradiation position of the processing light on the target object to be irradiated with the processing light.

### (Supplementary Note 33)

A processing apparatus that applies a processing light to a target object, the processing apparatus including:
a light irradiation apparatus that includes a scanning unit and that irradiates the processing light through the scanning unit;
a detection apparatus that detects a light from the target object;
a moving apparatus that is provided with the light irradiation apparatus and the detection apparatus, and that includes a driver that moves the light irradiation apparatus and the detection apparatus; and
a control apparatus that controls the scanning unit on the basis of a detection result of a detection apparatus.

### (Supplementary Note 34)

The processing apparatus according to Supplementary Note 33, wherein the control apparatus controls the scanning unit such that the processing light from the light irradiation apparatus that is displaced with the detection apparatus is applied to a same position, on the basis of the detection result that is changed in accordance with a displacement of the detection apparatus.

### (Supplementary Note 35)

The processing apparatus according to Supplementary Note 33 or 34, wherein the control apparatus controls the driver to stop driving of the driver, and controls the scanning unit such that the processing light from the light irradiation apparatus that is displaced with the detection apparatus is applied to a same position, on the basis of the detection result that is changed in accordance with a displacement of the detection apparatus after the driving of the driver is stopped.

### (Supplementary Note 36)

The processing apparatus according to any one of Supplementary Notes 33 to 35, wherein the control apparatus controls the scanning unit such that the processing light from the light irradiation apparatus moved by the moving apparatus is applied to a same position, on the basis of the detection result that is changed in accordance with a displacement of the detection apparatus moved by the moving apparatus, while controlling the driver such that the light irradiation apparatus and the detection apparatus are moved.

### (Supplementary Note 37)

The processing apparatus according to any one of Supplementary Notes 33 to 36, wherein the control apparatus controls the scanning unit such that an irradiation position of the processing light from the light irradiation apparatus that is displaced with the detection apparatus is maintained at a first position and is then maintained at a second position that is different from the first position, on the basis of the detection result that is changed in accordance with a displacement of the detection apparatus.

### (Supplementary Note 38)

The processing apparatus according to Supplementary Note 37, wherein the control apparatus controls the driver to stop driving of the driver, and controls the scanning unit such that the irradiation position of the processing light from the light irradiation apparatus that is displaced with the detection apparatus is maintained at the first position and is then maintained at the second position, on the basis of the detection result that is changed in accordance with the displacement of the detection apparatus after the driving of the driver is stopped.

### (Supplementary Note 39)

The processing apparatus according to Supplementary Note 37, wherein the control apparatus controls the scanning unit such that the irradiation position of the processing light from the light irradiation apparatus moved by the moving apparatus is maintained at the first position and is then maintained at the second position, on the basis of the detection result that is changed in accordance with the displacement of the detection apparatus moved by the moving apparatus, while driving the driver to move the light irradiation apparatus and the detection apparatus.

### (Supplementary Note 40)

The processing apparatus according to target object 33, the control apparatus controls the scanning unit such that an irradiation position of the processing light is temporally displaced on the target object, on the basis of the detection result of the detection apparatus.

### (Supplementary Note 41)

The processing apparatus according to target object 40, wherein the control apparatus controls the driver to stop driving of the driver, and controls the scanning unit such that the irradiation position of the processing light from the light irradiation apparatus that is displaced with the detection apparatus is temporally displaced on the target object, on the basis of the detection result that is changed in accordance with the displacement of the detection apparatus after the driving of the driver is stopped.

### (Supplementary Note 42)

The processing apparatus according to Supplementary Note 40 or 41, wherein the control apparatus controls the scanning unit such that the irradiation position of the processing light from the light irradiation apparatus moved by the moving apparatus is temporally displaced on the target object, on the basis of the detection result that is changed in accordance with the displacement of the detection apparatus moved by the moving apparatus, while controlling the driver such that the light irradiation apparatus and the detection apparatus are moved.

### (Supplementary Note 43)

The processing apparatus according to any one of the Supplementary Notes 33 to 42, wherein the control apparatus calculates at least one of a position and an attitude of at least a part of the target object on the basis of the detection result, and controls the scanning unit on the basis of at least one of the position and the attitude.

### (Supplementary Note 44)

The processing apparatus according to any one of Supplementary Notes 33 to 43, wherein
at least a part of the target object includes a marker provided on the target object, and
the control apparatus calculates at least one of a position and an attitude of the marker on the basis of the detection result, and controls the scanning unit on the basis of at least one of the position and the attitude.

### (Supplementary Note 45)

The processing apparatus according to any one of Supplementary Notes 33 to 44, wherein the detection apparatus includes at least one imaging apparatus.

### (Supplementary Note 46)

The processing apparatus according to any one of Supplementary Notes 33 to 44, wherein the detection apparatus includes a stereo camera including two imaging apparatuses.

### (Supplementary Note 47)

The processing apparatus according to any one of Supplementary Notes 33 to 46, wherein the detection apparatus includes a plurality of imaging apparatuses each of which has a different field of view.

### (Supplementary Note 48)

The processing apparatus according to any one of Supplementary Notes 45 to 47, wherein the detection apparatus images the target object with the imaging apparatus, and generates at least one of image data and shape data as the detection result.

### (Supplementary Note 49)

The processing apparatus according to any one of Supplementary Notes 45 to 48, wherein
the detection apparatus includes a projection apparatus that projects a structure light with a predetermined intensity distribution, and
the detection apparatus images the target object on which the structure light is projected with the imaging apparatus and generates the shape data.

### (Supplementary Note 50)

The processing apparatus according to any one of Supplementary Notes 45 to 49, wherein at least a part of an optical path of the processing light in the light irradiation apparatus is common to at least a part of an optical path of a light from the target object in the imaging apparatus.

### (Supplementary Note 51)

The processing apparatus according to any one of Supplementary Notes 45 to 49, wherein an optical path of the processing light in the light irradiation apparatus is different from an optical path of a light from the target object in the imaging apparatus.

### (Supplementary Note 52)

The processing apparatus according to any one of Supplementary Notes 33 to 51, wherein
the target object includes a circuit board, and
the processing light melts a solder disposed on the circuit board.

### (Supplementary Note 53)

The processing apparatus according to Supplementary Note 51, wherein the control apparatus calculates at least one of a position and an attitude of at least one of a part of the circuit board and an element disposed on the circuit board, on the basis of the detection result, and controls the scanning unit on the basis of at least one of the position and the attitude.

### (Supplementary Note 54)

The processing apparatus according to Supplementary Note 52 or 53, wherein at least a part of the circuit board includes at least one of a marker provided on the circuit board and a solder pad provided on the circuit board.

### (Supplementary Note 55)

The processing apparatus according to any one of Supplementary Notes 52 to 54, wherein the circuit board includes a substrate and a circuit film on which a circuit is formed.

### (Supplementary Note 56)

The processing apparatus according to any one of Supplementary Notes 52 to 55, wherein the circuit board has a three-dimensional shape.

### (Supplementary Note 57)

The processing apparatus according to any one of Supplementary Notes 52 to 56, wherein the control apparatus controls the scanning unit on the basis of the detection result of the detection apparatus so as to melt the solder disposed on an inclined surface on the circuit board.

### (Supplementary Note 58)

The processing apparatus according to any one of Supplementary Notes 33 to 51, wherein
the target object includes a metallic member used for welding, and
the processing light is applied to the metallic member.

### (Supplementary Note 59)

The processing apparatus according to Supplementary Note 58, wherein the control apparatus calculates at least one of a position and an attitude of at least a part of the metallic member on the basis of the detection result, and controls the scanning unit on the basis of at least one of the position and the attitude.

### (Supplementary Note 60)

The processing apparatus according to Supplementary Note 58 or 59, wherein
the metallic member includes a first base material and a second base material to be joined, and
the control apparatus calculates at least one of a position and an attitude of a boundary between the first base material and the second base material on the basis of the detection result, and controls the scanning unit on the basis of at least one of the position and the attitude.

### (Supplementary Note 61)

The processing apparatus according to any one of Supplementary Notes 33 to 60, wherein the control apparatus controls the driver on the basis of the detection result.

### (Supplementary Note 62)

The processing apparatus according to any one of Supplementary Notes 33 to 61, wherein the control apparatus controls the driver such that the light irradiation apparatus and the detection apparatus are brought close to the target object on the basis of the detection result, and then controls the scanning unit such that the processing light is applied to the target object on the basis of the detection result.

### (Supplementary Note 63)

The processing apparatus according to any one of Supplementary Notes 33 to 62, wherein the control apparatus controls the driver to stop driving of the driver on the basis of the detection result, when the light irradiation apparatus and the detection apparatus are close to the target object by a predetermined distance, and controls the scanning unit such that an irradiation position of the processing light from the light irradiation apparatus that is displaced with the detection apparatus is maintained at a predetermined position of the target object, on the basis of the detection result that is changed in accordance with a displacement of the detection apparatus after the driving of the driver is stopped.

### (Supplementary Note 64)

The processing apparatus according to any one of Supplementary Notes 33 to 63, wherein
the detection apparatus includes a first imager and a second imager having a narrower field of view than that of the first imager,
the control apparatus controls the driver such that the light irradiation apparatus and the detection apparatus are brought close to the target object, on the basis of a detection result obtained by that the first imager detects the light from the target object, and controls the scanning unit such that the processing light is applied to the target object, on the basis of a detection result obtained by that the second imager detects the light from the target obj ect.

### (Supplementary Note 65)

The processing apparatus according to Supplementary Note 64, wherein at least one of the first imager and the second imager includes a stereo camera that includes two imaging apparatuses.

### (Supplementary Note 66)

The processing apparatus according to any one of Supplementary Notes 33 to 65, wherein the detection apparatus includes a projection apparatus that projects a structure light with a predetermined intensity distribution.

### (Supplementary Note 67)

The processing apparatus according to any one of image 33 to 66, wherein the detection apparatus generates at least one of image data and the shape data as the detection result.

### (Supplementary Note 68)

The processing apparatus according to any one of Supplementary Notes 33 to 67, wherein
the scanning unit includes a Galvano mirror, and
the control apparatus controls a direction of the Galvano mirror.

### (Supplementary Note 69)

The processing apparatus according to Supplementary Note 68, wherein
the light irradiation apparatus has a fθ lens, and
the light irradiation apparatus applies the processing light from the Galvano mirror through the fθ lens.

### (Supplementary Note 70)

The processing apparatus according to any one of Supplementary Notes 33 to 69, wherein the moving apparatus is a robot arm.

### (Supplementary Note 71)

A soldering system that solders an element on a circuit board, the soldering system including:
a first moving apparatus that is provided with a solder discharge apparatus that discharges a solder, and that includes a driver that moves the solder discharge apparatus;
a second moving apparatus that is provided with a holding apparatus that is configured to hold the element, and that includes a driver that moves the holding apparatus;
a third moving apparatus that is provided with a light irradiation apparatus that applies a processing light for melting the solder and a detection apparatus that detects a light from the circuit board, and that includes a driver that moves the light irradiation apparatus and the detection apparatus; and
a control apparatus (i) that controls the solder discharge apparatus such that the solder is disposed in a predetermined part of the circuit board, (ii) that controls the holding apparatus such that the element is disposed on the circuit board through the disposed solder, and (iii) that controls the driver of the third moving apparatus such that the light irradiation apparatus is brought close to the circuit board, on the basis of a detection result of the detection apparatus, and controls the light irradiation apparatus to melt the disposed solder.

### (Supplementary Note 72)

The soldering system according to Supplementary Note 71, wherein
the first moving apparatus is provided with a detection apparatus that detects the light from the circuit board, and
the control apparatus controls the driver of the first moving apparatus such that the solder discharge apparatus is brought close to the circuit board, on the basis of a detection result of the detection apparatus of the first moving apparatus.

### (Supplementary Note 73)

The soldering system according to Supplementary Note 72, wherein the control apparatus detects a status of a spot to be irradiated with the processing light, on the basis of the detection result of the detection apparatus provided in the first moving apparatus.

### (Supplementary Note 74)

The soldering system according to Supplementary Note 73, wherein the control apparatus determines a condition of the processing light on the basis of the detected status of the spot to be irradiated with the processing light, and controls the light irradiation apparatus to melt the disposed solder.

### (Supplementary Note 75)

The soldering system according to Supplementary Note 74, wherein the processing condition of the processing light includes at least one of conditions that are an intensity of the processing light, a spot diameter of the processing light, an irradiation time of the processing light, and an irradiation range of the processing light.

### (Supplementary Note 76)

The soldering system according to Supplementary Note 71, wherein
the first moving apparatus is provided with the solder discharge apparatus and the detection apparatus of the first moving apparatus in such a positional relationship that at least a part of the solder discharge apparatus is in a field of view of the detection apparatus of the first moving apparatus, and
the control apparatus estimates at least one of a position and an attitude of at least a part of the solder discharge apparatus, on the basis of a detection result of the detection apparatus of the first moving apparatus.

### (Supplementary Note 77)

The soldering system according to any one of Supplementary Notes 71 to 76, wherein
the second moving apparatus is provided with a detection apparatus that detects the light from the circuit board, and
the control apparatus controls the driver of the second moving apparatus such that the holding apparatus is brought close to the circuit board, on the basis of a detection result of the detection apparatus of the second moving apparatus.

### (Supplementary Note 78)

The soldering system according to Supplementary Note 77, wherein the control apparatus detects a status of a spot to be irradiated with the processing light, on the basis of the detection result of the detection apparatus provided in the second moving apparatus.

### (Supplementary Note 79)

The soldering system according to Supplementary Note 78, wherein the control apparatus determines a condition of the processing light on the basis of the detected status of the spot to be irradiated with the processing light, and controls the light irradiation apparatus to melt the disposed solder.

### (Supplementary Note 80)

The soldering system according to Supplementary Note 79, wherein the processing condition of the processing light includes at least one of conditions that are an intensity of the processing light, a spot diameter of the processing light, an irradiation time of the processing light, and an irradiation range of the processing light.

### (Supplementary Note 81)

The soldering system according to Supplementary Note 77, wherein
the second moving apparatus is provided with the holding apparatus and the detection apparatus of the second moving apparatus in such a positional relationship that at least a part of the holding apparatus is in a field of view of the detection apparatus of the second moving apparatus, and
the control apparatus estimates at least one of a position and an attitude of at least a part of the holding apparatus, on the basis of the detection result of the detection apparatus of the second moving apparatus.

### (Supplementary Note 82)

The soldering system according to Supplementary Note 77 or 81, wherein
the second moving apparatus is provided with the holding apparatus and the detection apparatus of the second moving apparatus in such a positional relationship that at least a part of the element held by the holding apparatus is in a field of view of the detection apparatus of the second moving apparatus, and
the control apparatus estimates at least one of a position and an attitude of at least a part of the holding apparatus, on the basis of the detection result of the detection apparatus of the second moving apparatus in a condition in which the element is held by the holding apparatus.

### (Supplementary Note 83)

The soldering system according to Supplementary Note 71, wherein
The third moving apparatus is provided with the light irradiation apparatus and the detection apparatus of the third moving apparatus in such a positional relationship that at least a part of the light irradiation apparatus is in a field of view of the detection apparatus of the third moving apparatus, and
The control apparatus estimates at least one of a position and an attitude of at least a part of the light irradiation apparatus, on the basis of the detection result of the detection apparatus of the third moving apparatus.

### (Supplementary Note 84)

The soldering system according to any one of Supplementary Notes 71 to 83, wherein
the light irradiation apparatus includes a scanning unit,
the light irradiation apparatus applies the processing light through the scanning unit, and
the control apparatus controls the scanning unit on the basis of the detection result of the detection apparatus of the third moving apparatus.

### (Supplementary Note 85)

The soldering system according to Supplementary Note 84, wherein the control apparatus controls the scanning unit such that the processing light from the light irradiation apparatus that is displaced with the detection apparatus is applied to a same position, on the basis of the detection result that is changed in accordance with the displacement of the detection apparatus of the third moving apparatus.

### (Supplementary Note 86)

A soldering system that solders an element on a circuit board, the soldering system including:
a moving apparatus that is provided with a solder discharge apparatus that discharges solder, a holding apparatus that is configured to hold an element, a light irradiation apparatus that applies a processing light for melting the solder, and a detection apparatus that detects a light from the circuit board, and that includes a driver that moves the solder discharge apparatus, the holding apparatus, the light irradiation apparatus, and the detection apparatus; and
a control apparatus (i) that controls the driver such tha the solder discharge apparatus, the holding apparatus, the light irradiation apparatus, and the detection apparatus are brought close to the circuit board, (ii) that controls the solder discharge apparatus such that the solder is disposed in a predetermined part of the circuit board, (iii) that controls the holding apparatus such that the element is disposed on the circuit board through the disposed solder, and (iv) that controls the light irradiation apparatus to melt the disposed solder.

### (Supplementary Note 87)

The soldering system according to Supplementary Note 86, wherein
the light irradiation apparatus includes a scanning unit, and
the light irradiation apparatus applies the processing light through the scanning unit, and
the control apparatus controls the scanning unit on the basis of a detection result of the detection apparatus.

### (Supplementary Note 88)

The soldering system according to Supplementary Note 87, wherein the control apparatus controls the scanning unit such that the processing light from the light irradiation apparatus that is displaced with the detection apparatus is applied to a same position, on the basis of the detection result that is changed in accordance with the displacement of the detection apparatus.

### (Supplementary Note 89)

The soldering system according to any one of Supplementary Notes 86 to 88, wherein the moving apparatus is provided with a housing part that houses or contains different types of elements, and a supply apparatus that supplies a predetermined element to the holding apparatus from the housing part.

### (Supplementary Note 90)

A processing apparatus that applies a processing light to a target object, the processing apparatus including:
a light irradiation apparatus that applies the processing light;
a detection apparatus that detects a light from the target object;
a moving apparatus that is provided with the light irradiation apparatus and the detection apparatus, and that includes a driver that moves the light irradiation apparatus and the detection apparatus; and
a control apparatus that controls the driver on the basis of a detection result of the detection apparatus.

### (Supplementary Note 91)

The processing apparatus according to Supplementary Note 90, wherein
the target object includes a circuit board, and
the processing light melts a solder disposed on the circuit board.

### (Supplementary Note 92)

The processing apparatus according to Supplementary Note 90 or 91, wherein at least a part of an optical path of the processing light in the light irradiation apparatus is common to at least a part of an optical path of a light from the target object in the detection apparatus.

### (Supplementary Note 93)

The processing apparatus according to any one of Supplementary Notes 90 to 92, wherein the control apparatus controls the driver such that the light irradiation apparatus and the detection apparatus are brought close to the target object, on the basis of the detection result, and controls the light irradiation apparatus to start to apply the processing light to the target object, when the light irradiation apparatus and the detection apparatus are close to the target object by a predetermined distance.

### (Supplementary Note 94)

The processing apparatus according to any one of Supplementary Notes 90 to 93, wherein
the detection apparatus includes a first imager and a second imager having a narrower field of view than that of the first imager, and
the control apparatus controls the driver such that the light irradiation apparatus and the detection apparatus are brought close to the target object, on the basis of a detection result obtained by that the first imager detects a light from the target object, controls the driver such that the light irradiation apparatus and the detection target object approach are brought further closer to the target object, on the basis of a detection result obtained by that the second imager detects the light from the target object, and controls the light irradiation apparatus to start to apply the processing light to the target object, when the light irradiation apparatus and the detection apparatus are close to the target object by a predetermined distance.

### (Supplementary Note 95)

The processing apparatus according to Supplementary Note 94, wherein at least one of the first imager and the second imager includes a stereo camera that includes two imaging apparatuses.

### (Supplementary Note 96)

The processing apparatus according to any one of Supplementary Notes 90 to 95, wherein the detection apparatus includes a projection apparatus that projects a structure light with a predetermined intensity distribution.

### (Supplementary Note 97)

The processing apparatus according to any one of image 90 to 96, wherein the detection apparatus generates at least one of image data and the shape data as the detection result.

This disclosure is not limited to the above-described examples and is allowed to be changed, if desired, without departing from the essence or spirit of the invention which can be read from the claims and the entire specification. A soldering apparatus and a soldering system with such modifications, as well as a processing apparatus, are also intended to be within the technical scope of this disclosure.

### Description of Reference Codes

1, 2, 3, 4, 5, 6 Robot
21, 22, 31, 32 Camera
33 Projector
40 Dispenser
50 Holding apparatus
60 Light irradiation apparatus
61 Galvano mirror
62 fθ lens
70 Air blower and smoke absorber
100 Robot control unit
110, 210, 310, 410, 510, 610 Robot arm
111, 211, 311, 411, 511, 611 Driver
120, 130, 220, 230, 320, 330, 420, 430, 520, 530, 620, 630 Detection apparatus
200 Matching processor
300 Tracking unit
1000 Control apparatus

## Claims

1. A control apparatus that performs data processing for controlling a driver of a robot arm that is provided with an end effector that performs a process on a target object, an imaging apparatus, and a stereo camera, and that moves the end effector, the imaging apparatus, and the stereo camera, wherein
the control apparatus comprises a processor, and
the processor:
calculates a position and an attitude of the target object, on the basis of image data obtained by that the imaging apparatus images the target object with the stereo camera during such a relative movement of the robot arm and the target object that the imaging apparatus and the stereo camera are brought close to the target object, and shape data that are generated from image data obtained by imaging the target object with the stereo camera and that indicate a three-dimensional shape of the target object;
calculates a displacement of the target object between different time points, on the basis of two image data obtained by that the imaging apparatus images the target object at the different time points during the relative movement, and two shape data that are generated from image data obtained by that the stereo camera images the target object at the different time points and that indicate the three-dimensional shape of the target object at each of the different time points; and
outputs information about the position and the attitude of the target object calculated by adding the calculated displacement of the target object to the calculated position and attitude of the target object.

2. The control apparatus according to claim 1, wherein the control apparatus generates a control signal for controlling the driver of the robot arm on the basis of the information outputted from the processor, and outputs the generated control signal to a robot control unit that controls the driver of the robot arm.

3. The control apparatus according to claim 1 or 2, wherein the end effector is at least one of a light irradiation apparatus that is configured to apply a processing light, a discharge apparatus that is configured to discharge a solder, and a holding apparatus that is configured to hold the target object.

4. The control apparatus according to any one of claims 1 to 3, wherein the stereo camera includes two imaging apparatuses that are different from the imaging apparatus.

5. A robot system that installs a first object on a second object that is spaced from the first object, the robot system comprising:
a holding apparatus that holds the first object;
an imager; and
a robot arm that is provided with the holding apparatus and the imager and that moves the holding apparatus and the imager, wherein
the robot system calculates a position and an attitude of the second object, on the basis of image data obtained by that the imager images the second object, and controls the robot arm to install the first object on the second object on the basis of the calculated position and attitude of the second object, and
obtains image data about a status of installation of the first object on the second object by that the imager provided on the robot arm images the first object, after the first object is installed on the second object.

6. The robot system according to claim 5, wherein the robot system performs an inspection of the status of the installation, on the basis of the obtained image data.

7. The robot system according to claim 5 or 6, wherein
the imager includes an imaging apparatus and a stereo camera, and
the robot system controls the robot arm to install the first object on the second object, on the basis of the position and the attitude of the second object calculated by adding a displacement of the second object between different time points, to the position and the attitude of the second object calculated on the basis of image data obtained by that the imaging apparatus images the second object and shape data that are generated from image data obtained by imaging the second object with the stereo camera and that indicate a three-dimensional shape of the second object, wherein the displacement is calculated on the basis of two image data obtained by that the imaging apparatus images the second object at the different time points and two shape data that are generated from image data obtained by that the stereo camera images the second object at the different time points and that indicate a three-dimensional shape of the second object at each of the different time points.

8. The robot system according to claim 7, wherein the robot system performs an inspection of the status of the installation of the first object on the second object, on the basis of image data obtained by that the imaging apparatus images the first object, after the first object is installed on the second object.

9. The robot system according to claim 7 or 8, wherein the robot system performs an inspection of the status of the installation of the first object on the second object, on the basis of shape data that are generated from image data obtained by that the stereo camera images the first image and that indicate the three-dimensional shape of the second obj ect.

10. The robot system according to any one of claims 6 to 9, wherein the inspection of the status of the installation of the first object on the second object includes determining whether or not an installation position of the first object on the second object is good.

11. The robot system according to any one of claims 6 to 10, wherein the inspection of the status of the installation of the first object on the second object includes determining whether or not an installation attitude of the first object on the second object is good.

12. The robot system according to any one of claims 5 to 11, wherein
the first object includes an element, and
the second object includes at least a part of a circuit board.

13. The robot system according to claim 12, wherein at least a part of the circuit board includes a solder pad provided on the circuit board.

14. The robot system according to any one of claims 5 to 13, wherein the first object and the second object include objects that are fitted to each other.

15. The robot system according to claim 14, wherein one of the first object and the second object includes an object having a convex part, and the other of the first object and the second object includes an object having a concave part in which the convex part is fitted.

16. A control apparatus that performs data processing for controlling a driver of a robot arm that is provided with a holding apparatus that holds a first object and an imager, and that moves the holding apparatus and the imager, wherein
the control apparatus comprises a processor that calculates a position and an attitude of a second target object and outputs information about the calculated position and attitude of the second target object, on the basis of image data obtained by that the imager images the second target object during such a relative movement of the robot arm and the second target object that the first object is brought close to the second target object in order to install the first object on the second object that is spaced from the first object, and
an inspection of a status of installation of the first object on the second object is performed, on the basis of image data obtained by that the imager provided on the robot arm images the first object, after the first object is installed on the second object.

17. The control apparatus according to claim 16, wherein
the imager includes an imaging apparatus and a stereo camera, and
the processor
outputs, as the information about the position and attitude of the second object to be outputted, information calculated by adding a displacement of the target object between different time points, to the position and the attitude of the second object calculated on the basis of image data obtained by that the imaging apparatus images the second object and shape data that are generated from image data obtained by imaging the second object with the stereo camera and that indicate a three-dimensional shape of the second object, during the relative movement, wherein the displacement is calculated on the basis of two image data obtained by that the imaging apparatus images the target object at the different time points during the relative movement, and two shape data that are generated from image data obtained by that the stereo camera images the target object at the different time points and that indicate the three-dimensional shape of the target object at each of the different time points.

18. The control apparatus according to claim 17, wherein the processor performs the inspection of the status of the installation of the first object on the second object, on the basis of image data obtained by that the imaging apparatus images the first object, after the first object is installed on the second object.

19. The control apparatus according to claim 17 or 18, wherein the processor performs the inspection of the status of the installation of the first object on the second object, on the basis of shape data that are generated from image data obtained by that the stereo camera images the first object and that illustrate the three-dimensional shape of the second object, after the first object is installed on the second object.

20. The control apparatus according to any one of claims 16 to 20, wherein the inspection of the status of the installation of the first object on the second object includes determining whether or not an installation position of the first object on the second object is good.

21. The control apparatus according to any one of claims 16 to 21, wherein the inspection of the status of the installation of the first object on the second object includes determining whether or not an installation attitude of the first object on the second object is good.

22. The control apparatus according to any one of claims 16 to 21,
wherein the control apparatus generates a control signal for controlling the driver of the robot arm on the basis of the information outputted from the processor, and outputs the generated control signal to a robot control unit that controls the driver of the robot arm.

23. The control apparatus according to any one of claims 16 to 22, wherein
the first object includes an element, and
the second object includes at least a part of a circuit board.

24. The control apparatus according to claim 23, wherein at least a part of the circuit board includes a solder pad provided on the circuit board.

25. The control apparatus according to any one of claims 16 to 24, wherein the first object and the second object include objects that are fitted to each other.

26. The control apparatus according to claim 25, wherein one of the first object and the second object includes an object having a convex part, and the other of the first object and the second object includes an object having a concave part in which the convex part is fitted.

27. The control apparatus according to claim 25 or 26, wherein
the first object includes an object having a concave part, and
the second object includes an object having a convex part in which the concave part is fitted.

28. A control apparatus that performs data processing for controlling a driver of a robot arm that is provided with an end effector that performs a process on a target object, and an imager, and that moves the end effector and the imager, wherein
the control apparatus comprises a processor, and
the processor:
performs a calibration of the end effector, on the basis of image data obtained by that the imager provided on the robot arm images at least a part of the end effector;
calculates a position and an attitude of the target object, on the basis of image data obtained by the imager images the target object during such a relative movement of the robot arm and the target object that the imager is brought close to the target object; and
outputs information about the calculated position and attitude of the target object.

29. The control apparatus according to claim 28, wherein
the at least a part of the end effector is a tip of the end effector, and
the processor performs the calibration on the basis of image data obtained by that the imager provided on the robot arm images the tip of the end effector.

30. The control apparatus according to claim 28 or 29, wherein
the at least a part of the end effector is a part including a marker provided on the end effector, and
the processor performs the calibration on the basis of image data obtained by that the imager provided on the robot arm images the marker provided on the end effector.

31. The control apparatus according to any one of claims 28 to 30, wherein the processor performs the calibration when a change in at least one of a position and an attitude of the end effector is detected on the basis of image data obtained by that the imager images at least a part of the end effector.

32. The control apparatus according to any one of claims 28 to 31, wherein the processor performs the calibration again when a change in at least one of a position and an attitude of the end effector is detected on the basis of image data obtained by the imager images at least a part of the end effector on which the calibration is performed.

33. The control apparatus according to any one of claims 28 to 32, wherein
the imager includes an imaging apparatus and a stereo camera, and
the processor
outputs, as the information about the position and attitude of the target object to be outputted, information calculated by adding a displacement of the target object between different time points, to the position and the attitude of the second object calculated on the basis of image data obtained by that the imaging apparatus images the target object and shape data that are generated from image data obtained by imaging the target obj ect with the stereo camera and that indicate a three-dimensional shape of the target object, during the relative movement, wherein the displacement is calculated on the basis of two image data obtained by that the imaging apparatus images the target object at the different time points during the relative movement, and two shape data that are generated from image data obtained by that the stereo camera images the target object at the different time points and that indicate the three-dimensional shape of the target object at each of the different time points.

34. The control apparatus according to claim 33, wherein the processor performs the calibration of the end effector on the basis of image data obtained by that the imaging apparatus images at least a part of the end effector.

35. The control apparatus according to claim 33 or 34, wherein the processor performs the calibration of the end effector, on the basis of shape data that are generated from image data obtained by that the stereo camera images at least a part of the end effector and that indicate a three-dimensional shape of at least a part of the end effector.

36. The control apparatus according to any one of claims 28 to 35, wherein the control apparatus generates a control signal for controlling the driver of the robot arm on the basis of the information outputted from processor, and outputs the generated control signal to a robot control unit that controls the driver of the robot arm.

37. The control apparatus according to claim 36, wherein the control apparatus generates the control signal on the basis of a result of the calibration of the end effector and the information outputted from the processor.

38. The control apparatus according to claim 36 or 37, wherein
In the calibration of the end effector, a position and an attitude of the end effector are calculated on the basis of image data obtained by that the imager provided on the robot arm images at least a part of the end effector, and
the control apparatus generates the control signal on the basis of information about the position and the attitude of the end effector calculated by the calibration and the information outputted from the processor.

39. The control apparatus according to claim 36 or 37, wherein
in the calibration of the end effector, a correlation between a coordinate system of the imager and a coordinate system of the end effector is obtained on the basis of image data obtained by that the imager provided on the robot arm images at least a part of the end effector, and
the control apparatus generates the control signal on the basis of the correlation obtained by the calibration and the information outputted from the processor.

40. The control apparatus according to any one of claims 28 to 39, wherein the end effector is at least one of a light irradiation apparatus that is configured to apply a processing light, a discharge apparatus that is configured to discharge a solder, and a holding apparatus that is configured to hold the target object.

41. The control apparatus according to any one of claims 28 to 40, wherein the stereo camera includes two imaging apparatuses that are different from the imaging apparatus.
